# EUROPÄISCHE PATENTSCHRIFT

(11) **EP 0 552 629 B1**
(45) Veröffentlichungstag und Bekanntmachung des Hinweises auf die Patenterteilung: **26.02.1997**
(21) Anmeldenummer: 93100268.7
(22) Anmeldetag: 11.01.1993
(51) Int. Cl.: C09B 62/503, C09B 62/20, C09B 62/002

(54) **Reaktivfarbstoffe**
Reactive dyes
Colorants réactifs

(30) Priorität: 22.01.1992 DE 4201609
(43) Veröffentlichungstag der Anmeldung: 28.07.1993
(73) Patentinhaber: BAYER AG, 51368 Leverkusen (DE)
(72) Erfinder: Bootz, Konrad, Dr., W-5802 Wetter 4 (DE); Herd, Karl-Josef, Dr., W-5068 Odenthal-Holz (DE)

(56) Entgegenhaltungen:
- EP-A- 0 443 165
- DE-A- 3 800 261
- DE-A- 4 005 121
- US-A- 3 718 641

## Beschreibung

Die Erfindung betrifft neue Reaktivfarbstoffe, ihre Herstellung und Verwendung.

Reaktivfarbstoffe sind bereits aus zahlreichen Veröffentlichungen bekannt, siehe DE-A 30 19 960 (US-A-4 515 598), DE-A- 19 22 940 (US-A-3 718 641), EP-A-167 490, EP-A-133 843 (US-A-4 746 732, 4 935 501, 4 996 304) und EP-A-40 806 (US-A-4 649 193).

Der vorliegenden Erfindung liegt die Aufgabe zugrunde, verbesserte Reaktivfarbstoffe zur Verfügung zu stellen.

Die Erfindung betrifft Reaktivfarbstoffe der Formel 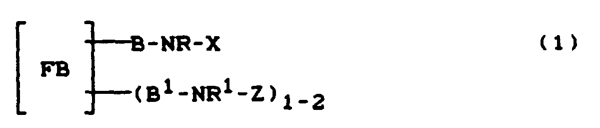 insbesondere Farbstoffe der Formel 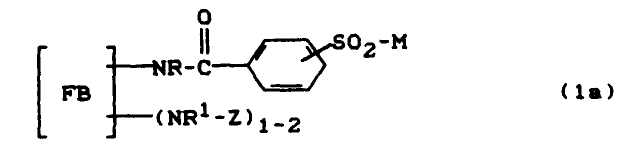 mit 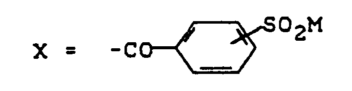
- FB =: der Rest eines Farbstoffes insbesondere der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe,
- B bzw. B¹ =: direkte Bindung oder Brückenglied an ein Ring C-Atom eines aromatisch-carbocyclischen oder an ein Ring-C- oder -N-Atom eines aromatisch-heterocyclischen Ringes in FB,
- M =: CH=CH₂ oder CH₂CH₂-V, worin
- V =: OH oder alkalisch eliminierbarer Rest, z.B. OSO₃H, SSO₃H, OCOCH₃, OPO₃H₂, OSO₂CH₃, SCN, NHSO₂CH₃, Cl, Br, F, OCOC₆H₅, OSO₂-C₆H₄, [N(CH₃)₃]⁺Anion⁻ oder gegebenenfalls substituierter Pyridinium-Rest (Substituenten sind insbesondere gegebenenfalls substituiertes C₁-C₄-Alkyl, COOH, SO₃H, CN, Carbonamid),
- Z =: 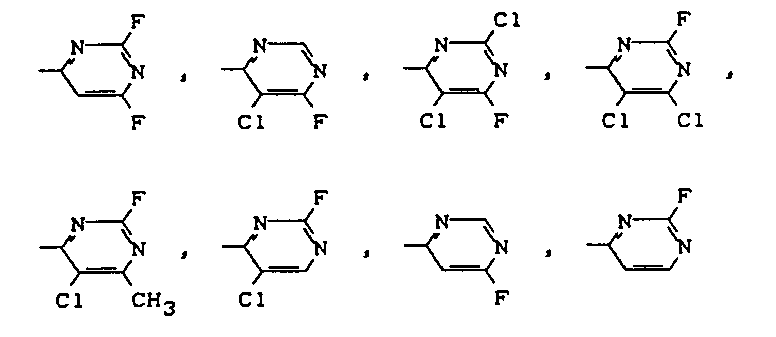 oder 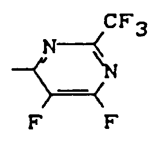
- R, R¹ =: unabhängig voneinander H, gegebenenfalls substituiertes C₁-C₆-Alkyl (bevorzugte Substituenten: Halogen, OH, COOH, SO₃H, OSO₃H),

Geeignete Brückenglieder B und B¹, die gleich oder verschieden sein können, sind beispielsweise 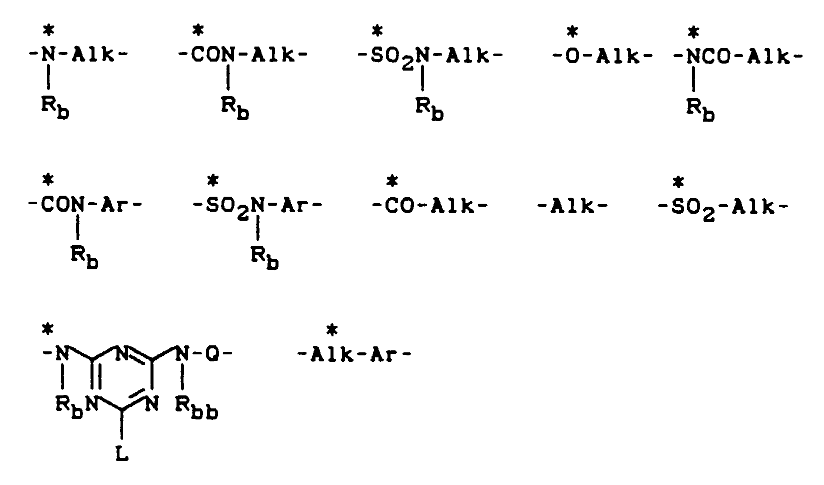 wobei der Stern die Verknüpfungsstelle mit FB markiert,
- R_{b} und R_{bb}: unabhängig voneinander H, C₁-C₆-Alkyl, welches substituiert sein kann, insbesondere mit Halogen, OH, COOH, SO₃H, OSO₃H,
- Alk: gegebenenfalls durch Heteroatome oder Heteroatome wie NR, O oder S enthaltende Gruppierungen unterbrochenes, geradkettiges oder verzweigtes C₁-C₆-Alkylen,
- Ar: gegebenenfalls substituiertes Phenylen oder Naphthylen oder Rest eines Diphenyls oder Stilbens,
- Q: Alk oder Ar oder 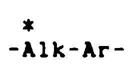 wobei Alk oder Ar weitere Substituenten, beispielsweise F, Cl, Br, C₁-C₄-Alkyl, C₁-C₄-Alkoxy, Carboxy oder Sulfo enthalten können und
- L: F, Cl, Br, gegebenenfalls substituiertes Amino, OH, C₁-C₄-Alkoxy, gegebenenfalls substituiertes Phenoxy, C₁-C₄-Alkylthio bedeutet.

Geeignete faserreaktive Reste Z, d.h. solche die mit den OH- oder NH-Gruppen der Faser unter Färbebedingungen unter Ausbildung kovalenter Bindungen reagieren, sind Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-vinyl- oder -5-sulfo- oder -5-mono-, -di- oder -trichlormethyl- oder -5-carbalkoxypyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl- sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluordichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 5-Chlor-6-fluor-4-pyrimidinyl-, 5-Chlor-6-fluor-2-methyl-4-pyrimidinyl-, 5 ,6-Difluor-2-trifluormethyl-4-pyrimidinyl-, 5-Chlor-6-Fluor-2-dichlorfluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormelhylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-β-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis(methylsulfonyl)-pyrimidin-5-sulfonyl-, 2-Methylsulfonyl-4-chlor-6-methylpyrimidin-5-sulfonyl- oder -carbonyl-.

Bevorzugt sind Reaktivfarbstoffe der Formel (1), worin FB der Rest eines Mono- oder Disazofarbstoffes oder eines Metallkomplexazofarbstoffes ist.

In diesem Falle sind die Reste -B-N(R)-X und -B¹-N(R¹)-Z an verschiedene oder gleiche Reste von Ausgangskomponenten, d.h. Diazo- und Kupplungskomponenten (D und K), gebunden. Vorzugsweise sind die Reste -B-N(R)-X und -B'-N(R')-Z an je eine Komponente, Diazokomponente oder Kupplungskomponente, gebunden. Die Reaktivfarbstoffe haben dann z.B. die Formel 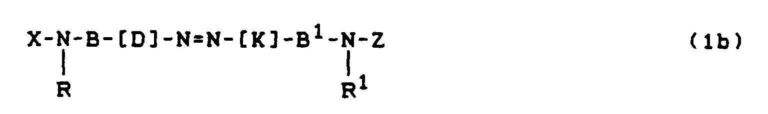 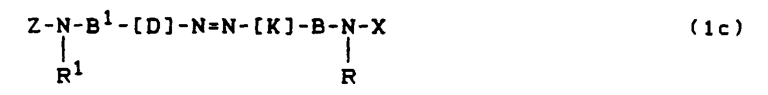 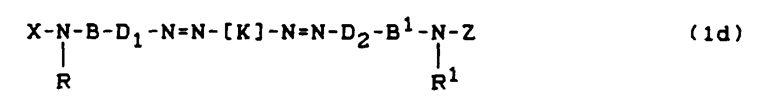 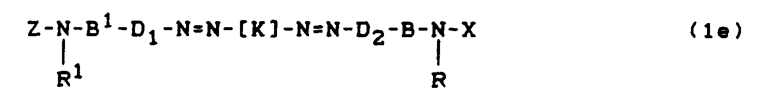 worin -K- in Formeln (1d) und (1e) für den Rest einer zweifach kuppelnden Kupplungskomponente steht.

Wenn beide Reste -B-N(R)-X und -B¹-N(R¹)-Z an den gleichen Rest einer Ausgangskomponente D oder K gebunden sind, so ist dies insbesondere der Rest der Kupplungskomponente K. Die Reaktivfarbstoffe entsprechen dann der Formel 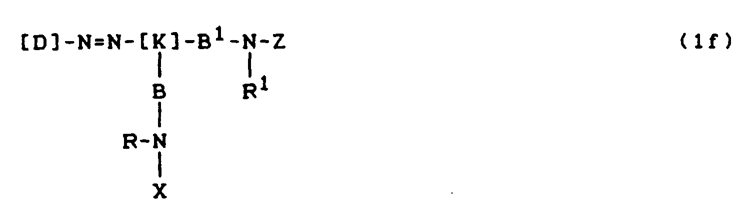 worin
- D, D₁, D₂ =: Rest einer Diazokomponente der Benzol- oder Naphthalinreihe,
- K =: Rest einer Kupplungskomponente der Benzol-, Naphthalin-, Acetessigsäurearylid- oder heterocyclischen Reihe; in der heterocyclischen Reihe vorzugsweise ein Pyrazolon- oder Pyridon-Rest.

In der Reihe der Amino-hydroxynaphthalin-disulfonsäuren werden 1-Amino-8-hydroxynaphthalin-2,4-disulfonsäure, 2-Hydroxy-3-aminonaphthalin-5,7-disulfonsäure, 2-Amino-5-hydroxynaphthalin-1,7-disulfonsäure, 2-Amino-8-hydroxynaphthalin-3,6-disulfonsäure und 1-Amino-8-hydroxynaphthalin-3,6-disulfonsäure bevorzugt.

Die Reste D, D₁, D₂ und K können dabei mit weiteren Azogruppen oder mit azogruppenhaltigen Resten substituiert sein. X, Z, B, B¹, R und R¹ haben die oben angegebenen Bedeutungen.

Beispiele für D, D₁ und D₂ sind vorzugsweise gegebenenfalls durch SO₃H, Chlor, C₁-C₄-Alkoxy, C₁-C₄-Alkyl, Carbalkoxy oder Sulfonamido substituiertes Phenyl bzw. Phenylen, gegebenenfalls durch SO₃H, Chlor, C₁-C₄-Alkoxy oder C₁-C₄-Alkyl substituiertes Naphthyl bzw. Naphthylen, gegebenenfalls durch SO₃H substituiertes 4-(Phenylazo)phenyl und gegebenenfalls durch SO₃H substituiertes Biphenylen.

K steht beispielsweise für den Rest einer Kupplungskomponente aus der Hydroxybenzol-, Hydroxynaphthalin-, Aminobenzol-, Aminonaphthalin-, Aminohydroxynaphthalinreihe, für einen 5-Hydroxy-3-methyl (bzw. carboxy)-pyrazolon-, einen 6-Hydroxy-2-pyridon- oder einen gegebenenfalls C₁-C₄-Alkyl- bzw. C₁-C₄-Alkoxy-ringsubstituierten Acetessigsäurearylid-Rest.

K kann die üblichen Substituenten, insbesondere Sulfonsäuregruppen aufweisen.

Ferner sind in Betracht zu ziehen Reaktivfarbstoffe der Formel (1b) bis (1f), worin die Reste D, D₁, D₂ und K noch einen weiteren Reaktivrest enthalten können. Somit sind auch tri-und tetrafunktionelle faserreaktive Farbstoffe umfaßt. Die zusätzlichen, in D oder K eingeschlossenen Reaktivreste können, wie Z und X, über Aminogruppen, oder in anderer Weise, z.B. durch eine direkte Bindung an D bzw. K gebunden sein. Die obigen Erläuterungen gelten sinngemäß auch für die Metallkomplexe der Mono-und Disazofarbstoffe (1b - 1f).

Im besonderen bevorzugt sind erfindungsgemäße Reaktivfarbstoffe der Formel (1) bzw. (1a) - (1f), worin M für CH= CH₂ oder CH₂CH₂Cl steht.

bevorzugt sind Reaktivfarbstoffe der Formel 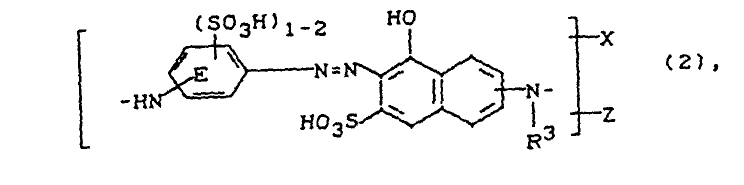 und 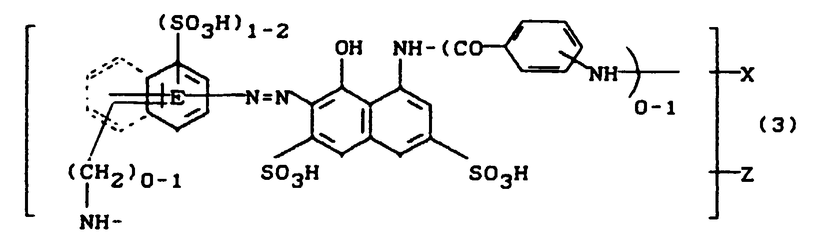 worin X und Z die oben angegebene Bedeutung haben, R³ Wasserstoff, Methyl oder Ethyl ist, und der Benzolring E gegebenenfalls weitersubstituiert ist. Substituenten für den Ring E sind z.B.: CH₃, C₂H₅, CH₃O, C₂H₅O, Hal oder CO₂H.

Bevorzugt sind insbesondere Reaktivfarbstoffe der Formel (2), worin der Benzolring E nicht weitersubstituiert ist, sowie Reaktivfarbstoffe der Formel (3), worin der Benzolring E nicht weitersubstituiert ist.

Bevorzugt sind ferner Reaktivfarbstoffe der Formel

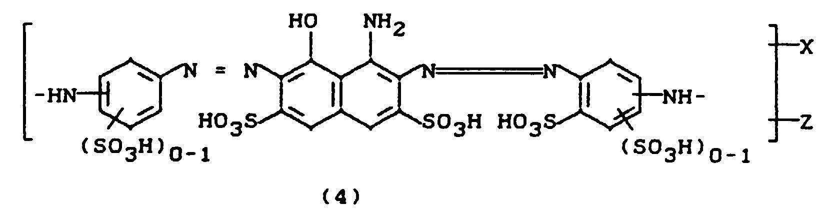

Außer den weiter oben beschriebenen Reaktivfarbstoffen der Formeln (2), (3) und (4) sind als weitere wertvolle Vertreter die Reaktivfarbstoffe der folgenden Formeln zu nennen: 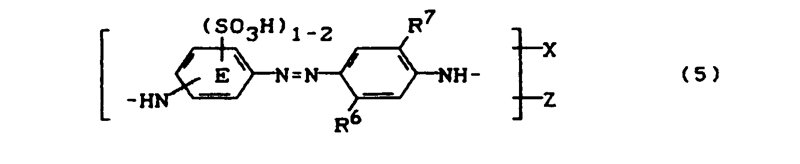 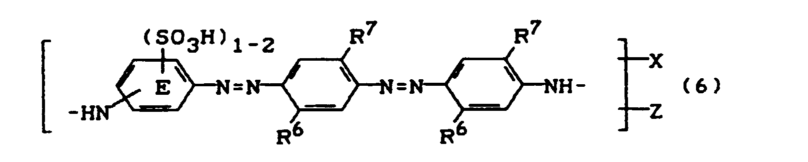 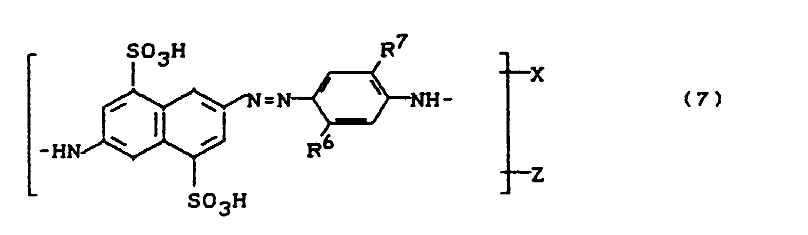 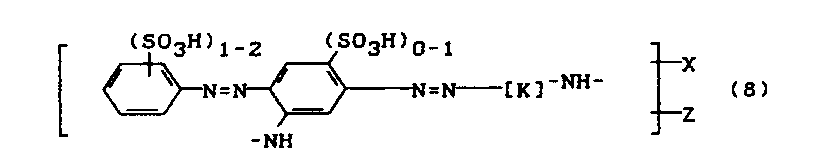 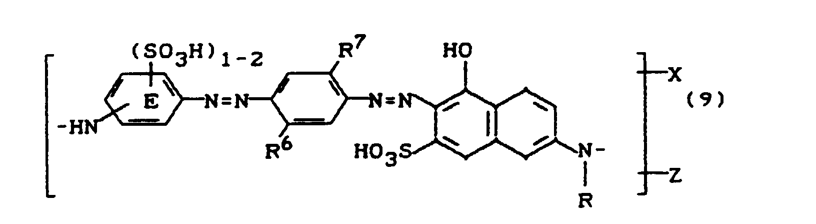 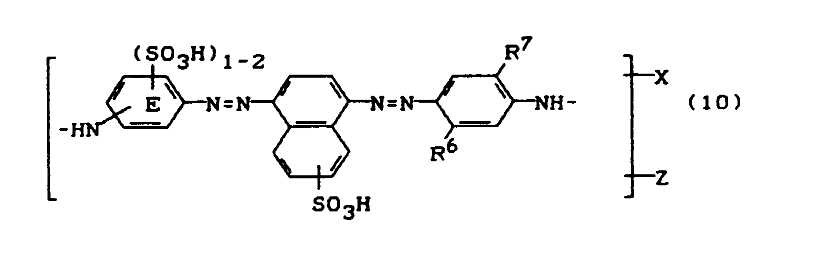 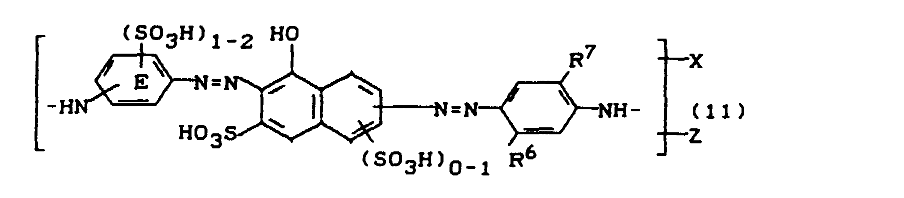 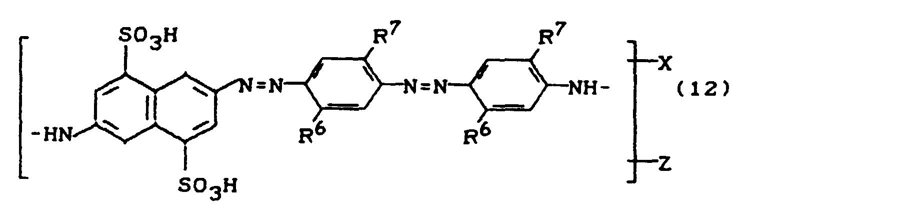 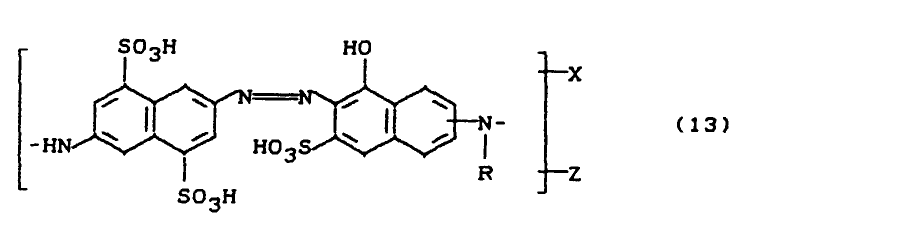 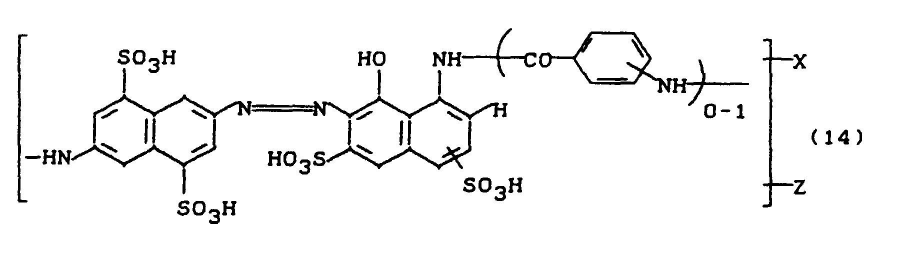 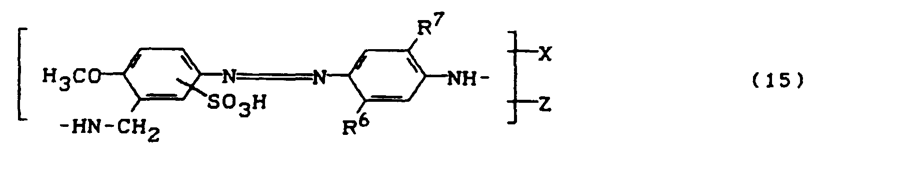 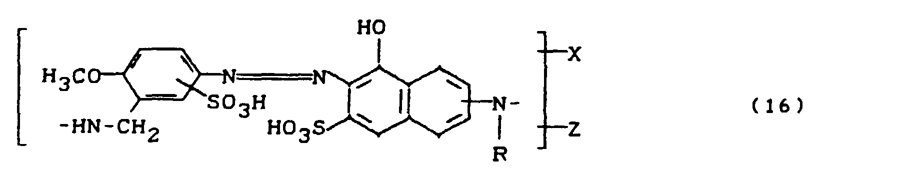 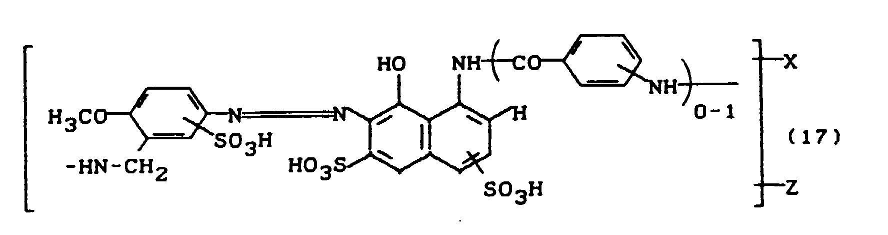 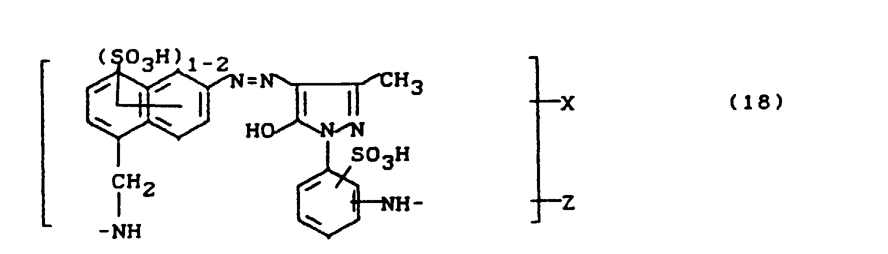 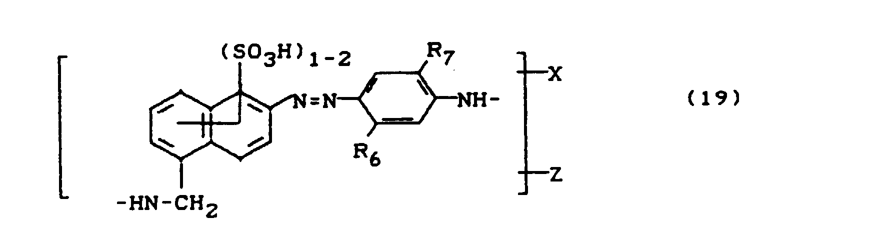 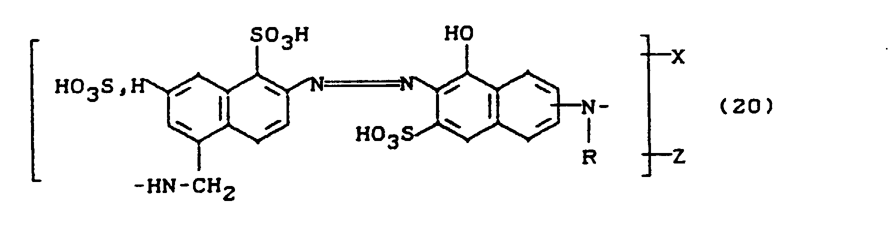 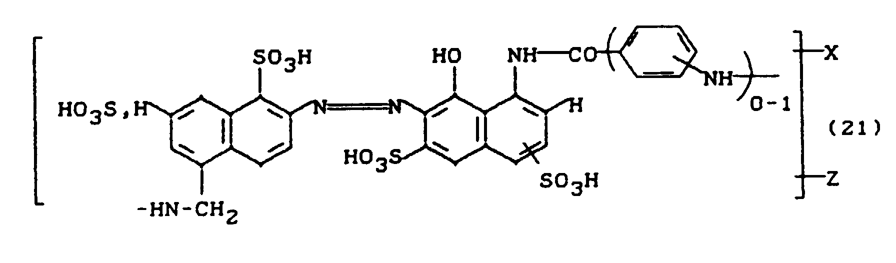 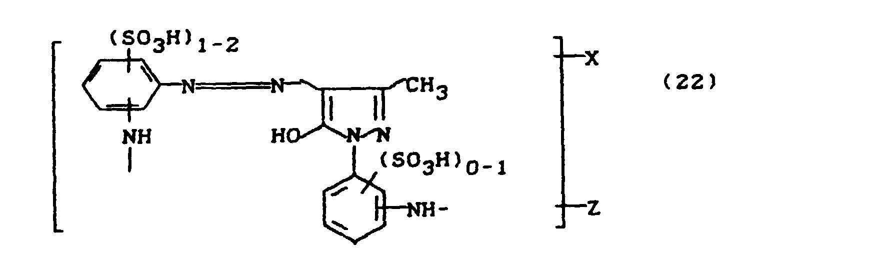 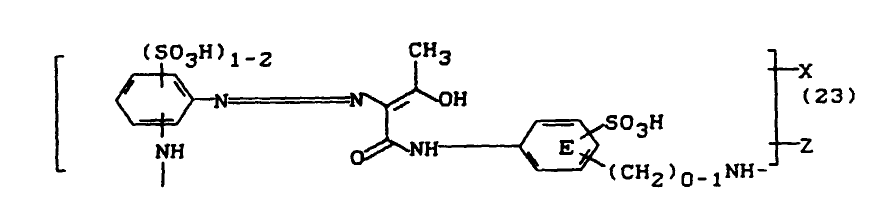 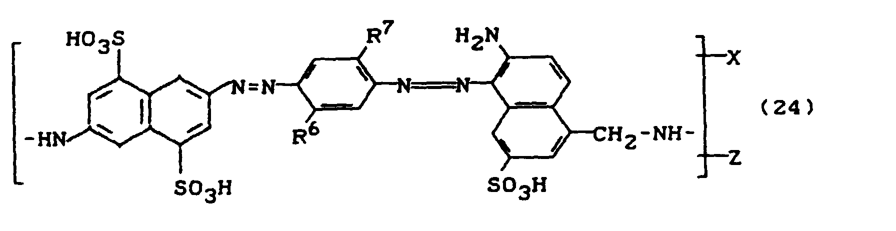 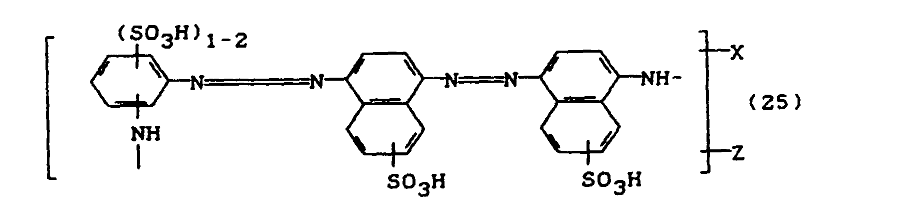 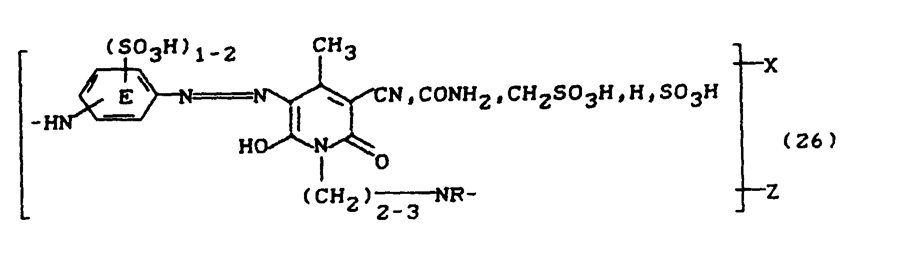 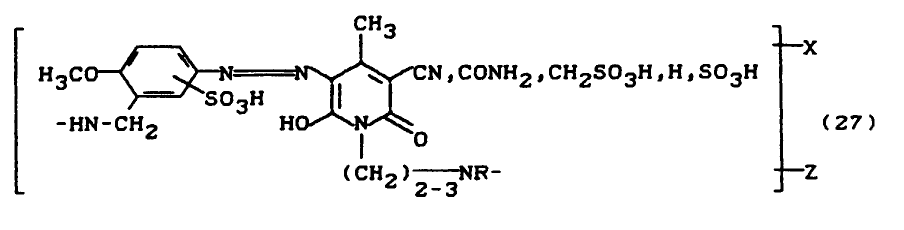 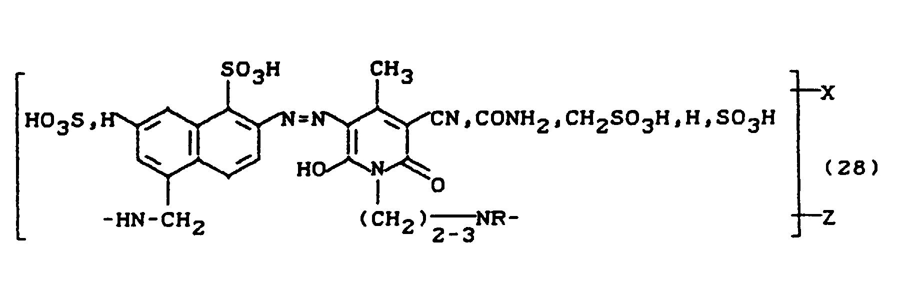 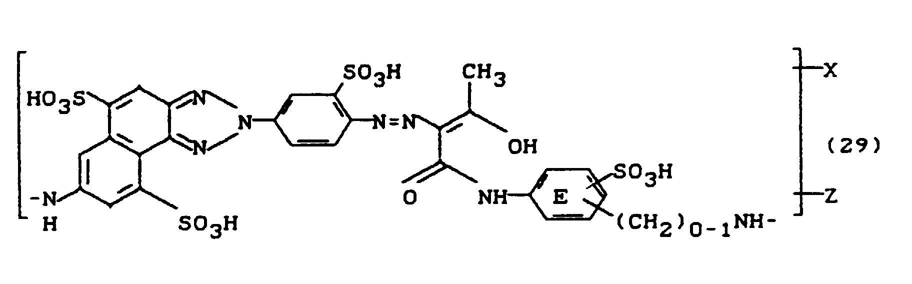 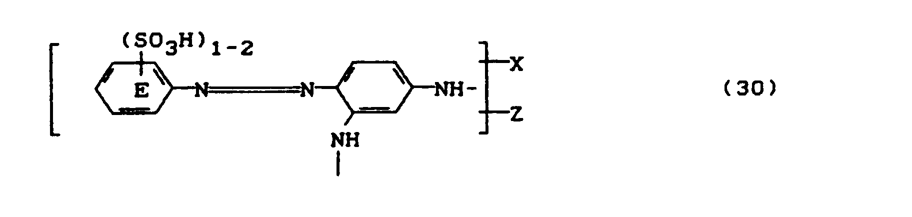 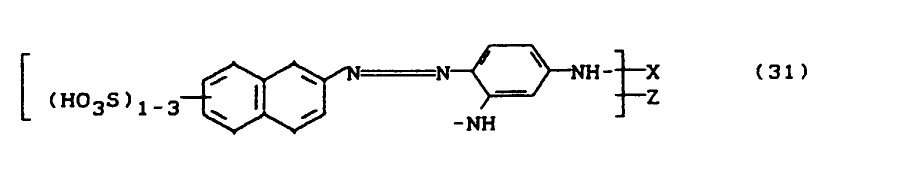 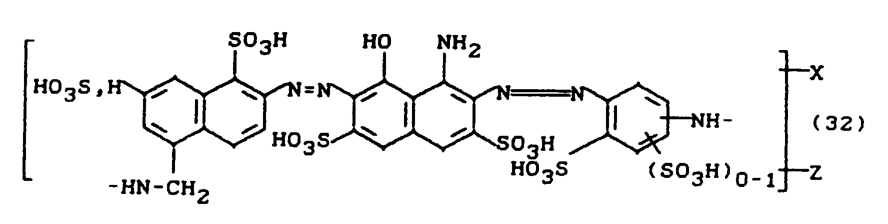 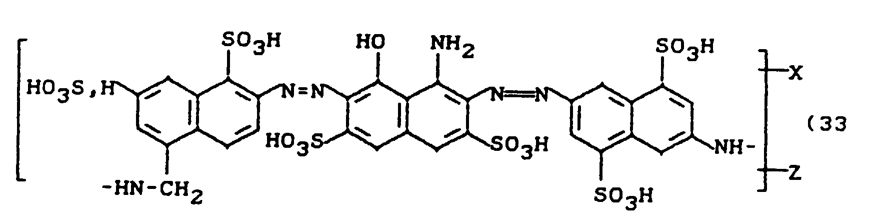 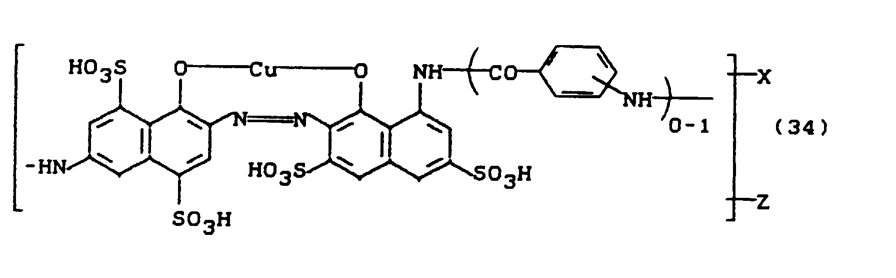 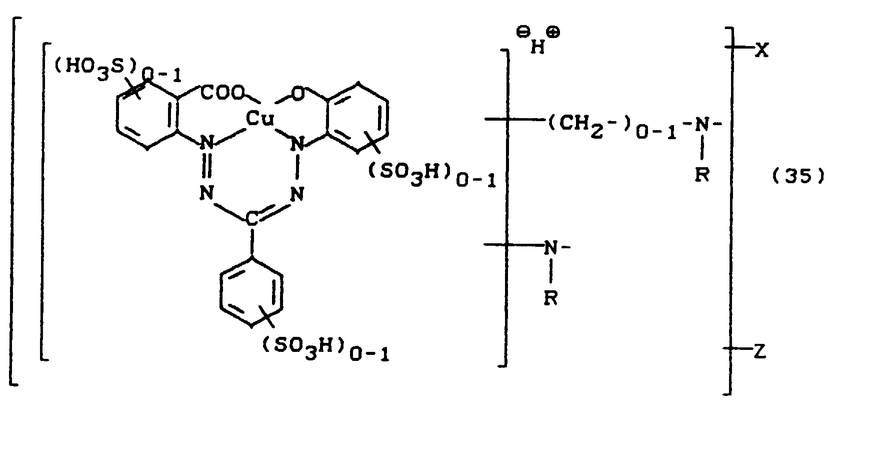 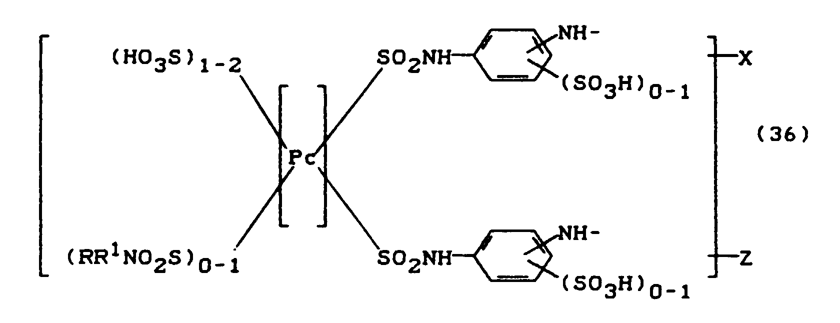 worin Pc für einen Cu- oder Ni-Phthalocyaninrest steht und die Gesamtzahl der Substituenten am Pc-Gerüst maximal 4 beträgt; 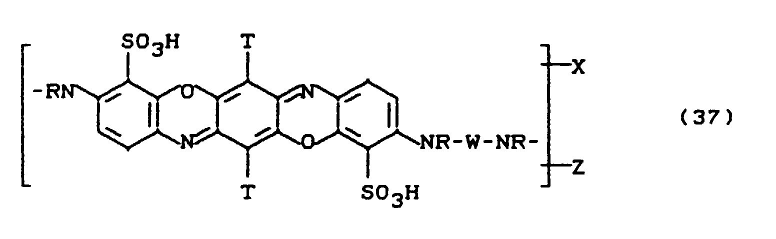 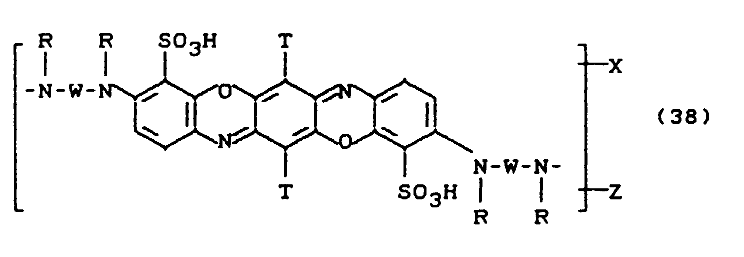 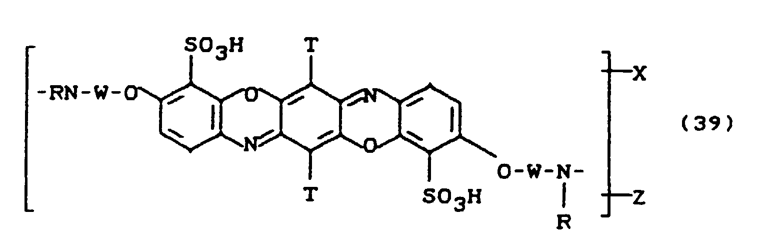 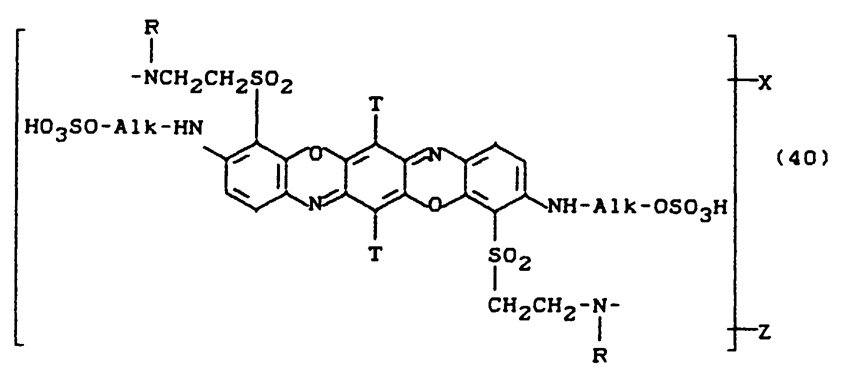 wobei T = Cl, Br, OCH₃ und Z, K, E, R, X und Alk die oben angegebenen Bedeutungen haben,
- R⁶ =: H, C₁-C₄-Alkyl, C₁-C₄-Alkoxy, Acylamino, insbesondere C₁-C₄-Alkylcarbonylamino, C₁-C₄-Alkylsulfonylamino, Aminocarbonylamino, gegebenenfalls substituiertes Phenylcarbonylamino, Cl, Br
- R⁷ =: H, C₁-C₄-Alkyl, C₁-C₄-Alkoxy, OH, SO₃H.
- W =: aliphatisches Brückenglied, insbesondere C₂-C₄-Alkylen.

In den bevorzugten Reaktivfarbstoffen der Formeln (9), (10), (11), (26) und (30) sind die Benzolringe E vorzugsweise ebenfalls nicht weitersubstituiert; als Diazokomponenten werden in diesem Falle vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet.

In einer bevorzugten Ausführungsform bedeutet
X = 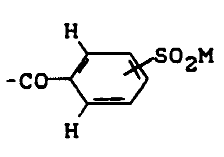 mit M = CH=CH₂ oder CH₂CH₂Cl.

Bevorzugt sind vor allem Reaktivfarbstoffe der Formeln (2) bis (40), worin Z ein fluorhaltiger Pyrimidylrest ist, und der zweite Reaktivrest X für den (2-Chlorethylsulfonyl)-benzoyl-Rest steht, wie z.B. Farbstoffe der Formel (41)

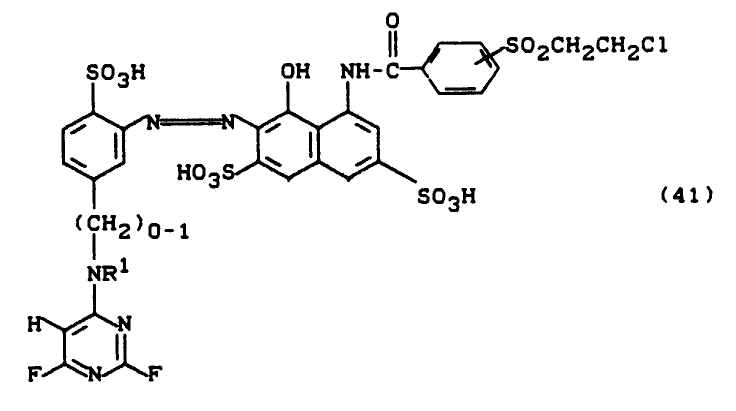

Ein Verfahren zur Herstellung der Farbstoffe (1) besteht darin, daß man Farbbasen der Formel (III) 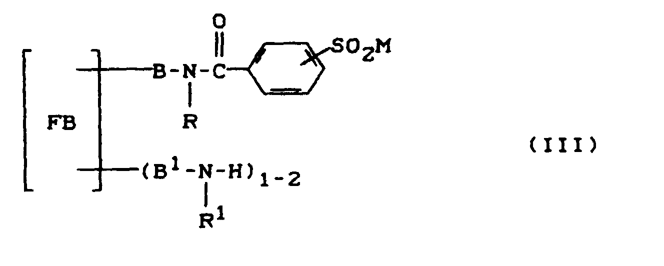 bzw. die entsprechenden Farbstoffvorprodukte mit einer Reaktivkomponente

Z - Hal (IV)

worin
Hal = Cl, Br oder F, umsetzt,
oder Farbbasen der Formel (V) 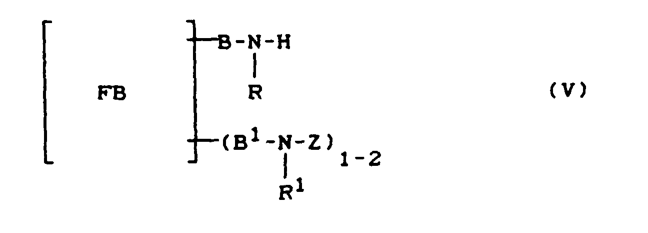 bzw. die entsprechenden Farbstoffvorprodukte mit einer Reaktivkomponente 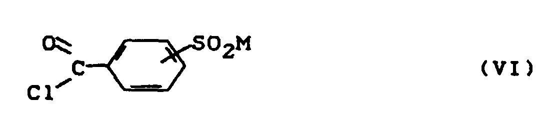 umsetzt und im Falle der Verwendung von Vorprodukten diese anschließend in die gewünschten Endfarbstoffe überführt und gegebenenfalls weitere Umwandlungsreaktionen anschließt.

Bei der Herstellung der bevorzugten Azofarbstoffe müssen die Diazokomponenten und die Kupplungskomponenten zusammen zwei Aminogruppen -N(R)H und -N(R')H, und gegebenenfalls weitere acylierbare Aminogruppen enthalten. Gegebenenfalls verwendet man entsprechende Acetylamino- oder Nitroverbindungen, worin die Acetylamino- bzw. Nitrogruppe vor der Kondensation mit einem Halogentriazin, Halogenpyrimidin oder dergleichen durch Verseifen bzw. Reduzieren in die NH₂-Gruppe übergeführt wird. Die Einführung der Reaktivreste X und Z erfolgt durch Kondensation von Farbstoffen oder Farbstoffvorprodukten, welche acylierbare Aminogruppen enthalten, mit faserreaktiven halogenierten Acylierungsmitteln. Bei der Herstellung der Endfarbstoffe aus Vorprodukten handelt es sich meistens um Kupplungen, die zu Azofarbstoffen führen.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse eines Vinylsulfon- oder Halogenpyrimidinrestes etc. eintritt, muß ein Zwischenprodukt, welches Acetylaminogruppen enthält, zwecks Abspaltung der Acetylgruppen verseift werden, bevor mit einem (2-Chlorethylsulfonyl)-benzoylchlorid oder Fluorpyrimidin etc. kondensiert wird. Die wichtigsten Verfahrensvarianten sind in den Ausführungsbeispielen dargestellt. Geeignete Ausgangsverbindungen für die Herstellung von Mono- oder Polyazofarbstoffen (1) sind beispielsweise:

### Diazokomponenten (D, D₁ und D₂)

1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-dimethoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminodiphenyloxid, 4,4'-Diaminodiphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethylnaphthalin-1-sulfonsäure, 2-Amino-5-aminomethylnaphthalin-1,7-disulfonsäure, 1-Amino-4-methoxy-5-aminomethylbenzol-6-sulfonsäure.

Wenn als Diazokomponente statt eines Diamins eine Aminoacetylamino-Verbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der obengenannten Diazokomponenten in Frage, z.B. 1-Acetylamino-3-aminobenzol-4-sulfonsäure oder 1-Acetylamino-4-aminobenzol-3-sulfonsäure.

Falls die beiden Reste -B-N(R)-X und -B¹-N(R¹)-Z in Formel (1) an die gleiche Komponente, z.B. die Kupplungskomponente gebunden sind, wie dies weiter vorn beschrieben ist, können als Diazokomponenten auch solche verwendet werden, die neben der zu diazotierenden Aminogruppe keine acylierbare Aminogruppe enthalten, wie z.B. Aminobenzol, 1-Amino-2-, -3- oder -4-methylbenzol, 1-Amino-2-, -3- oder -4-methoxybenzol, 1-Amino-2-, -3-oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3- oder -4-carbonsäure, 2-Aminodiphenylether, 1-Aminobenzol-2-, -3- oder -4-sulfonsäureamid, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7-oder -8-sulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-, trisulfonsäure, 2-Aminonaphthalin-1,5,7-, -3,6,8- oder -4,6,8-trisulfonsäure, 4-Aminoazobenzol-3,4'-disulfonsäure, 3-Methoxy-4-amino-6-methyl-azobenzol-2',4'-disulfonsäure oder 3-Methoxy-4-amino-6-methylazobenzol-2',5'-disulfonsäure.

### Kupplungskomponenten (K)

1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynapahthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. 2-Ethylamino-8-hydroxynaphthalin-6-sulfonsäure, 2-(N-Acetyl-N-methylamino)-8-hydroxynaphthalin-6-sulfonsäure, 2Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 1-Amino-8-hydroxynaphthalin-4-sulfonsäure, 2,4,6-Triamino-3-cyanpyridin, 1-β-Aminoethyl-3-cyan-4-methyl-6-hydroxypyridon-(2), 1-γ-Aminopropyl-3-sulfomethyl-4-methyl-6-hydroxypyridon-(2), 1,3-Diaminobenzol.

Die Diazotierung der Diazokomponenten bzw. der eine diazotierbare Aminogruppe enthaltenden Zwischenprodukte erfolgt in der Regel durch Einwirkung salpetriger Säure in wäßrig-mineralsaurer Lösung bei tiefer Temperatur. Die Kupplung auf die Kupplungskomponente erfolgt bei stark sauren, neutralen bis schwach alkalischen pH-Werten.

Die Kondensation der Reaktivkomponenten mit den Diazokomponenten und den Kupplungskomponenten und mit den Aminen bzw. mit acylierbaren Monoazo- oder Disazo-Zwischenprodukten bzw. mit den aminogruppenhaltigen Farbstoffen erfolgen vorzugsweise in wäßriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wäßriger Alkalihydroxide, -carbonat oder -bicarbonate neutralisiert.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die Farbstoffe können auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren, sowie zum Bedrucken von Baumwolle und Zellwolle.

Man erhält bei gutem Aufbauvermögen und hohen Fixierausbeuten Färbungen mit guten Allgemeinechtheiten, insbesondere Naßechtheiten.

### Färbevorschriften

Die in den folgenden Beispielen angegebenen Färbungen werden unter folgenden Bedingungen durchgeführt:

### Färbevorschrift 1

2 Teile des Farbstoffes werden in 100 ml Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 50°C, wobei nach 30 Minuten 40 Teile kalzinierte Soda und nochmals 60 Teile Natriumchlorid zugegeben werden. Man hält die Temperatur 30 Minuten auf 50°C, spült und seift dann die Färbung während 15 Minuten in einer 0,3 %igen kochenden Lösung eines ionenfreien Waschmittels, spült und trocknet.

### Färbevorschrift 2

4 Teile des Reaktivfarbstoffes werden in 50 Teilen Wasser gelöst. Dazu gibt man 50 Teile einer Lösung, die pro Liter 5 g Natriumhydroxid und 10 g kalziniertes Soda enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 3 bis 12 h bei Raumtemperatur gelagert. Danach wird die gefärbte Ware gespült, während einer Viertelstunde mit einem nichtionogenen Waschmittel kochend geseift, nochmals gespült und getrocknet.

### Beispiel 1

a) 0,2 Mol 1-Amino-8-hydroxynaphthalin-3,6-disulfonsäure werden in 450 ml Wasser mit Natronlauge bei pH 8-9 gelöst und mit 0,22 Mol 2,4,6-Trifluorpyrimidin versetzt. Die Kondensation erfolgt bei 35-40°C, wobei der pH mit Sodalösung gehalten wird.
b) 0,2 Mol 3-[4'-(2-Chlorethylsulfonyl)-benzoylamino]-anilin-6-sulfonsäure (aus 2,4-Diaminobenzolsulfonsäure und 4-(2-Chlorethylsulfonyl)-benzoylchlorid hergestellt) werden in Wasser suspendiert und mit 65 ml 30 %iger Salzsäure und 300 g Eis versetzt. Danach werden 46 ml 30 %ige Natriumnitritlösung zugegeben und 1 Stunde bei 0°C gerührt. Überschüssiges Natriumnitrit wird mit Amidosulfonsäure vernichtet und die so erhaltene Diazotierung zur Lösung der Kupplungskomponente a) gegeben. Mit Sodalösung wird ein pH von 6-7 eingestellt.
   Nach beendeter Kupplung wird der Farbstoff ausgesalzen, isoliert, getrocknet und gemahlen. Der so erhaltene Farbstoff der Formel 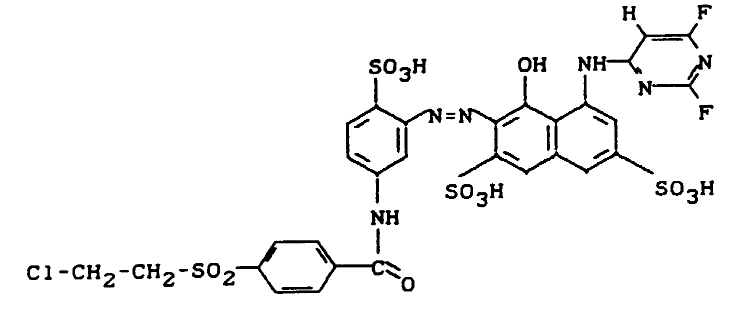 färbt Baumwolle in roten Tönen.

### Beispiel 2

0,2 Mol 8-(4'-amino-benzoylamino)-1-naphthol-3,6-disulfonsäure werden in 800 ml Wasser mit Sodalösung (20 g/100 ml) bei einem pH-Wert von 7 gelöst. Mit 10 %iger HCl-Lösung wird pH 4,5 eingestellt. Man gibt 0,22 Mol 2,4,6-Trifluorpyrimidin zu und heizt auf 30°C auf. Mit Sodalösung (20 g/100 ml) wird ein pH-Wert von 4,5-6 gehalten. Die Umsetzung ist nach 4 Stunden beendet.

Man gibt nun 0,2 Mol des Diazoniumsalzes aus Beispiel 1 zu und hält gleichzeitig durch Zutropfen von Sodalösung (20 g/100 ml) einen pH-Wert von 7,5-8. Nach beendeter Kupplung salzt man mit NaCl aus, isoliert und trocknet. Der Farbstoff der Formel 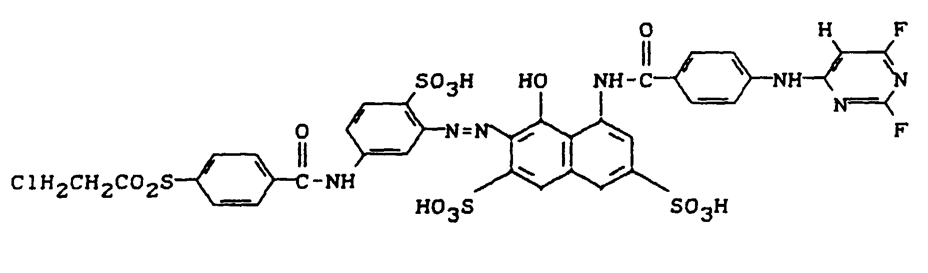 färbt Baumwolle in roten Tönen.

Die Beispiele 3 - 37 der Formel

X⁅D⁆N=N⁅K⁆Z

lassen sich wie in Beispiel 1 bez. 2 beschrieben herstellen, wenn die entsprechenden Zwischenprodukte eingesetzt werden. Sie färben Baumwolle in den angegebenen Farbtönen.

X hat die in Formel (1) angegebene Bedeutung, bzw.
- X¹ =: 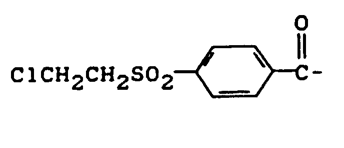
- X² =: 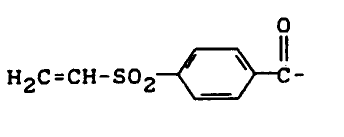
- X³ =: 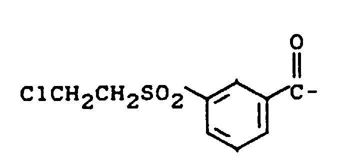
- X⁴ =:

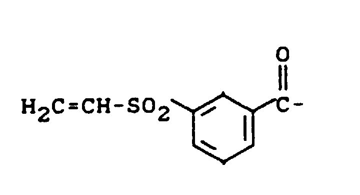

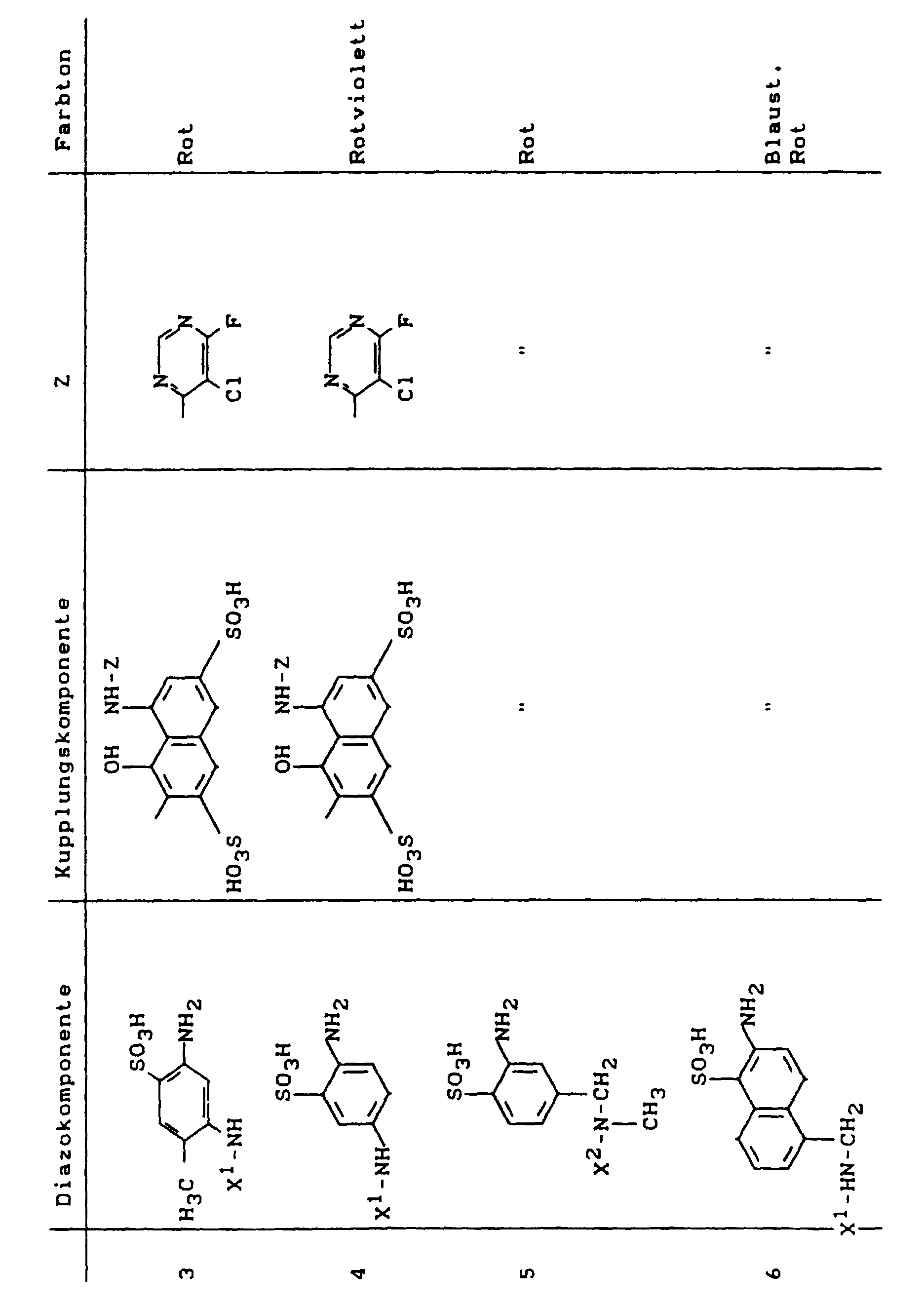

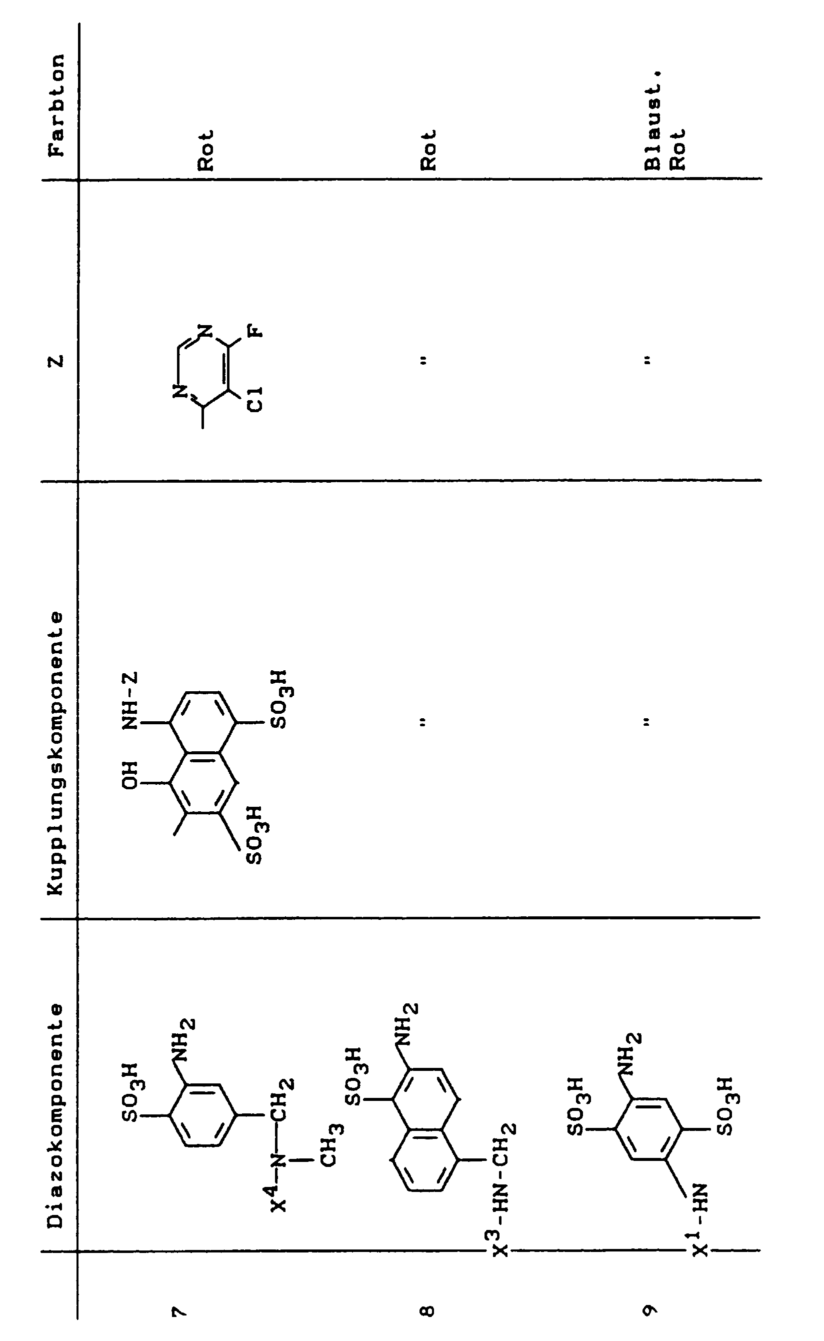

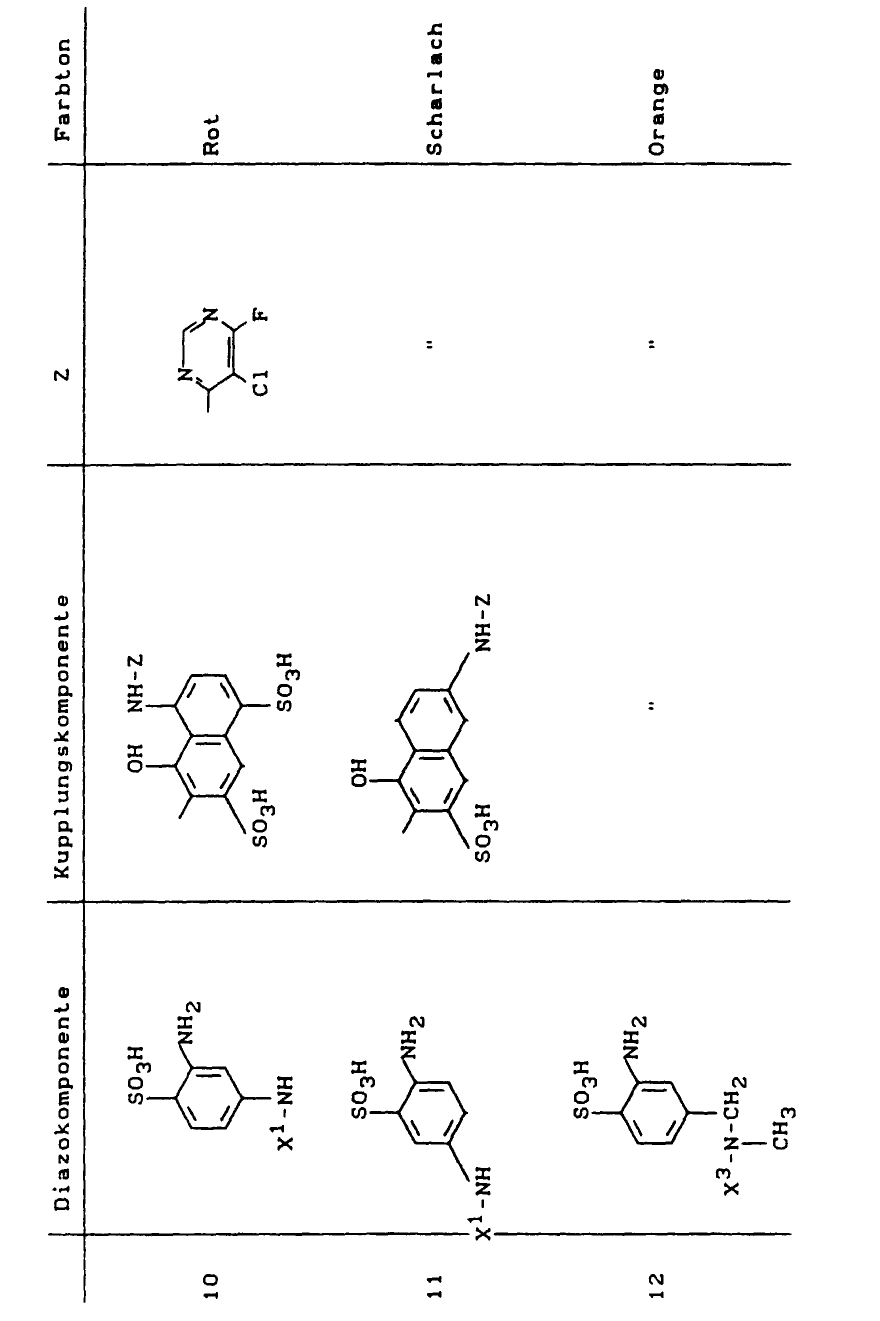

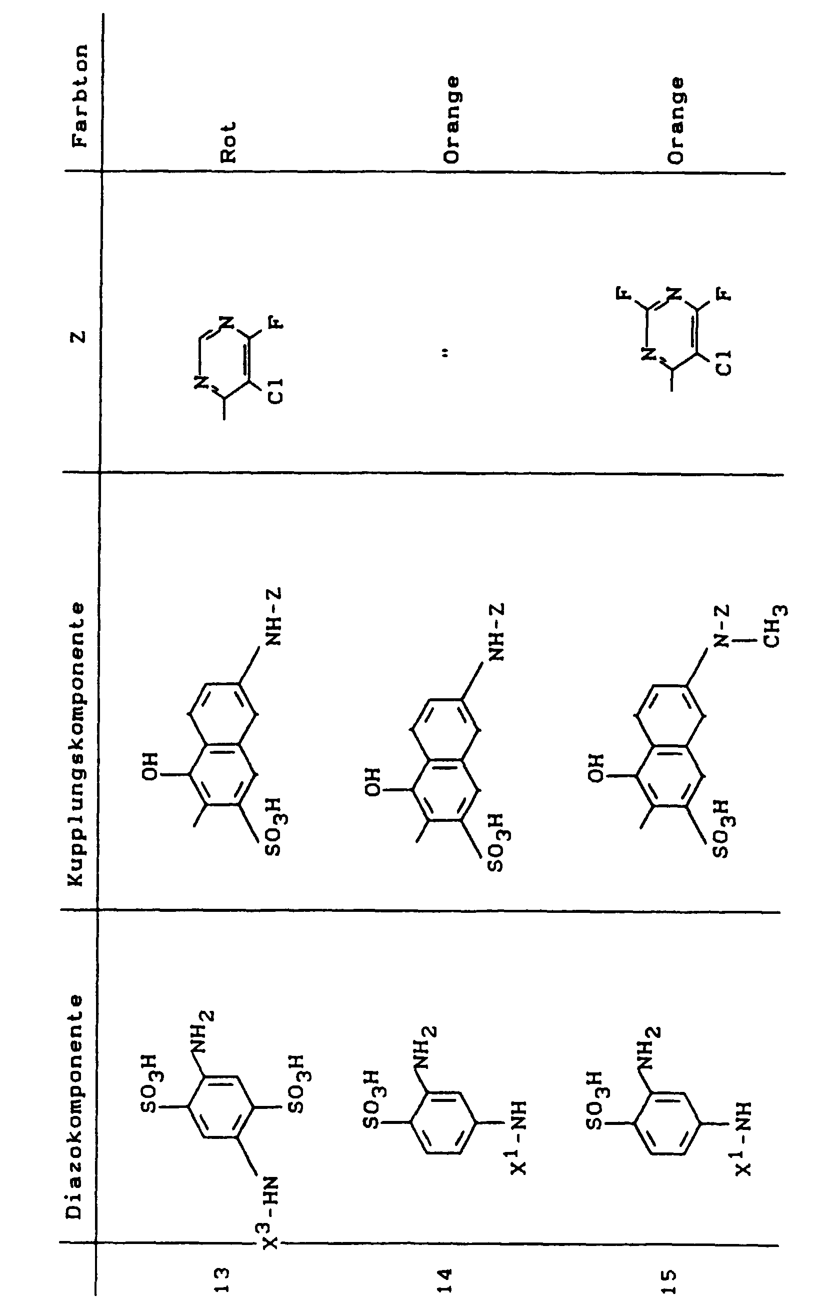

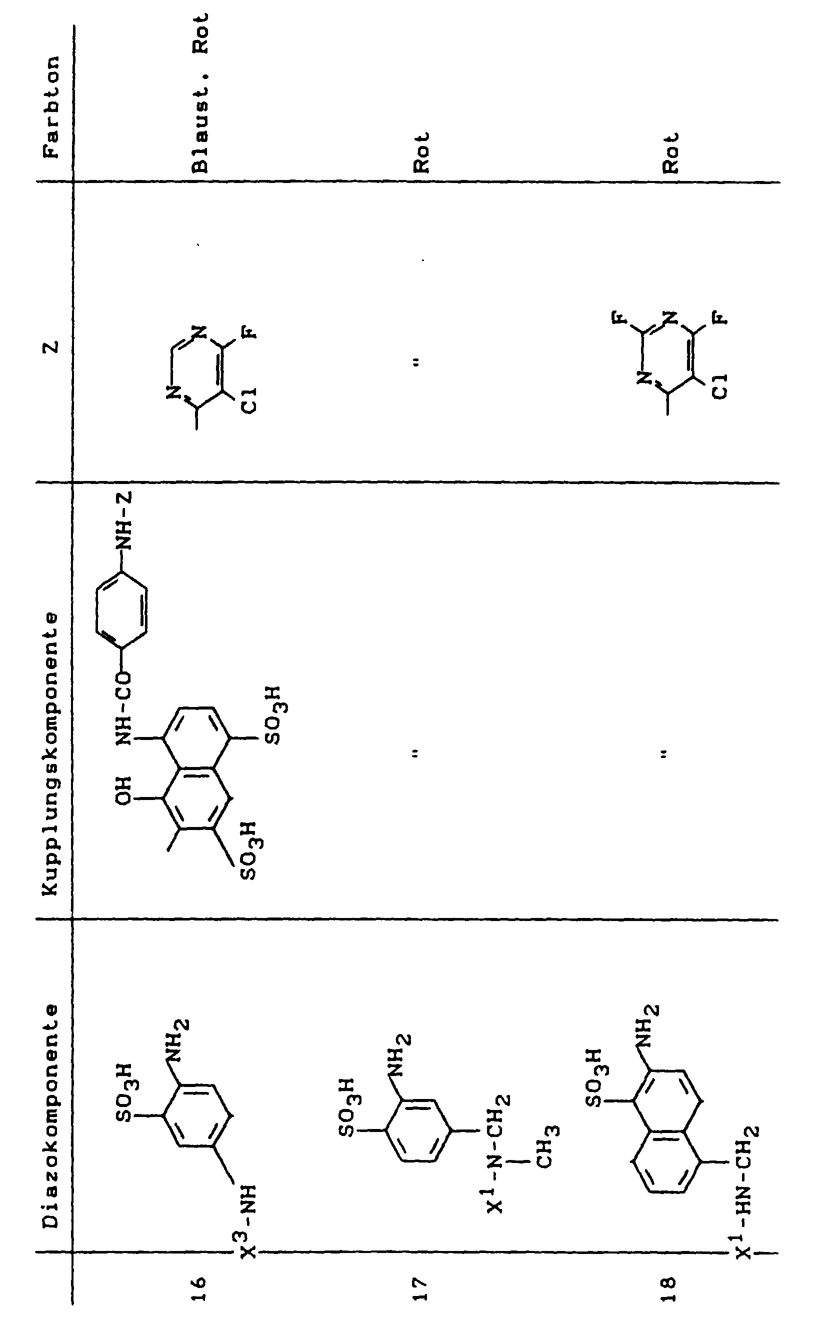

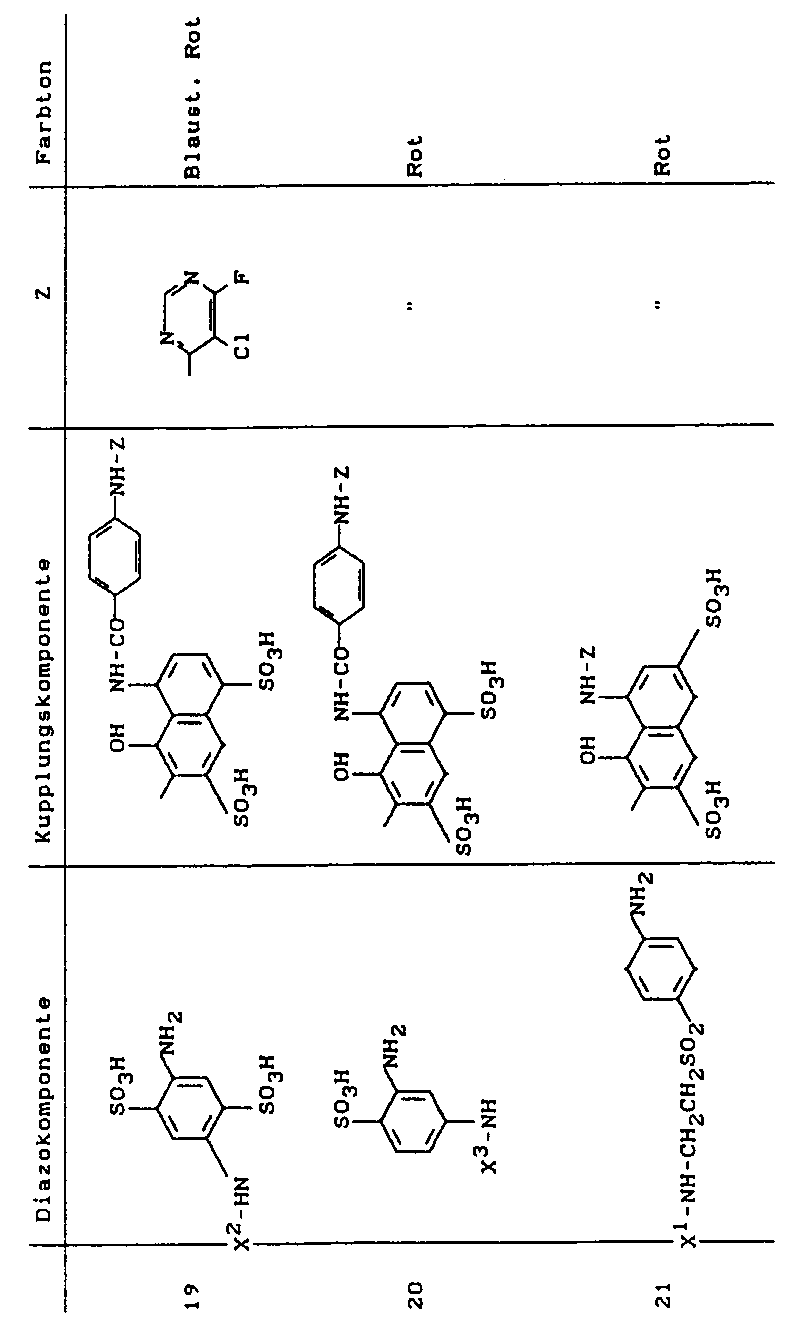

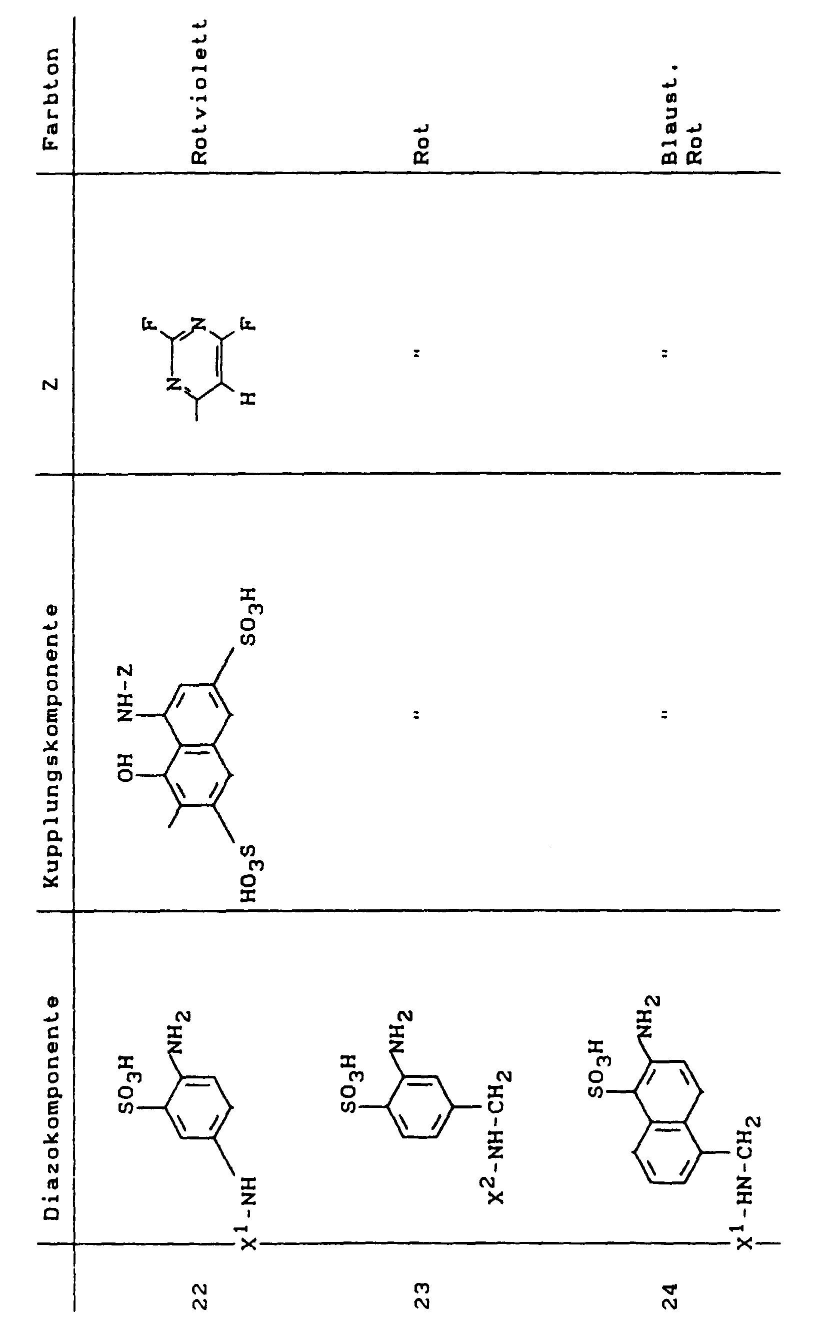

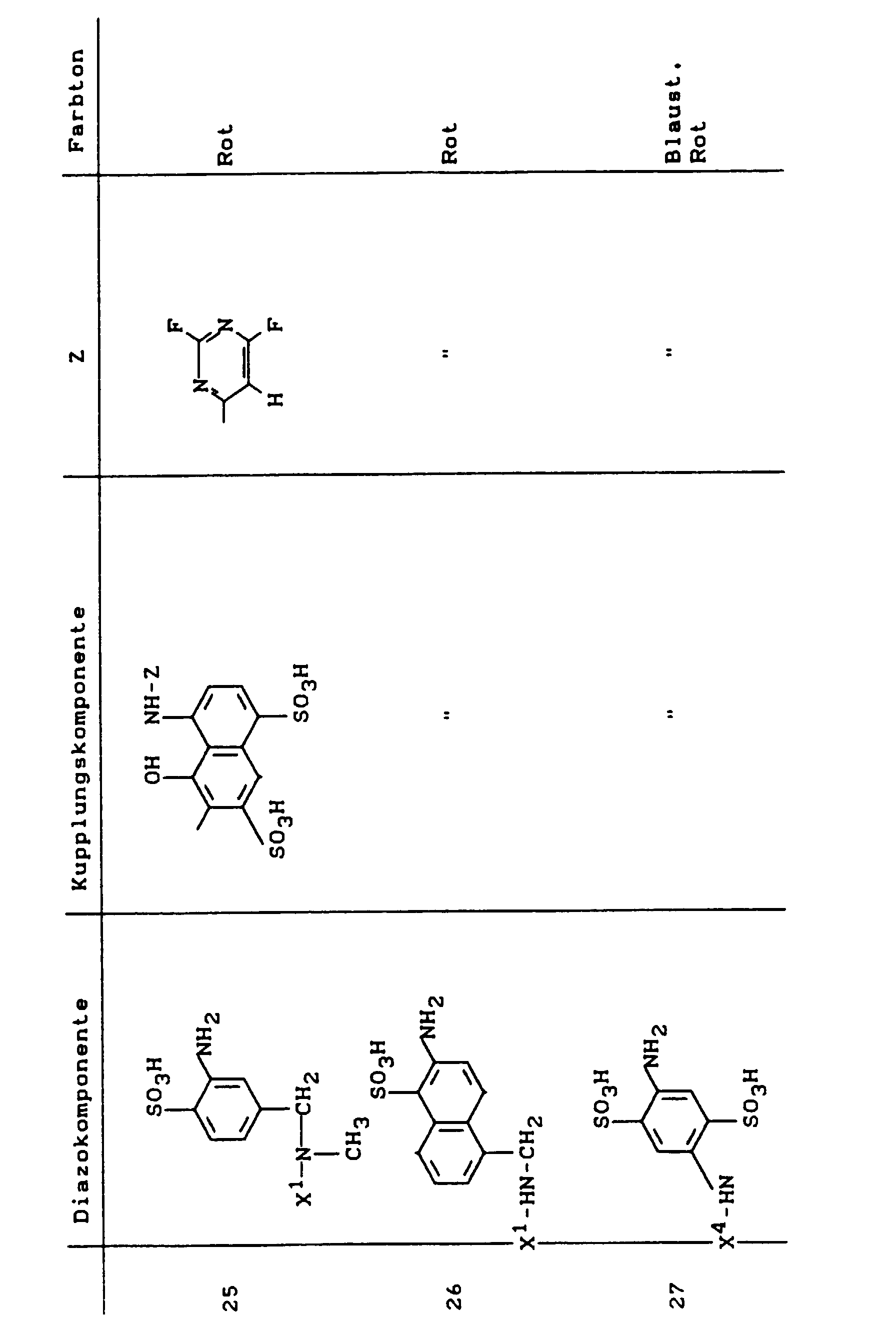

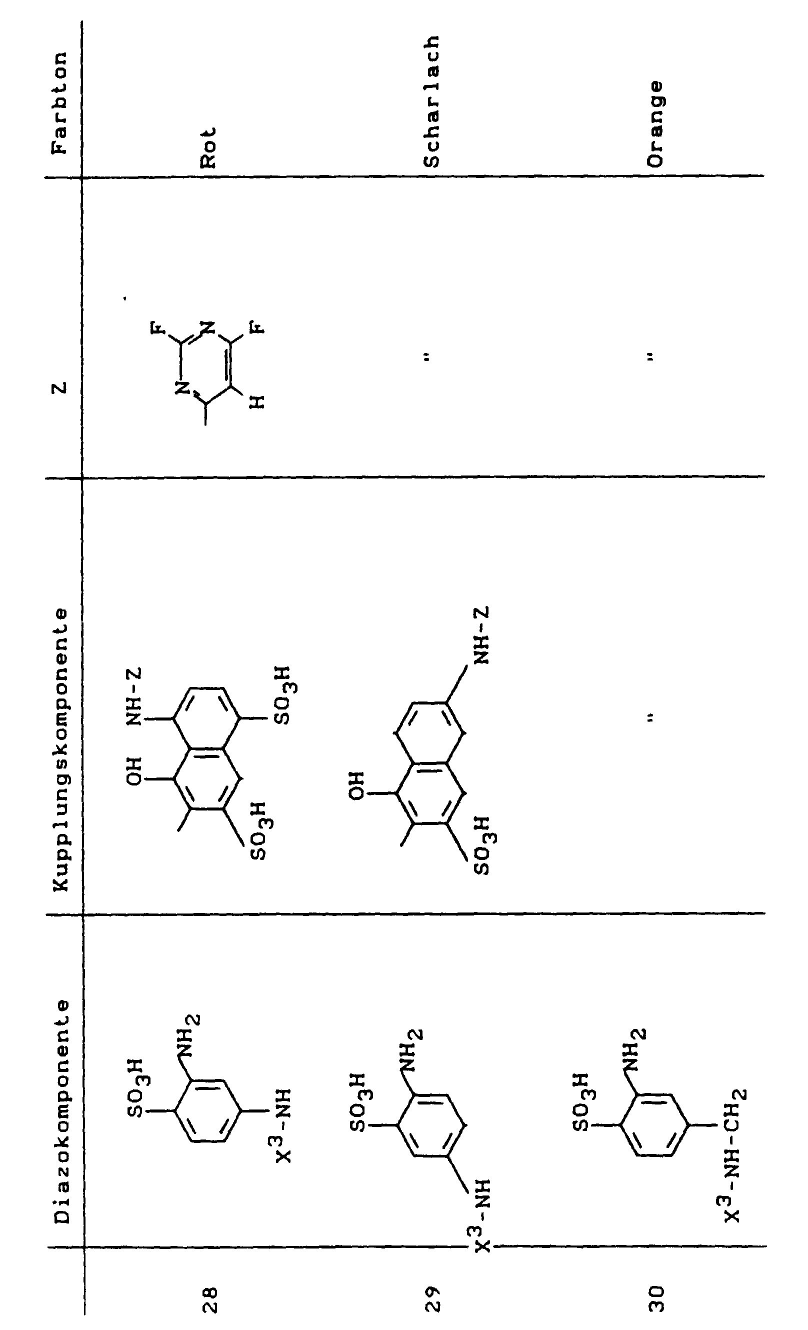

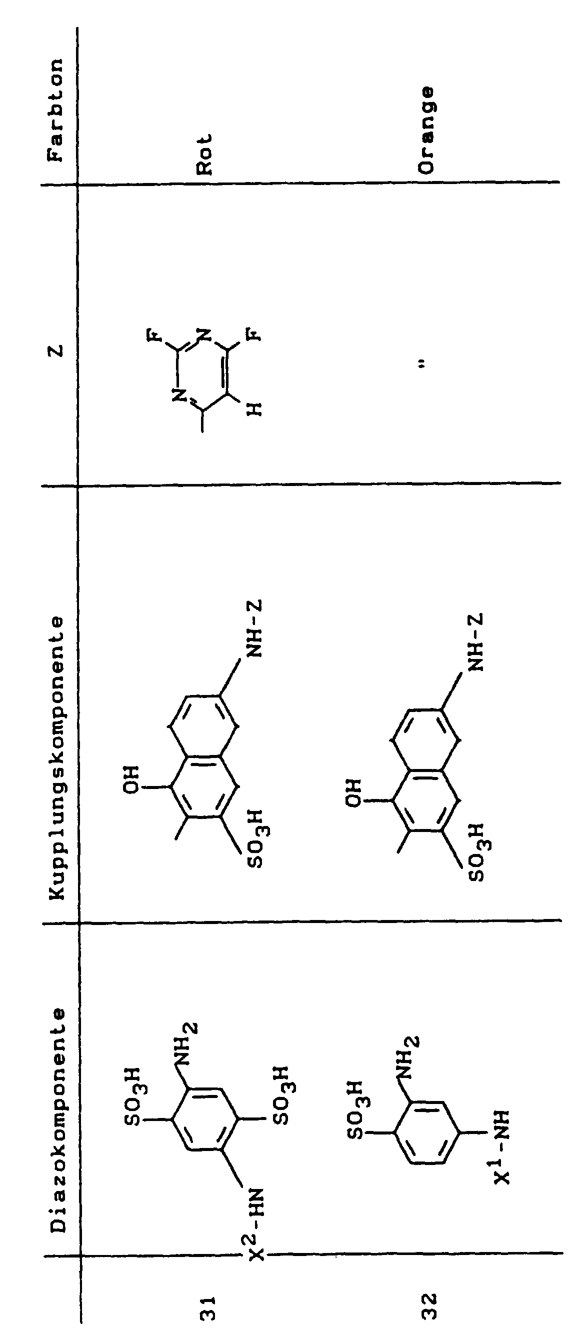

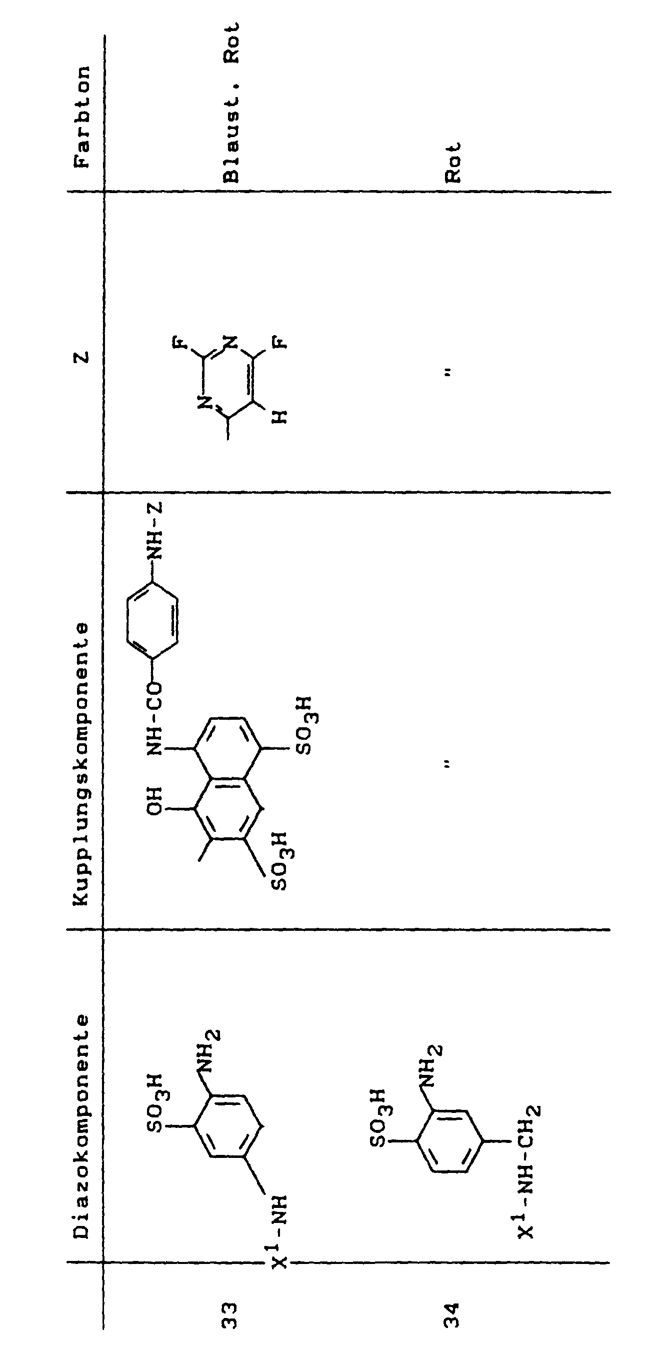

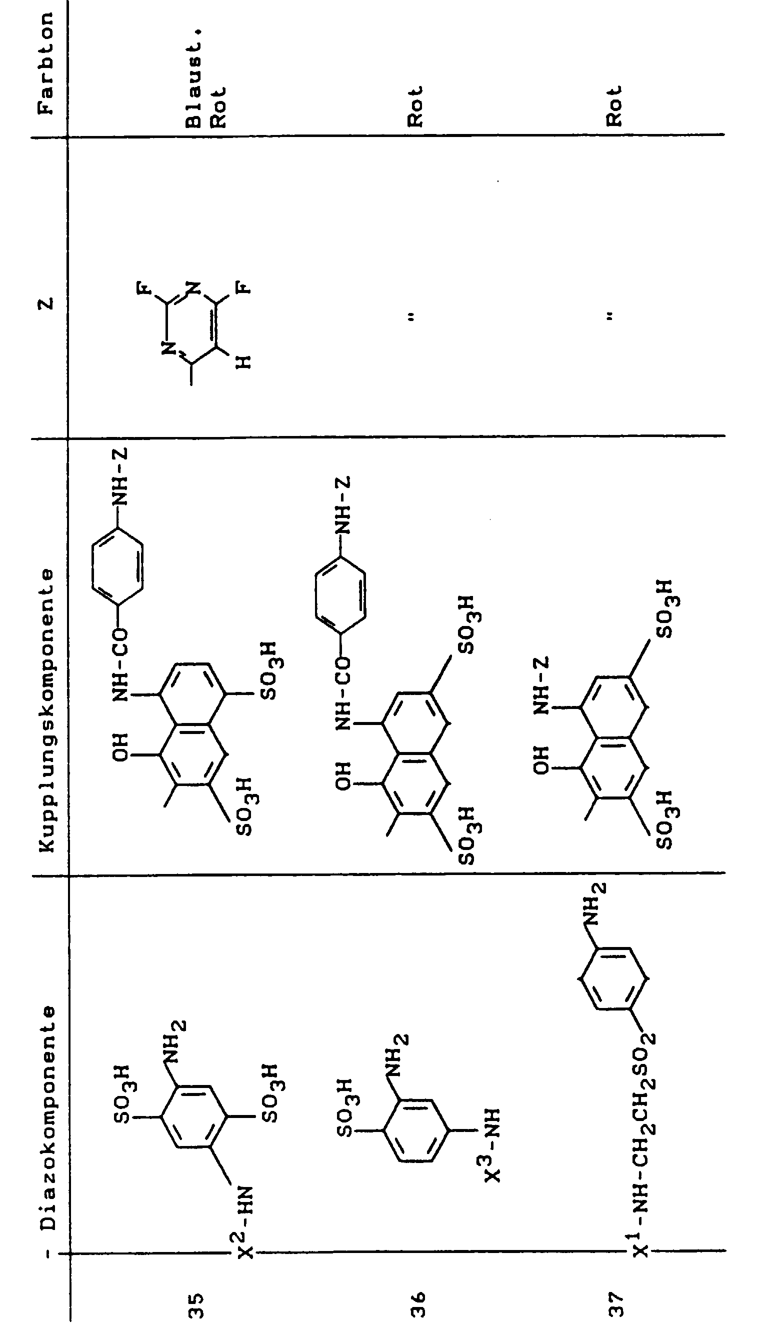

### Beispiel 38

a) 0,2 Mol 1-Amino-8-hydroxynaphthalin-3,6-disulfonsäure werden in 350 ml Wasser bei pH 6,5 gelöst und mit 350 g Eis auf 0°C abgekühlt. 0,21 Mol 4-(2-Chlorethylsulfonyl)-benzoylchlorid werden zugegeben und der pH mit Na₂CO₃-Lösung zwischen 4,0 und 4,5 gehalten. Man läßt die Temperatur auf 20 bis 25°C steigen und rührt 1 Stunde nach.
b) 0,2 Mol 2,6-Difluor-4-(3'-amino-4'-sulfophenyl)-pyrimidin (aus 2,4-Diaminobenzolsulfonsäure und 2,4,6-Trifluorpyrimidin hergestellt) werden in Wasser suspendiert und mit 65 ml 30 %iger Salzsäure und 300 g Eis versetzt. Danach werden 46 ml 30 %ige Natriumnitritlösung zugegeben und 1 Stunde bei 0°C gerührt. Überschüssiges Natriumnitrit wird mit Amidosulfonsäure vernichtet und die so erhaltene Diazotierung zur Lösung der Kupplungskomponente a) gegeben. Mit Sodalösung wird ein pH von 6-7 eingestellt.
   Nach beendeter Kupplung wird der Farbstoff ausgesalzen, isoliert, getrocknet und gemahlen. Der so erhaltene Farbstoff der Formel 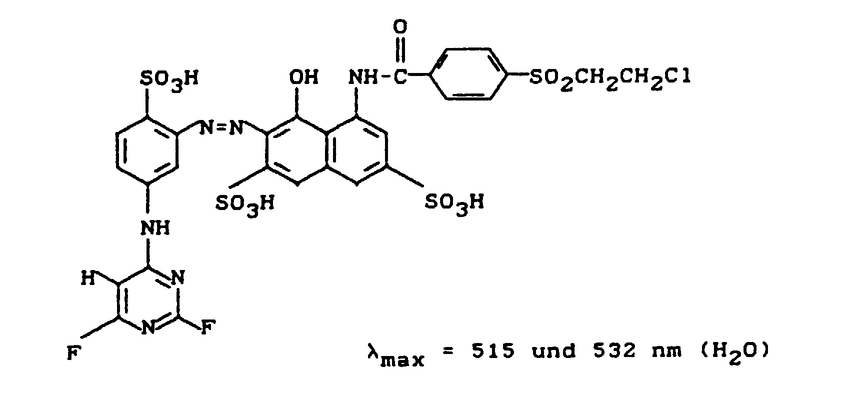 färbt Baumwolle in klaren roten Tönen.

### Beispiel 39

0,2 Mol 8-(4'-amino-benzoylamino)-1-naphthol-3,6-disulfonsäure werden in 800 ml Wasser mit Sodalösung (20 g/100 ml) bei einem pH-Wert von 7 gelöst. Mit 10 %iger HCl-Lösung wird pH 4,5 eingestellt. Man gibt 0,22 Mol 3-(2-Chlorethylsulfonyl)-benzoylchlorid zu. Mit Sodalösung (20 g/100 ml) wird ein pH-Wert von 4,5-6 gehalten. Die Umsetzung ist nach 4 Stunden beendet.

Man gibt nun 0,2 Mol des Diazoniumsalzes aus Beispiel 38 zu und hält gleichzeitig durch Zutropfen von Sodalösung (20 g/100 ml) einen pH-Wert von 7,5-8. Nach beendeter Kupplung salzt man mit NaCl aus, isoliert und trocknet. Der Farbstoff der Formel 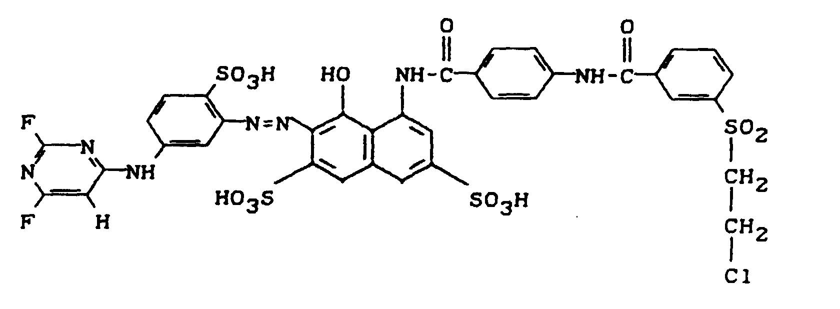 färbt Baumwolle in roten Tönen.

Die Beispiele 40-74 der Formel

Z⁅D⁆N=N⁅K⁆X

lassen sich wie in Beispiel 38 bez. 39 beschrieben herstellen, wenn die entsprechenden Zwischenprodukte eingesetzt werden. Sie färben Baumwolle in den angegebenen Farbtönen.

X¹ bis X⁴ haben die oben angegebene Bedeutung.

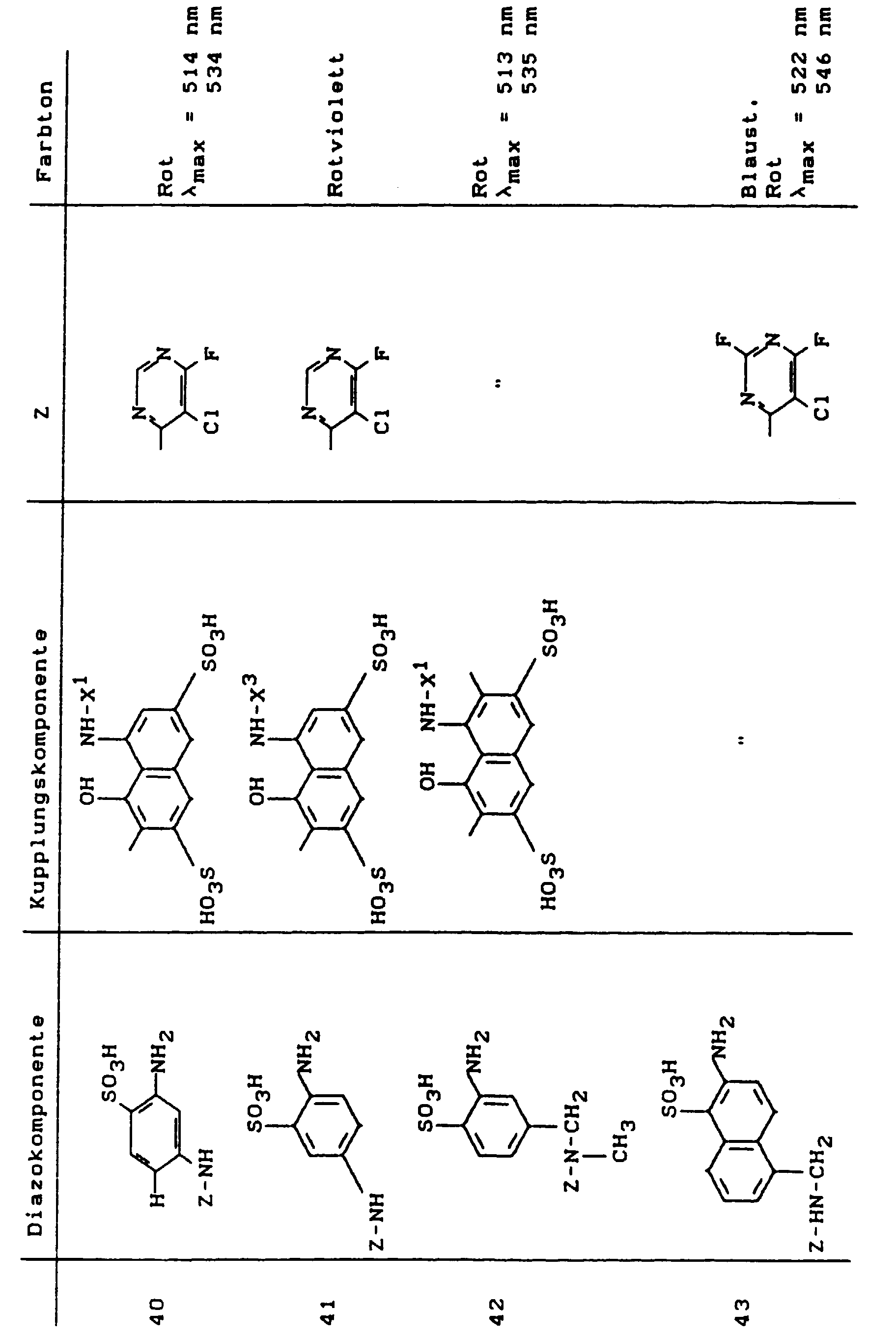

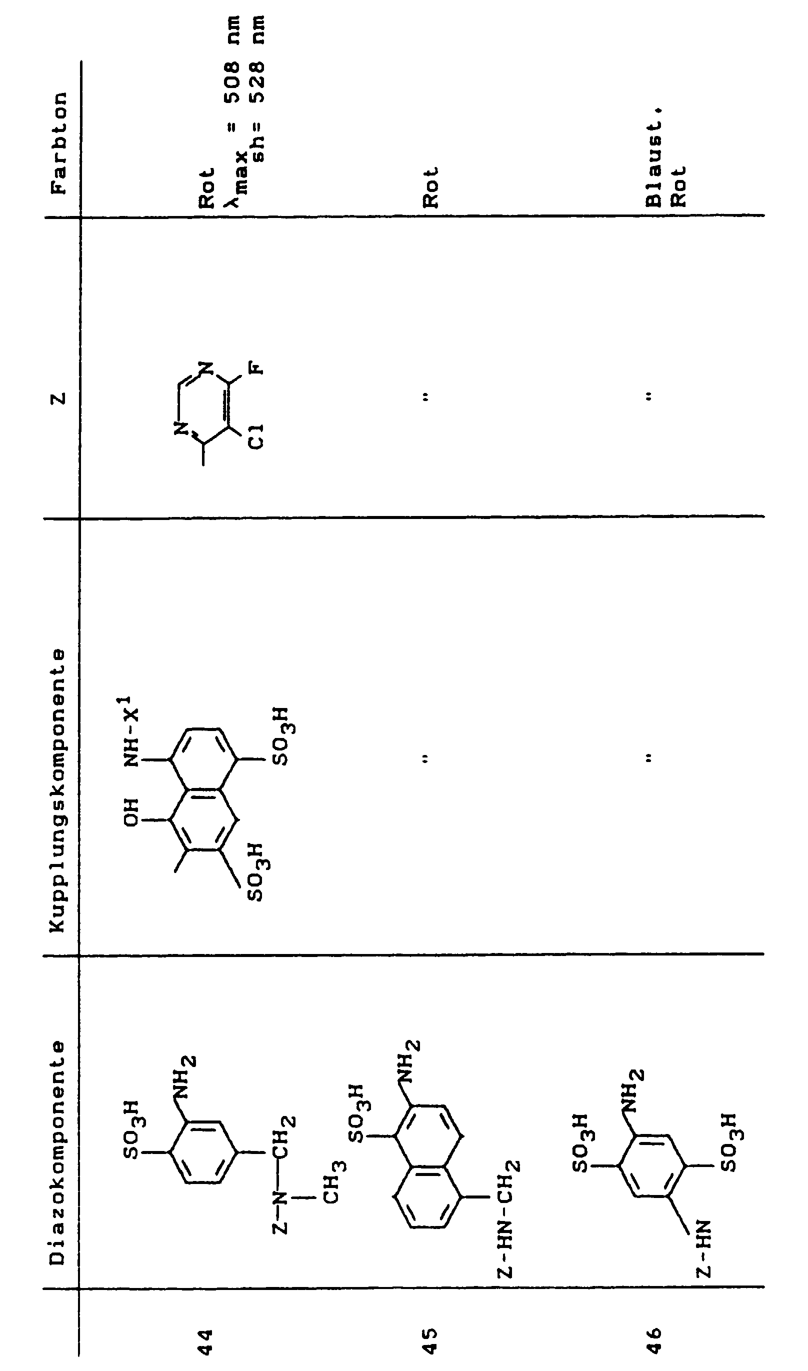

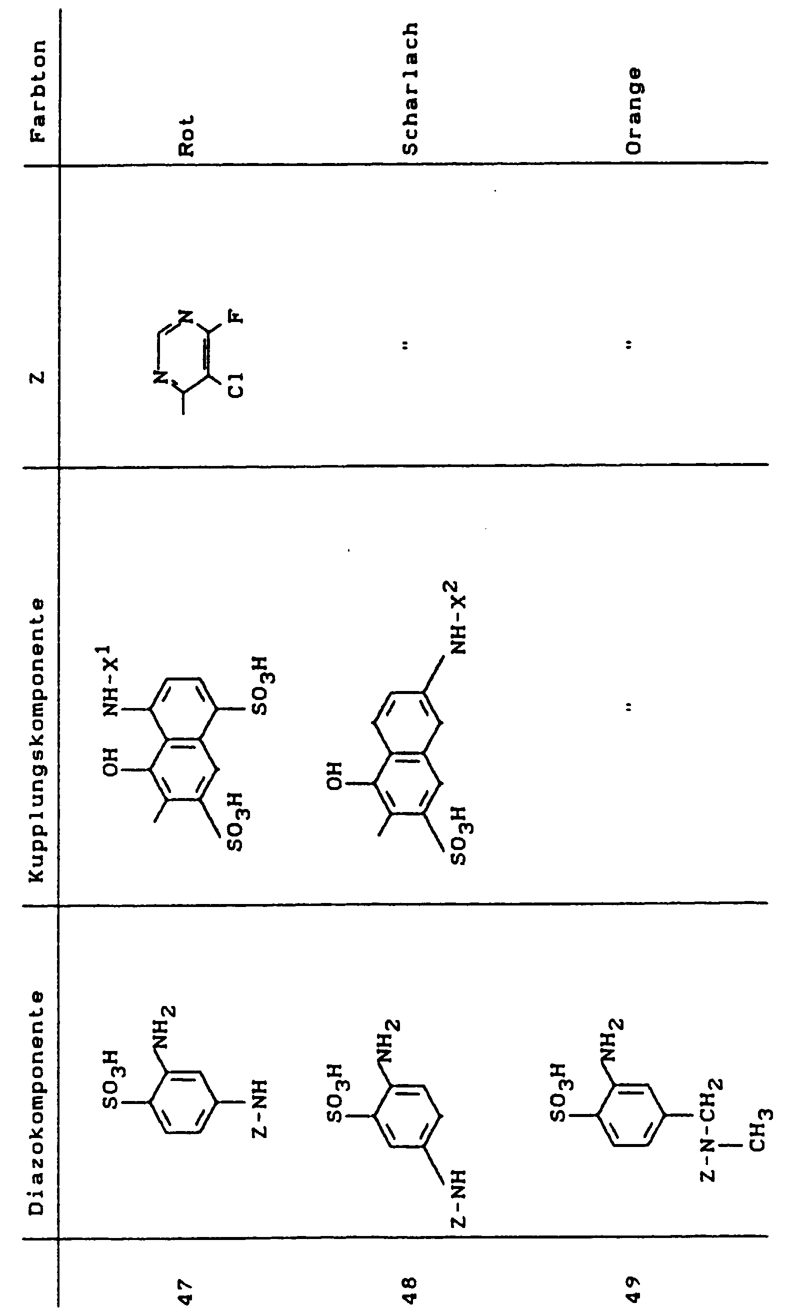

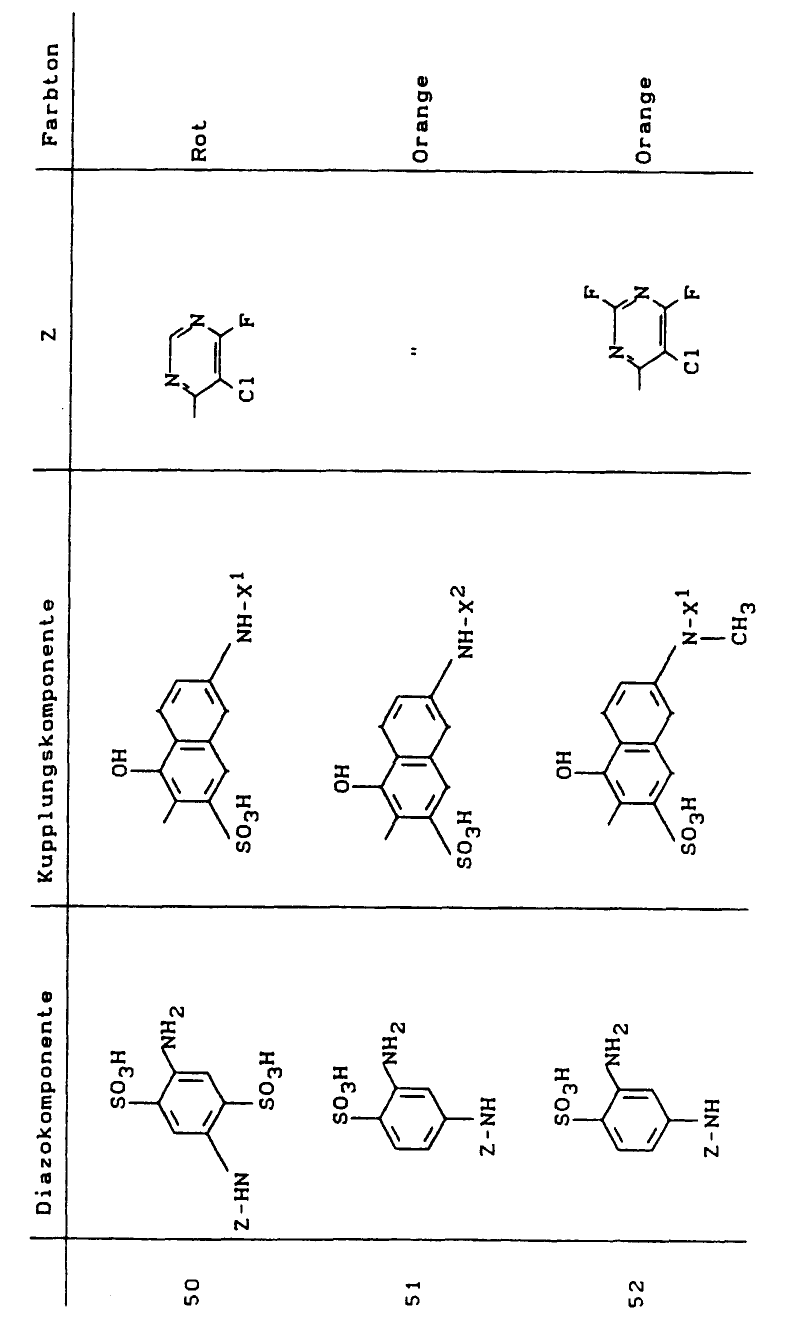

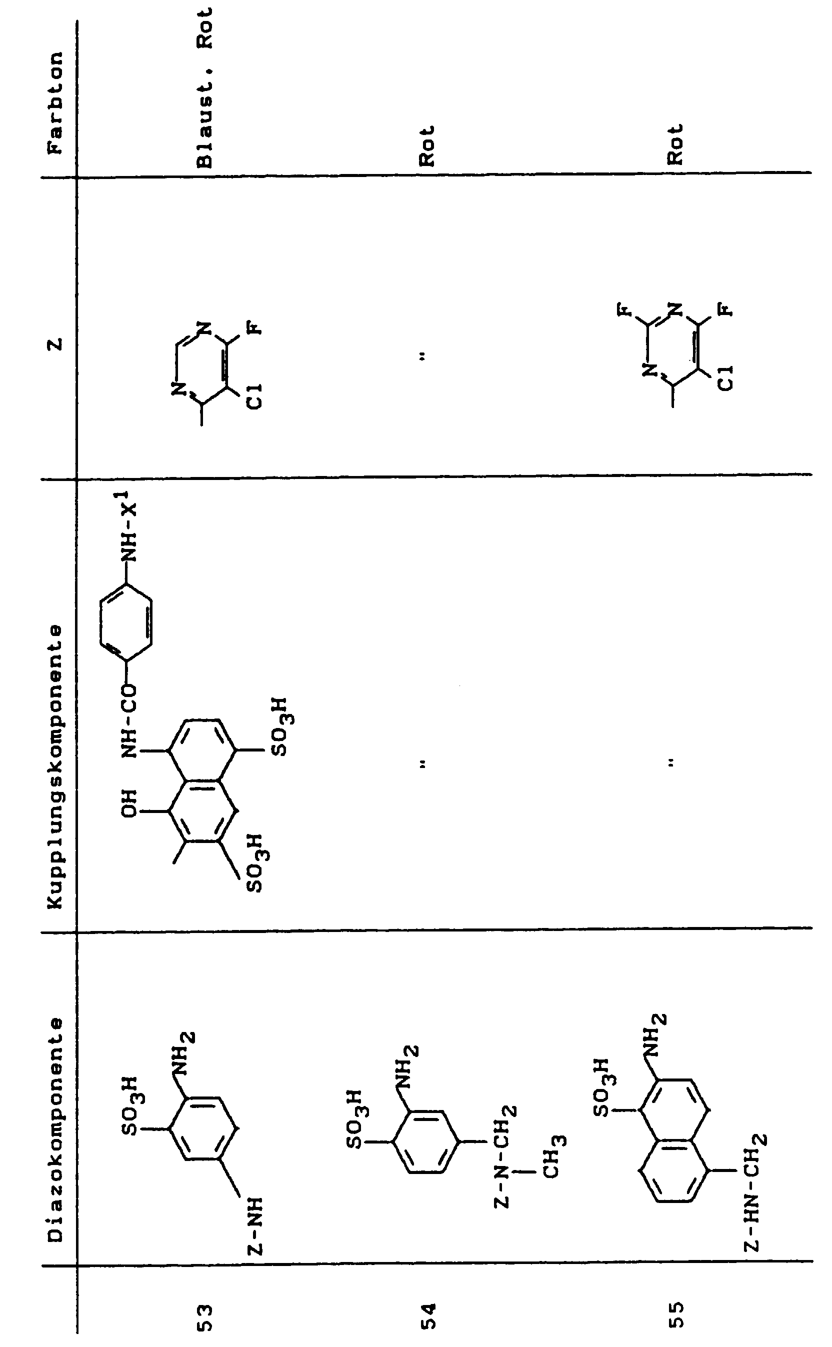

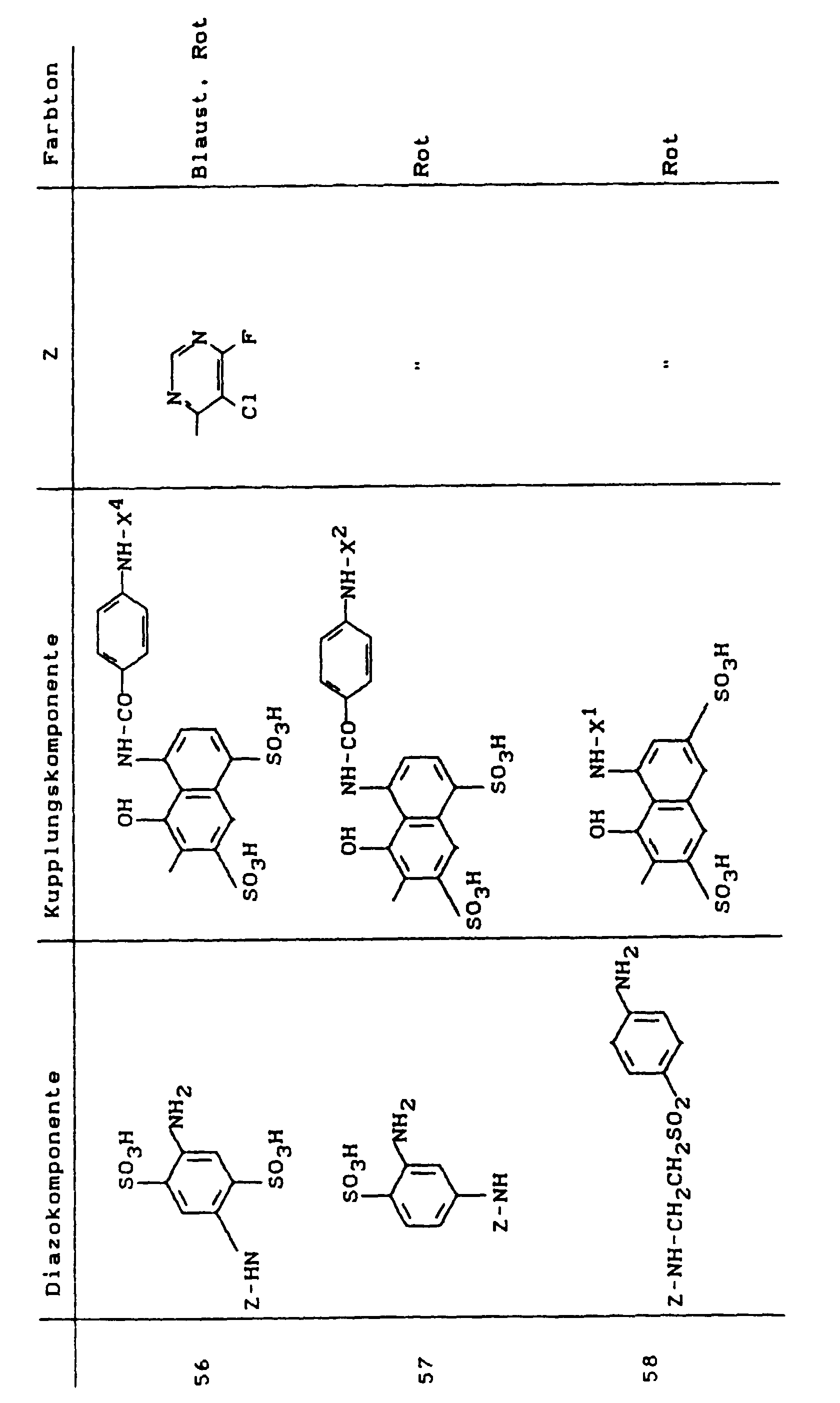

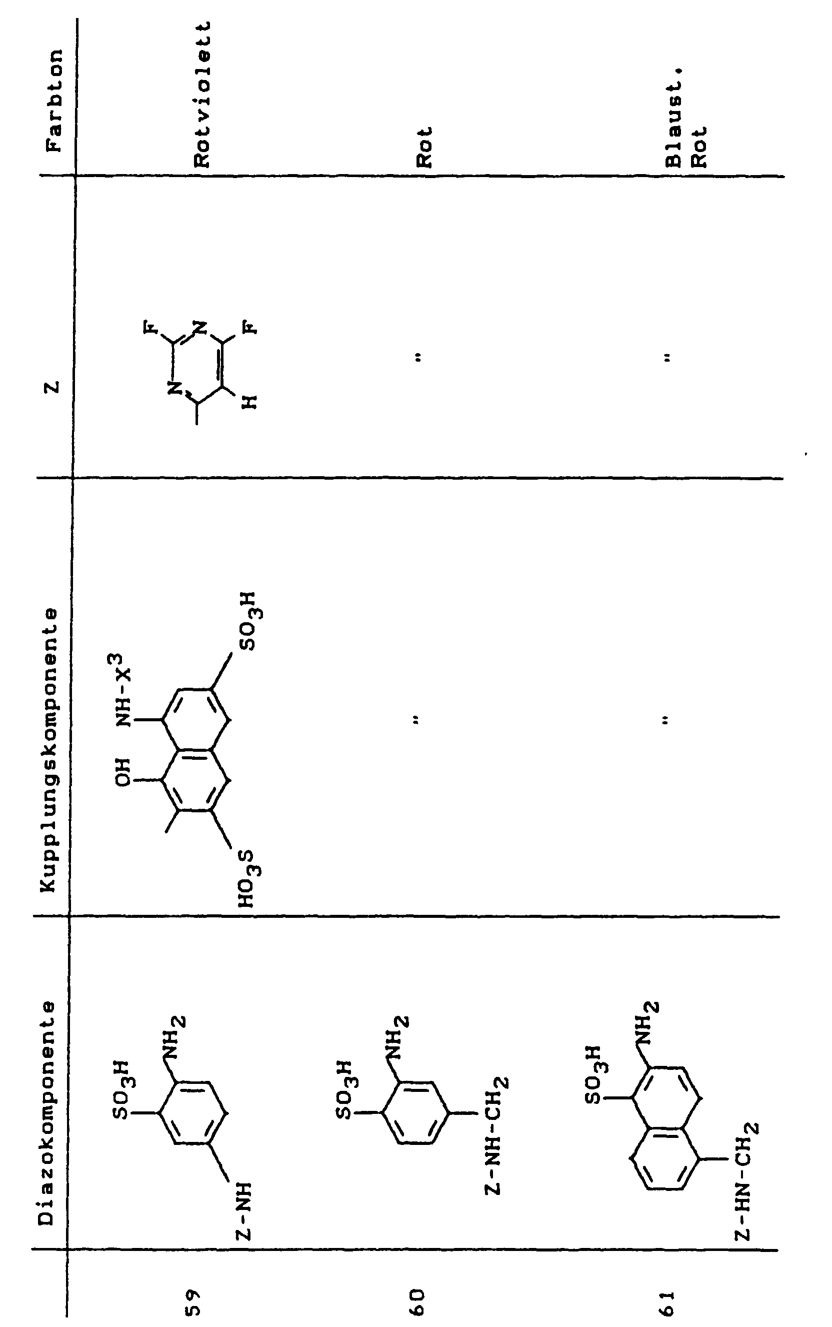

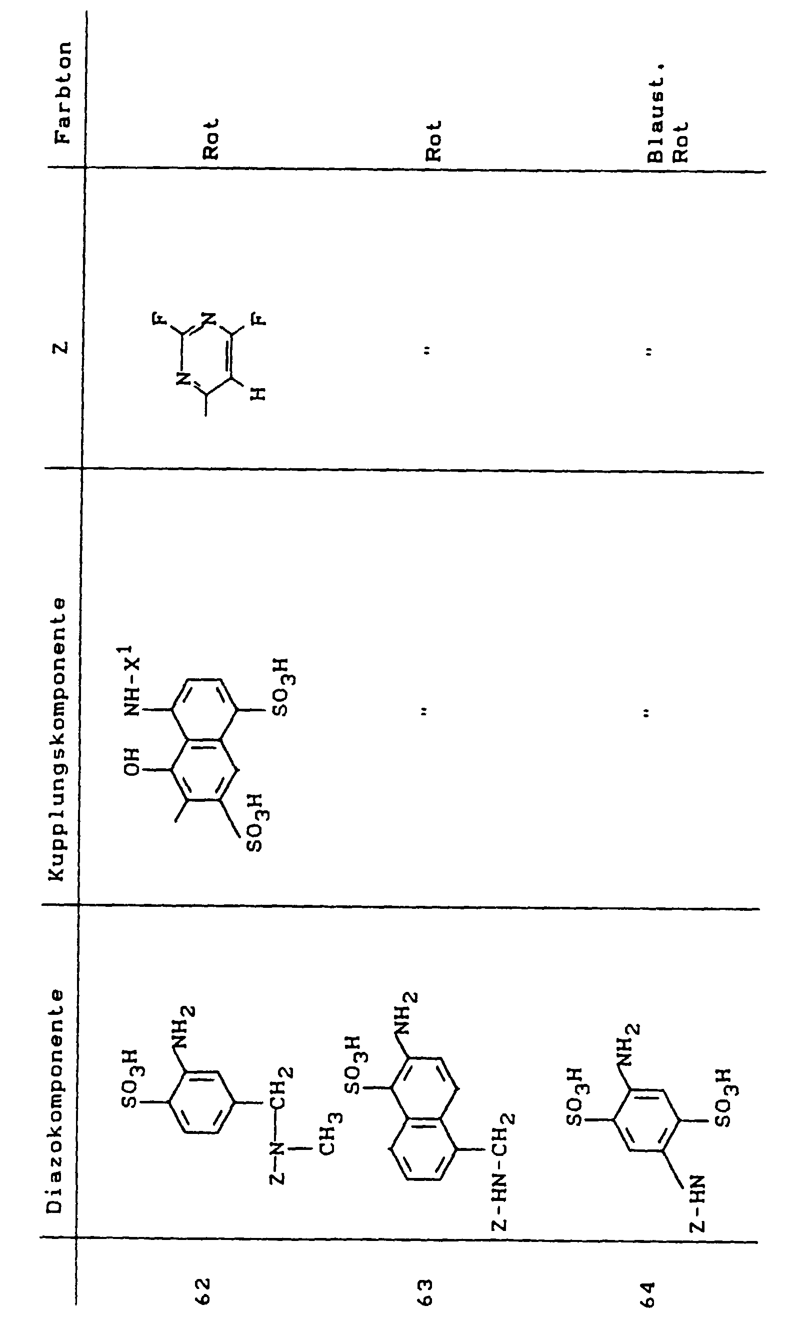

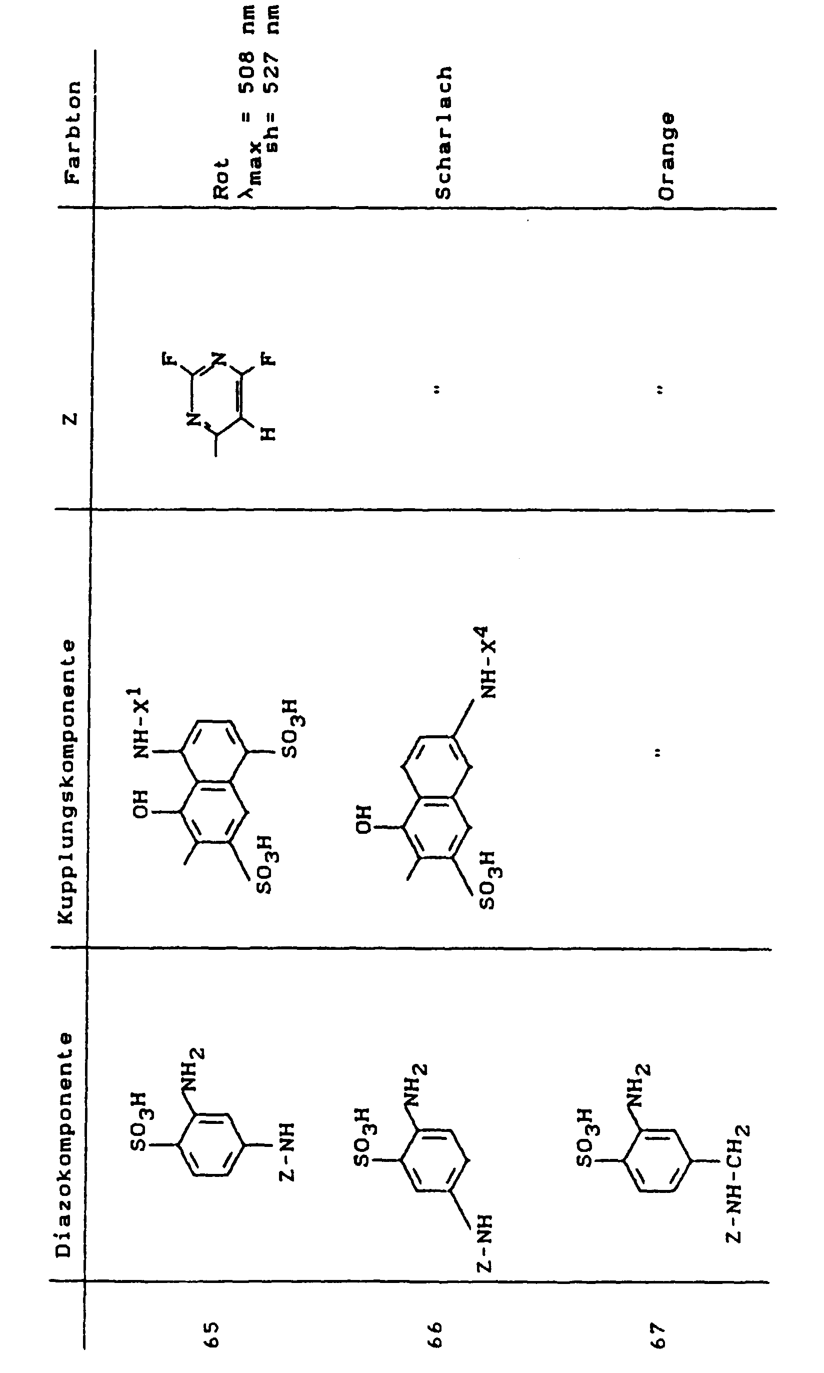

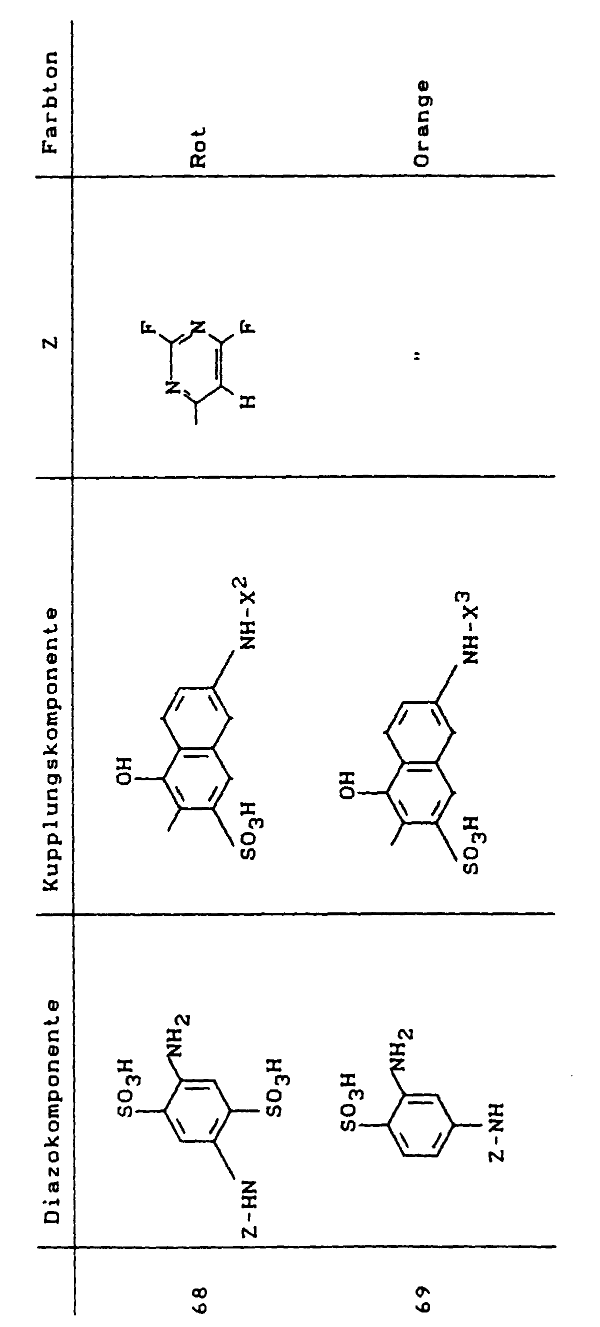

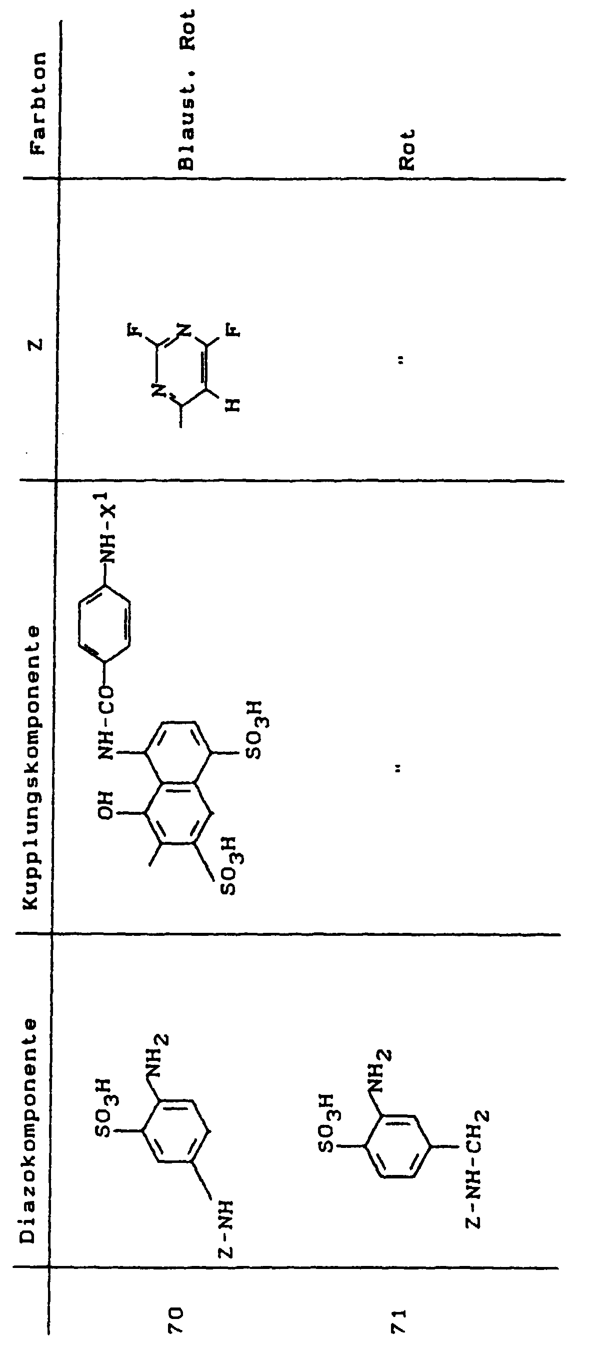

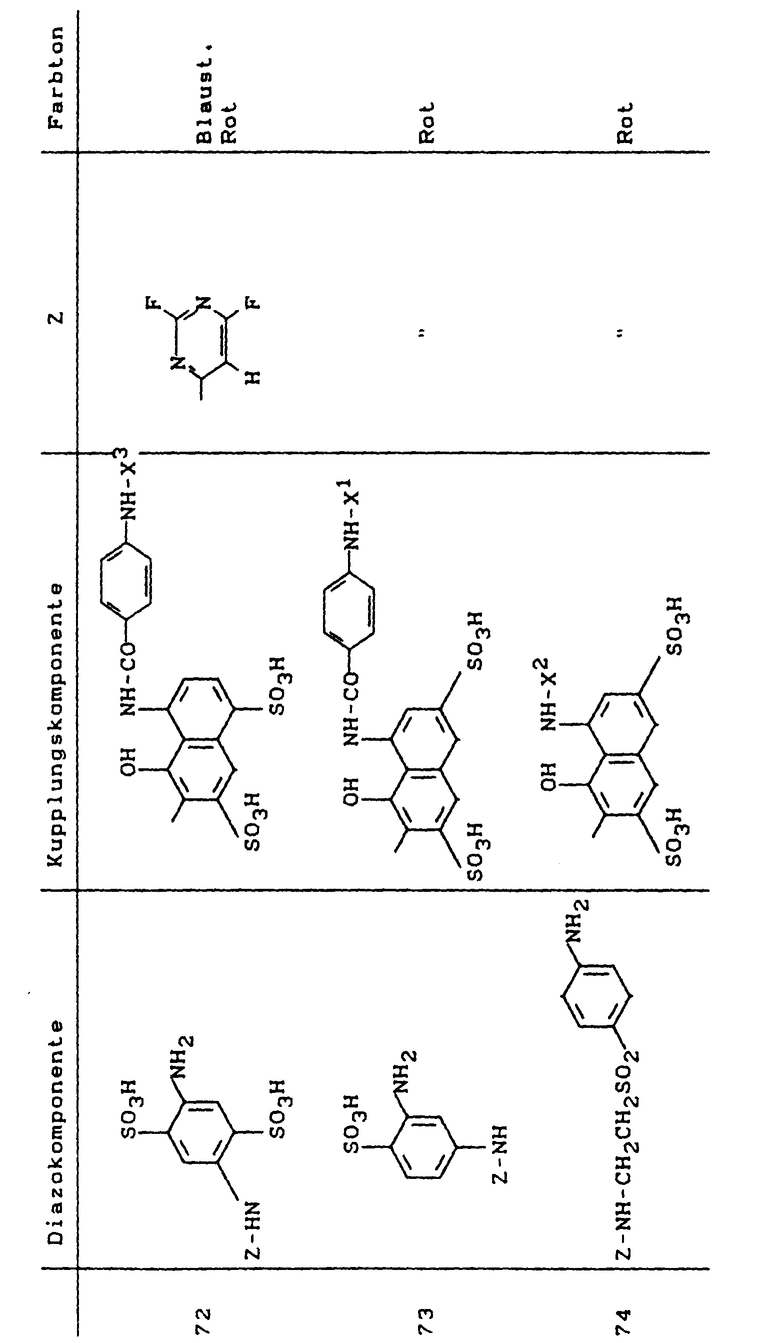

Weitere wertvolle Farbstoffe der Formel 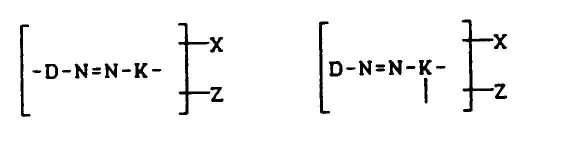 sind die der Beispiele 75 - 86, die sich nach bekannten Methoden, wie bsp. oben dargestellt, herstellen lassen und Baumwolle in den angegebenen Tönen färben.

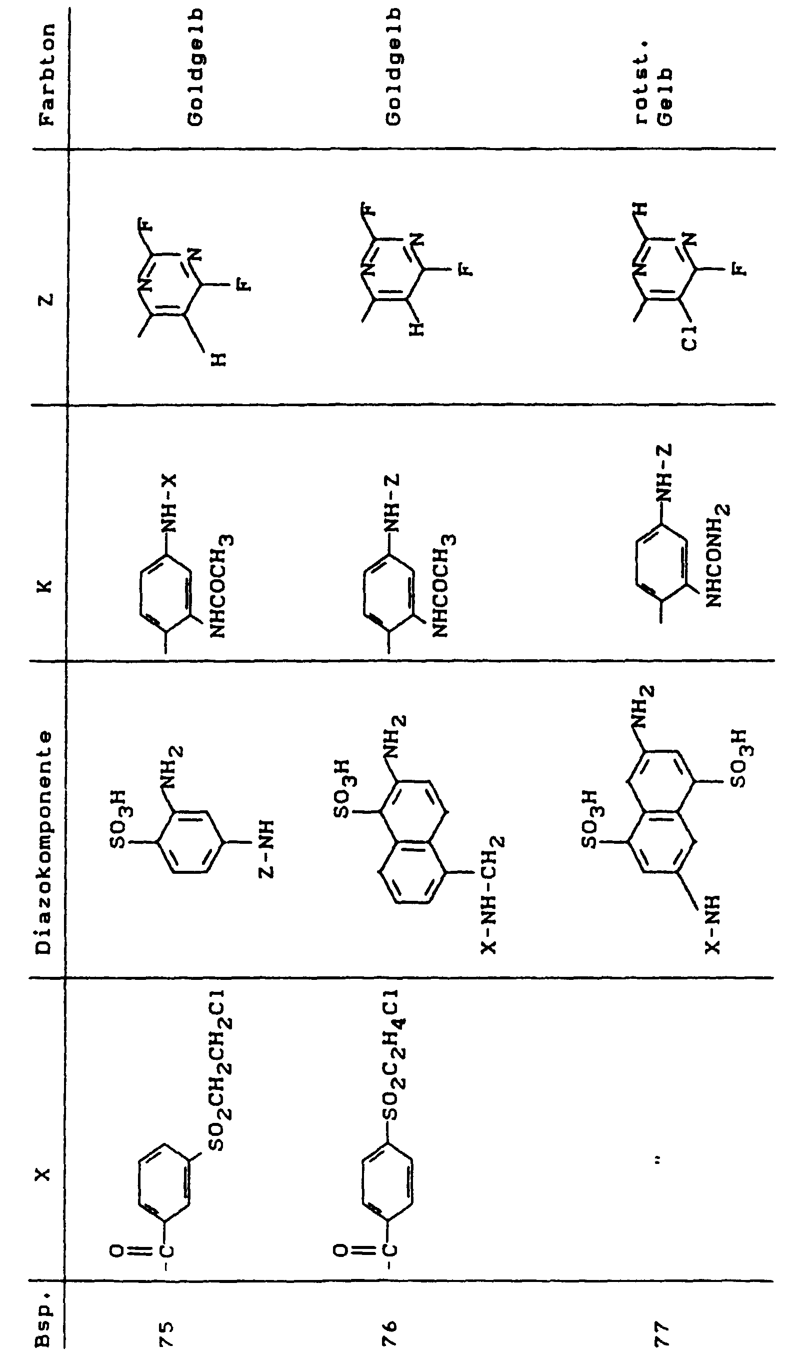

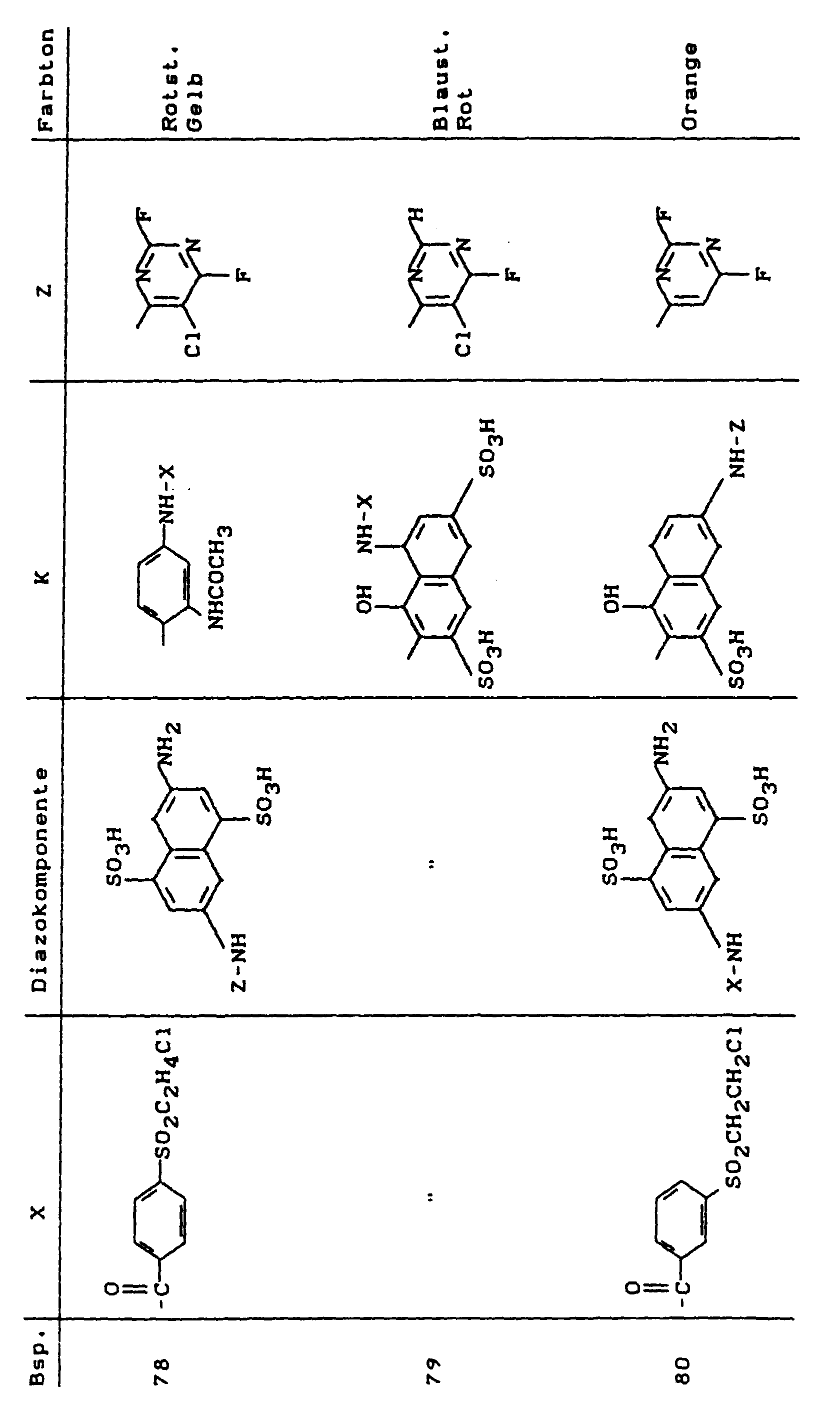

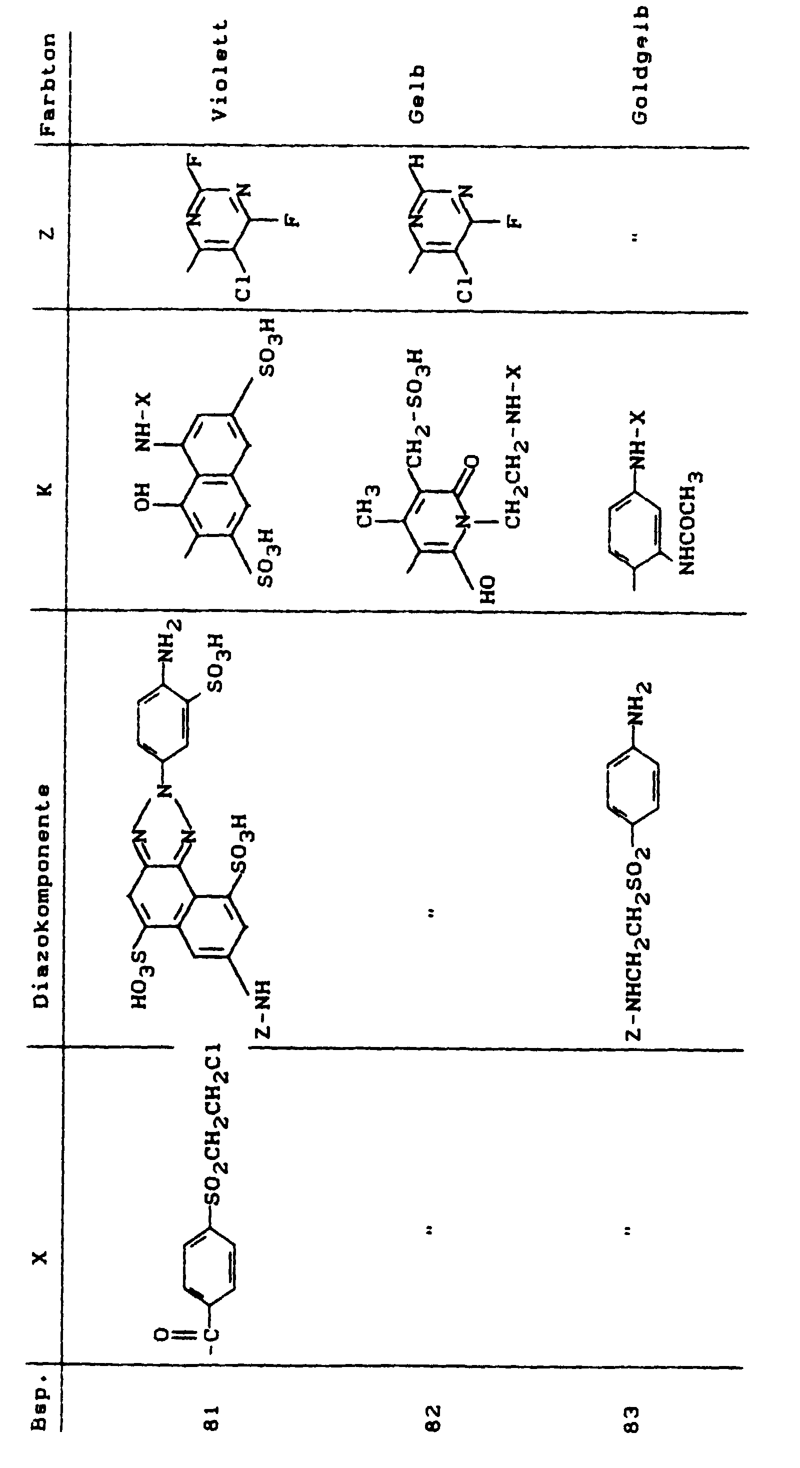

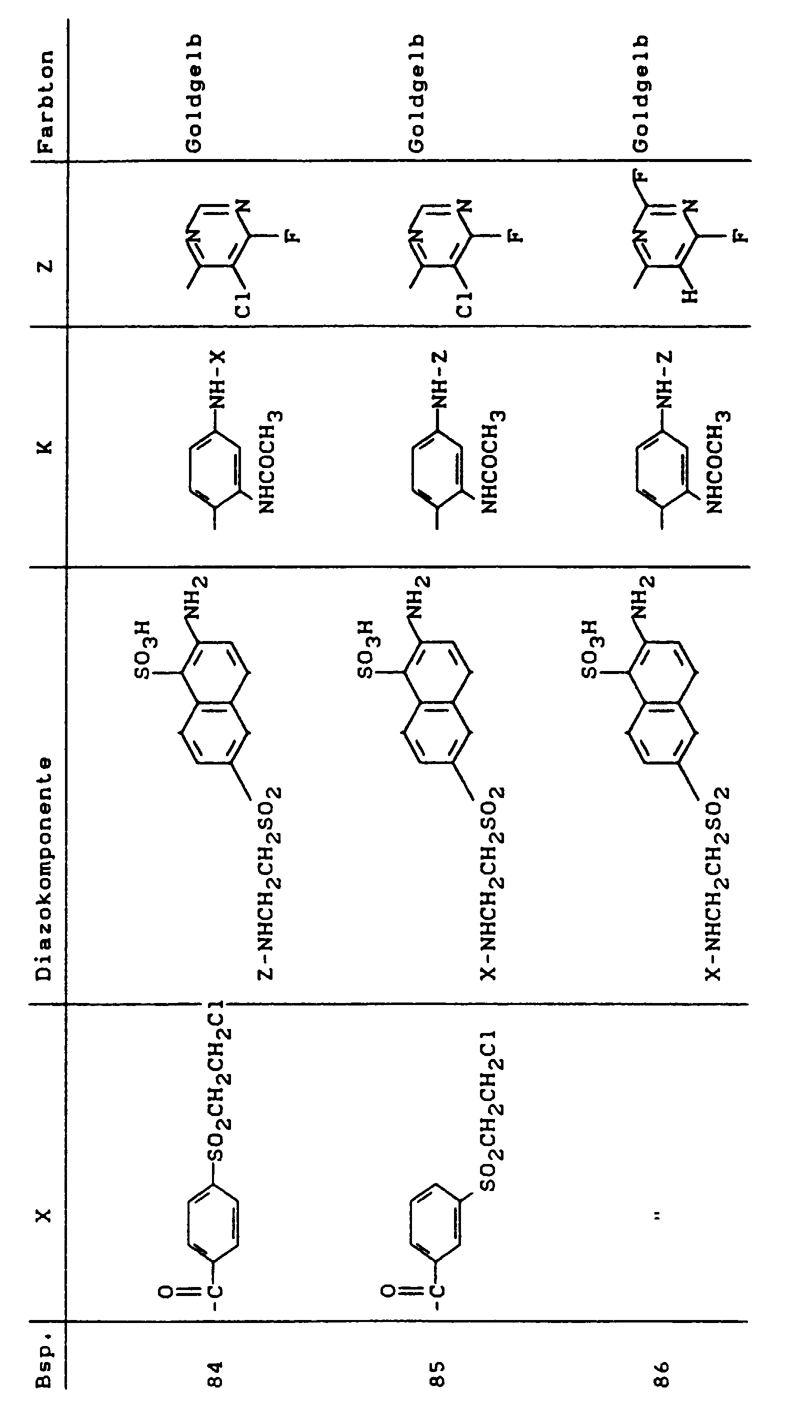

Analog den oben beschriebenen Herstellungsverfahren bzw. nach üblichen Verfahren lassen sich unter Verwendung der entsprechenden Ausgangskomponenten die Farbstoffe der Beispiele 87 - 105 erhalten.

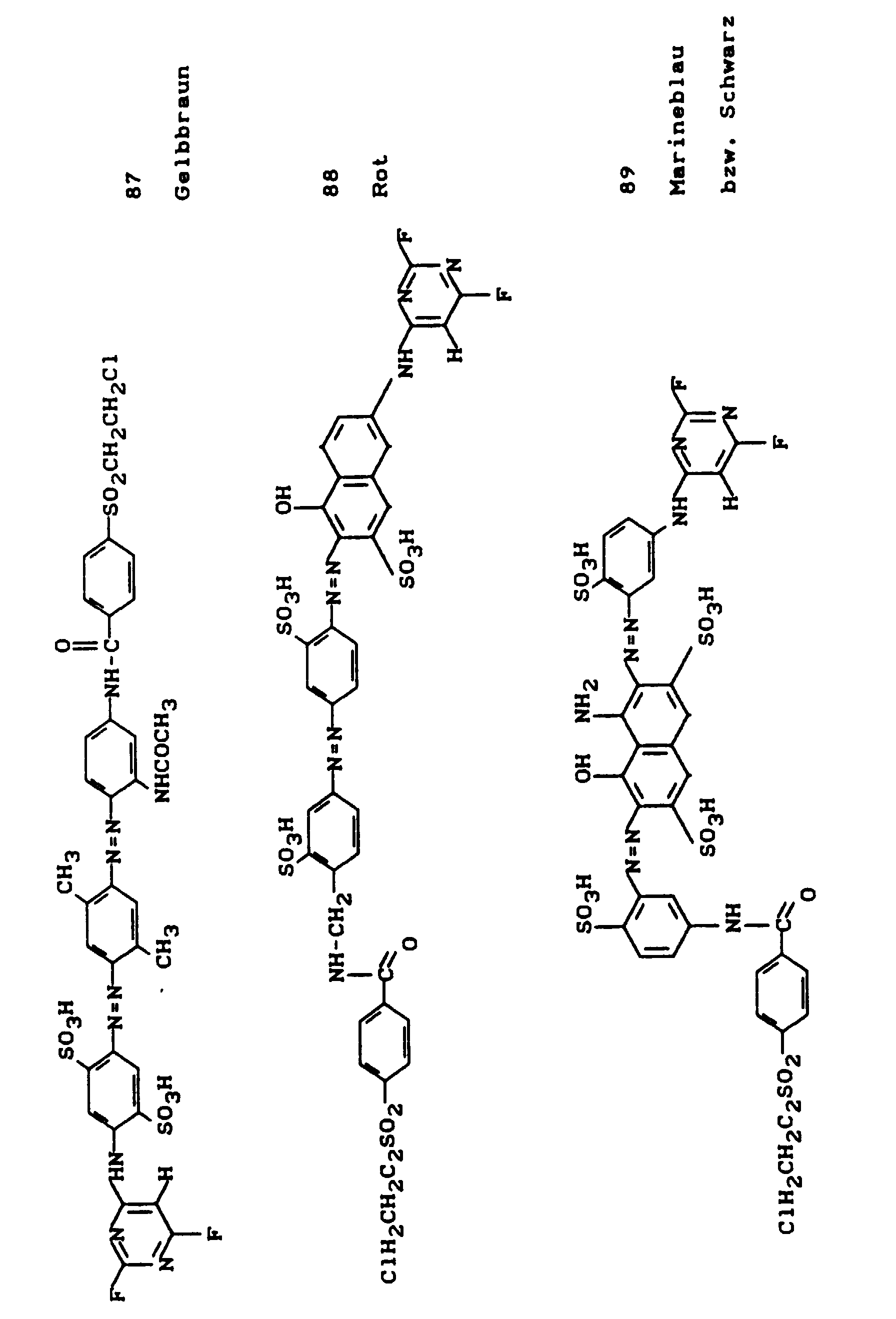

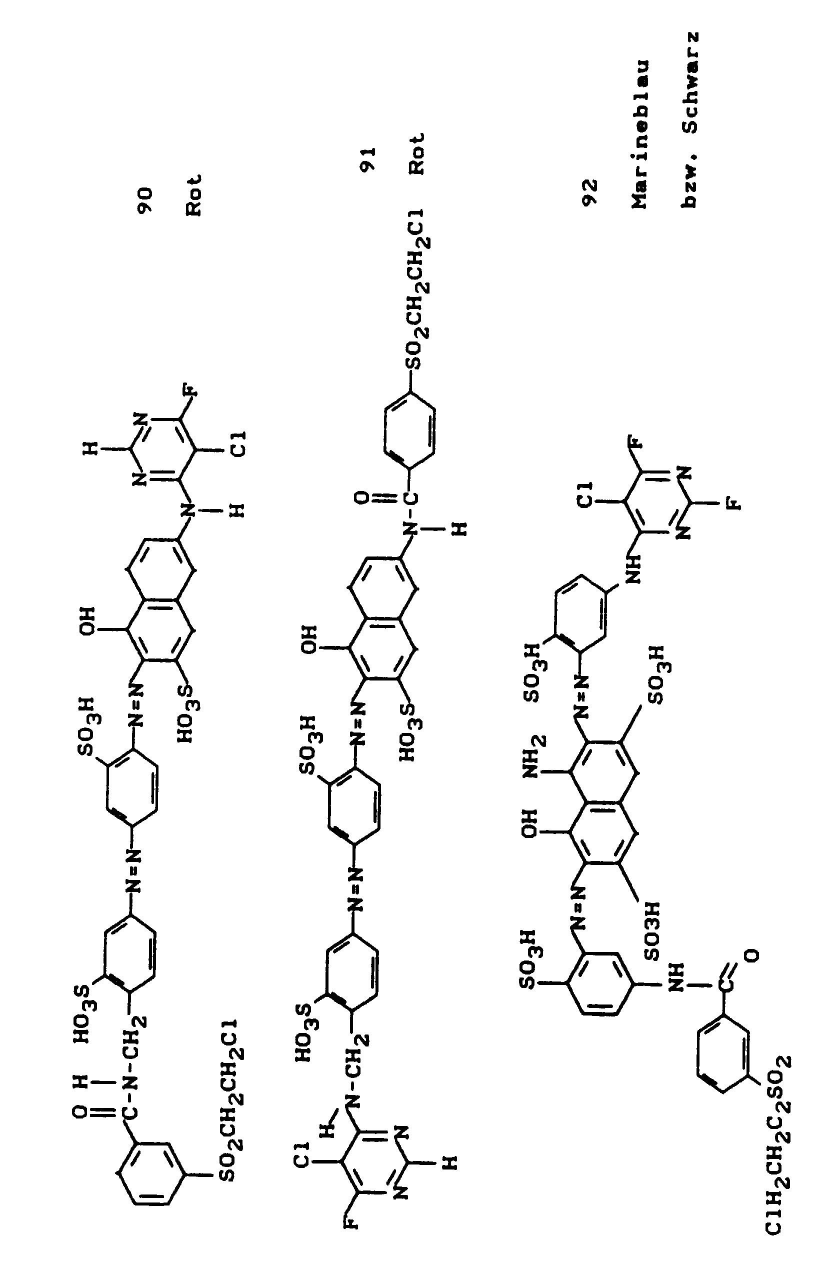

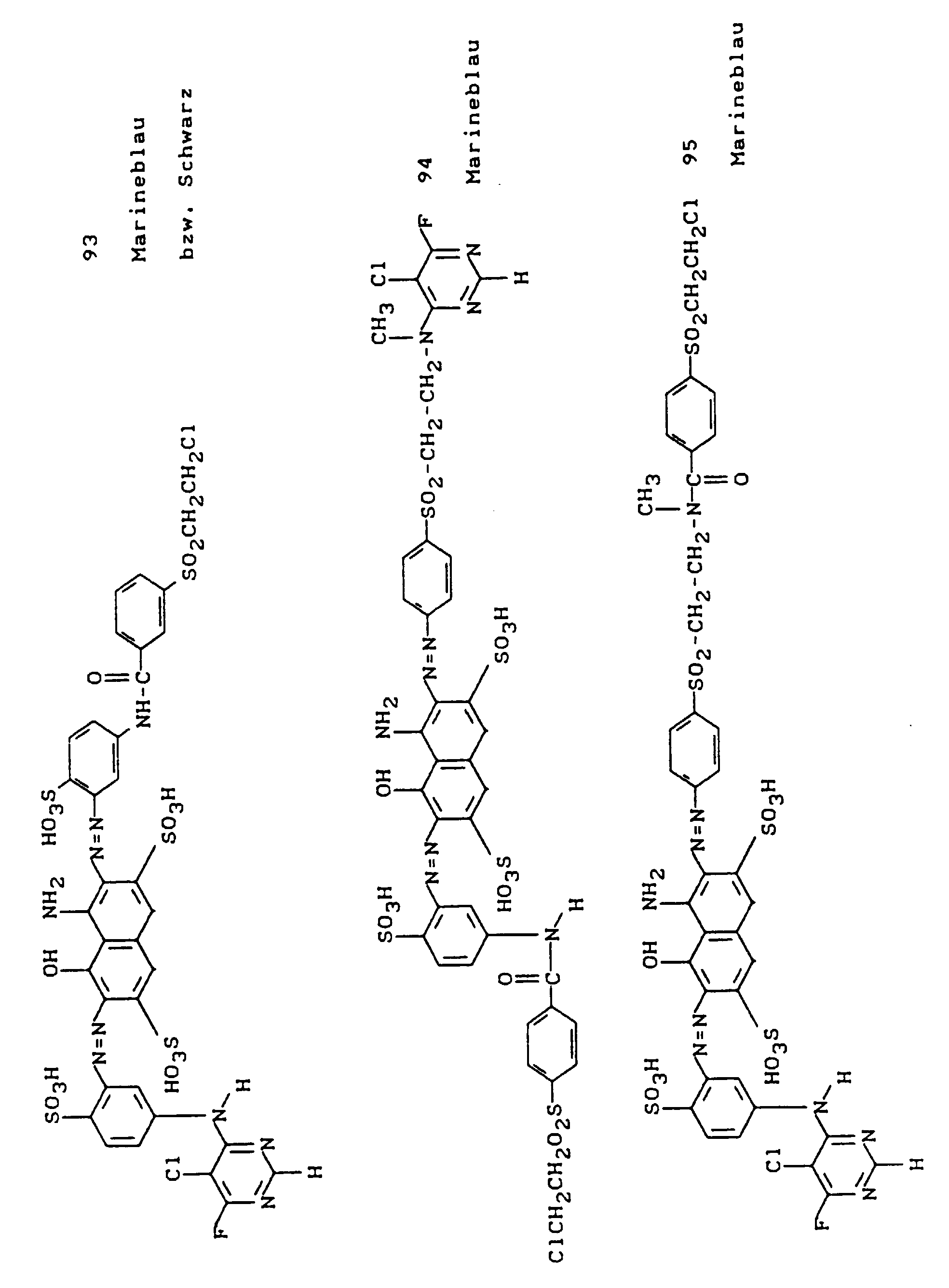

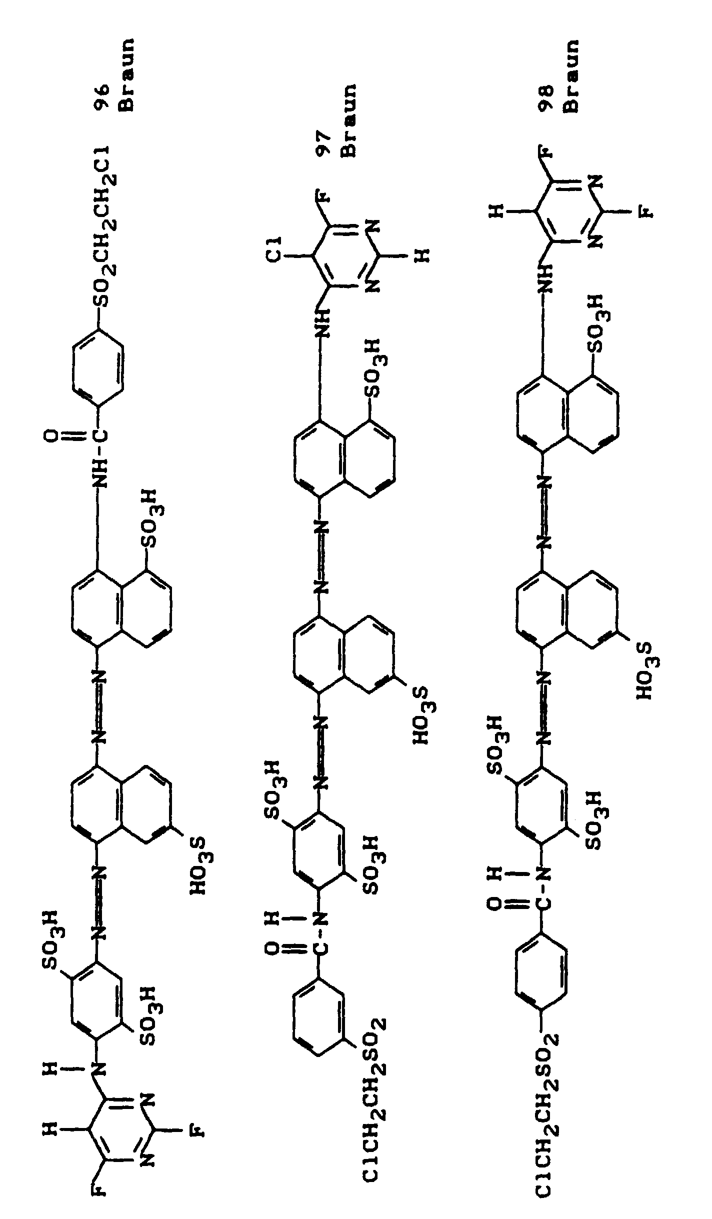

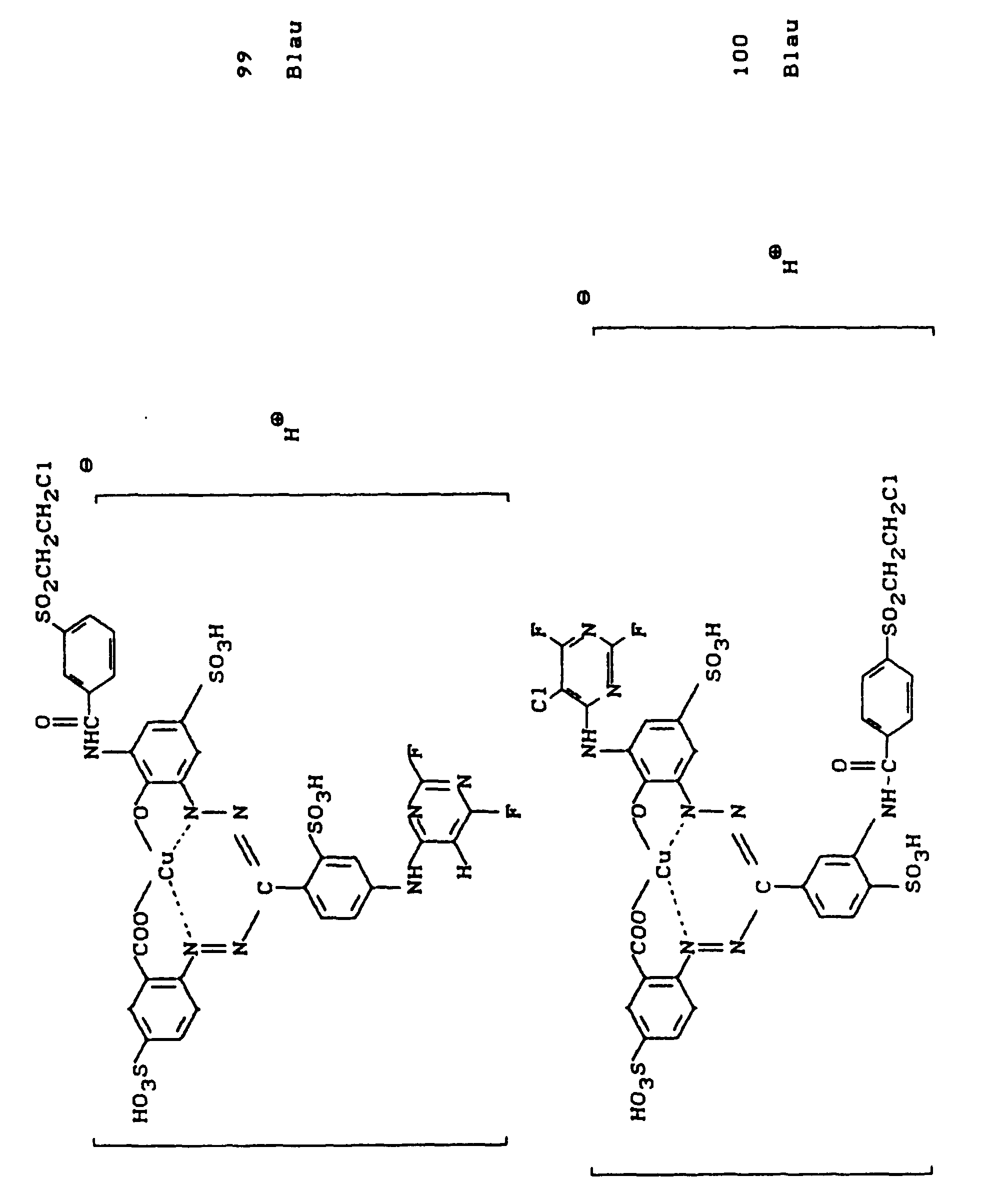

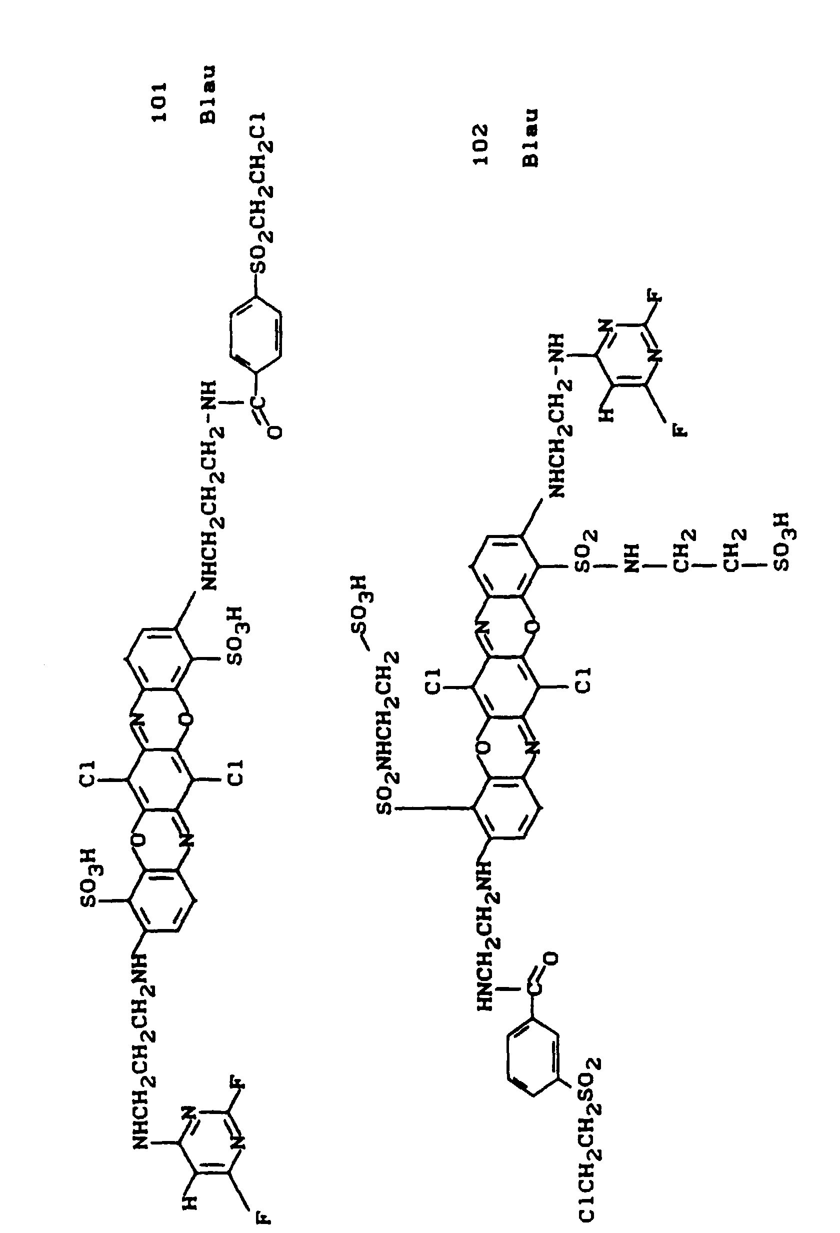

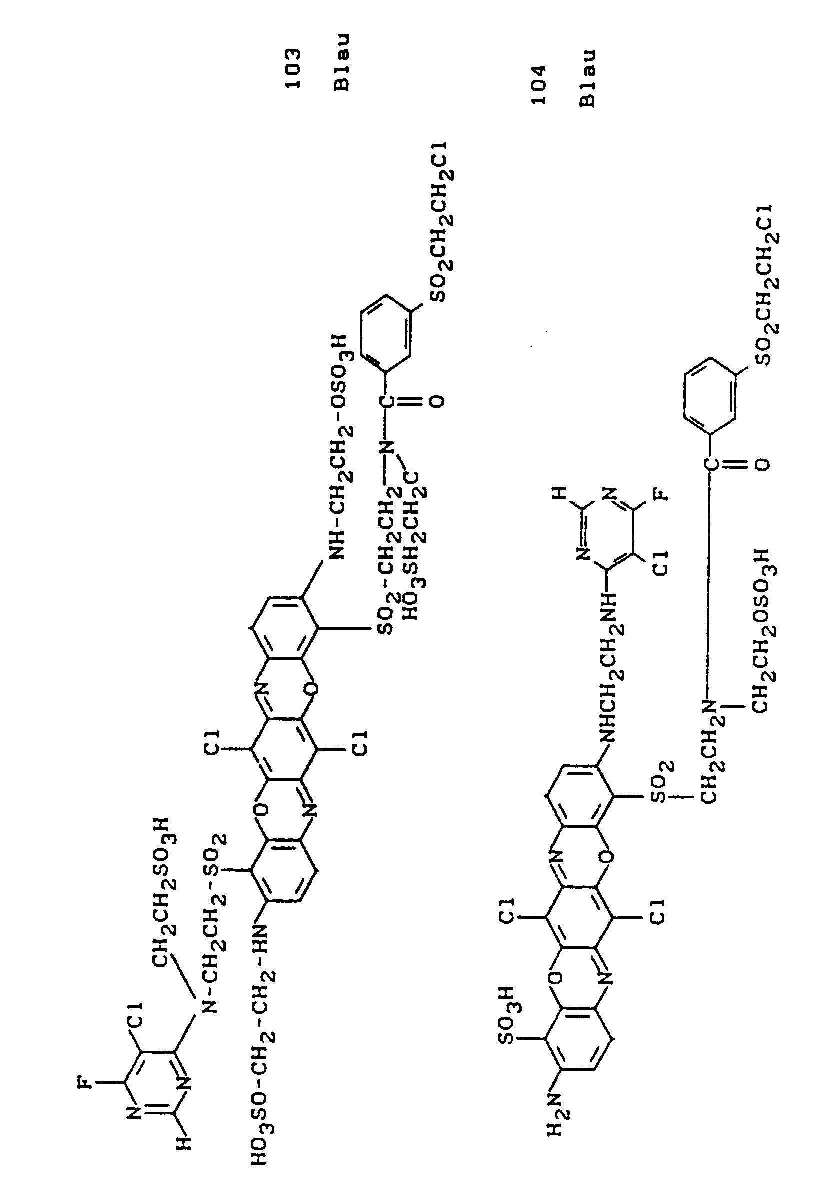

## Patentansprüche

1. Reaktivfarbstoffe der Formel 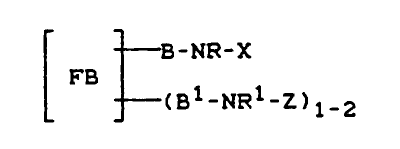 mit 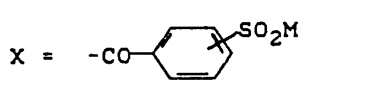
FB = der Rest eines Farbstoffes insbesondere der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe,
B, B¹ = gleich oder verschieden, direkte Bindung oder Brückenglied an ein Ring C-Atom eines aromatisch-carbocyclischen oder an ein Ring-C- oder -N-Atom eines aromatisch-heterocyclischen Ringes in FB,
M = CH=CH₂ oder CH₂CH₂-V, worin
V = OH oder alkalisch eliminierbarer Rest,
Z = 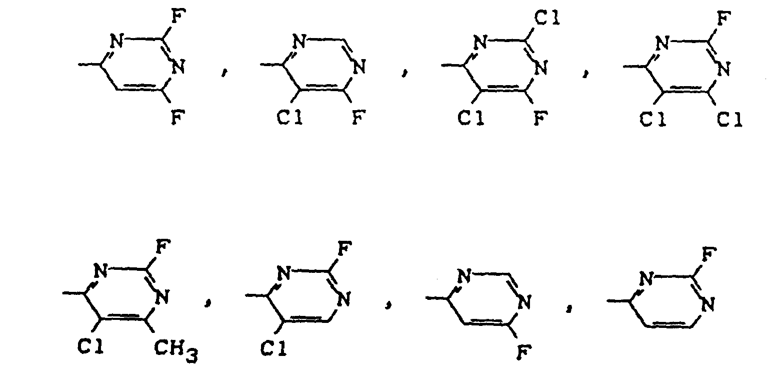 oder 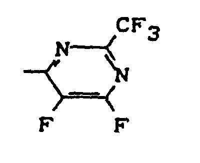 steht.
und
R, R¹ = unabhängig voneinander H, gegebenenfalls substituiertes C₁-C₆-Alkyl.

2. Farbstoffe des Anspruchs 1 worin B und B¹ eine einfache Bindung sind und
X =

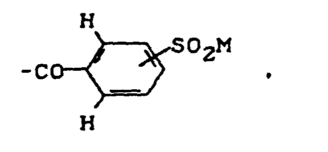

3. Farbstoffe des Anspruchs 1 der Formel 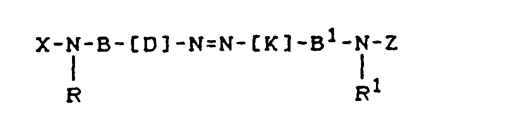 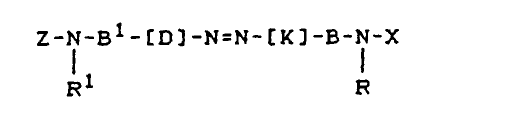 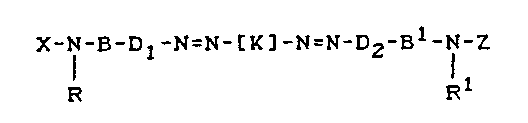 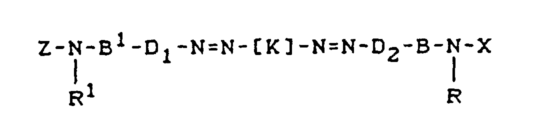 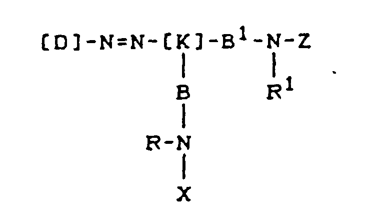 worin -X für 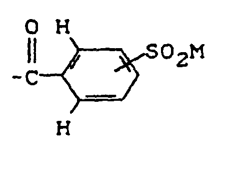 steht und
D, D₁, D₂ = unabhängig voneinander Rest einer Diazokomponente der Benzol- oder Naphthalinreihe,
K = Rest einer Kupplungskomponente der Benzol-, Naphthalin-, Acetessigsäurearylid- oder heterocyclischen Reihe und in den Formeln (1d) und (1e) = Rest einer zweifach kuppelnden Kupplungskomponente und worin
M, B und B¹ die in Anspruch 1 angegebene Bedeutung haben.

4. Farbstoffe gemäß wenigstens einem der vorhergehenden Ansprüche, dadurch gekennzeichnet, daß
M = CH=CH₂, CH₂CH₂Cl oder CH₂CH₂OSO₃H.

5. Farbstoffe des Anspruchs 1 der Formeln 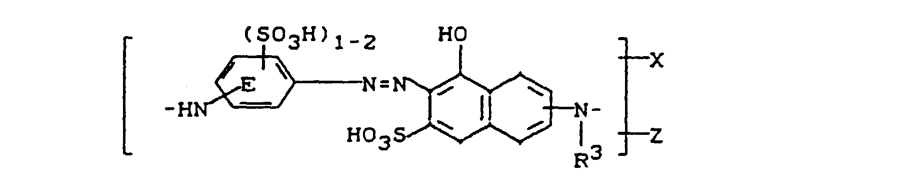 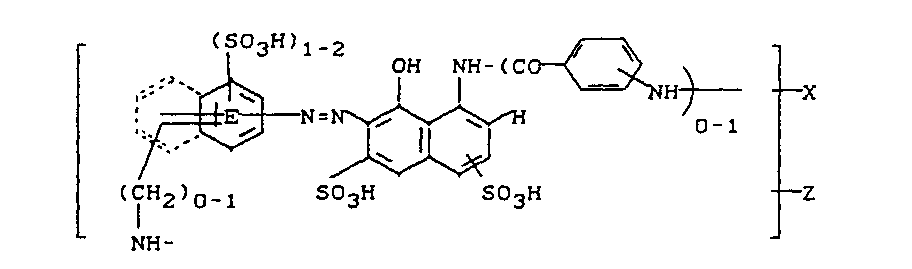 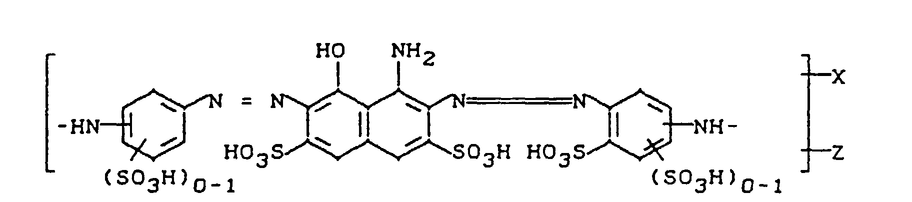 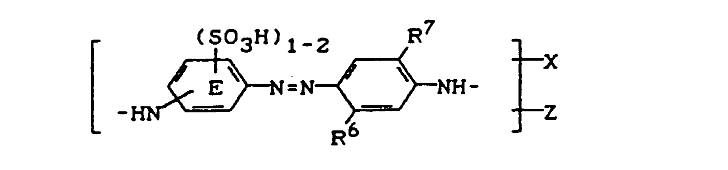 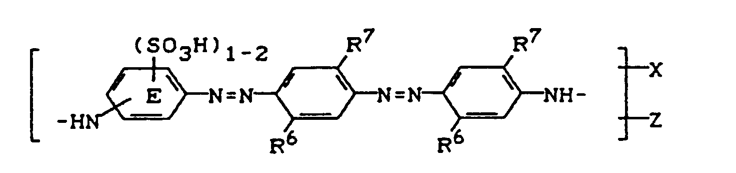 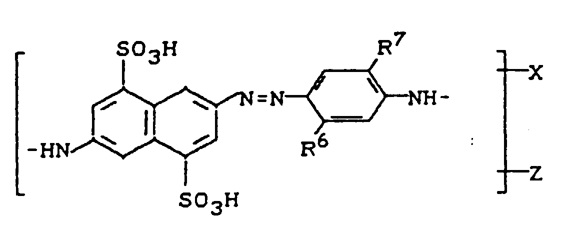 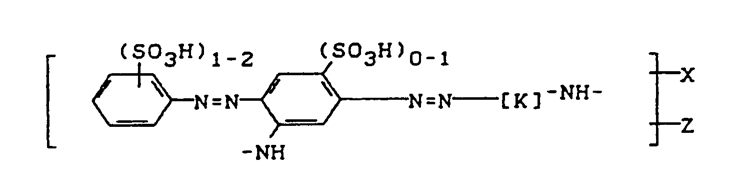 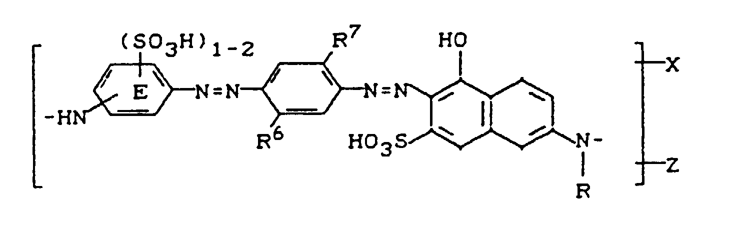 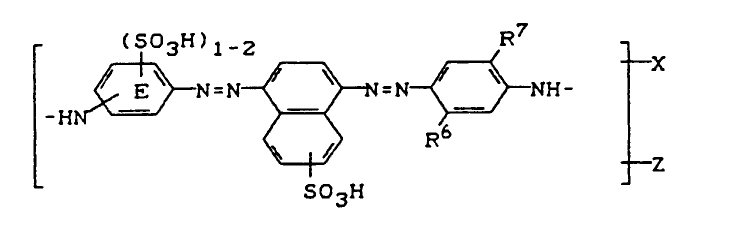 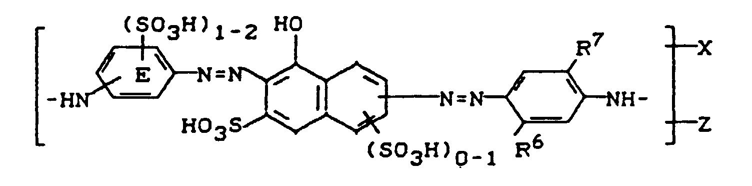 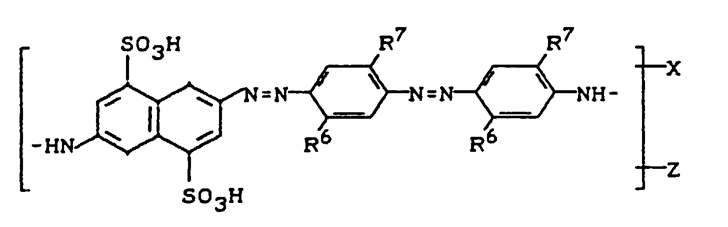 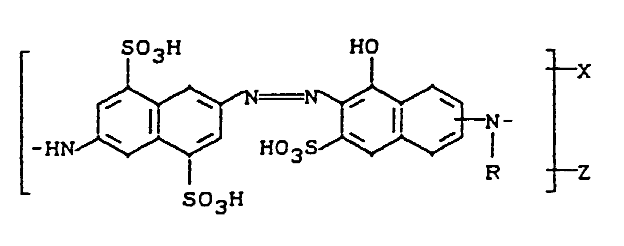 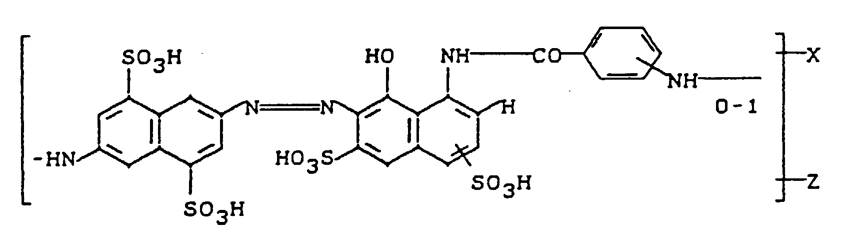 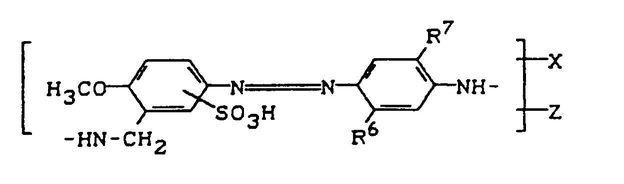 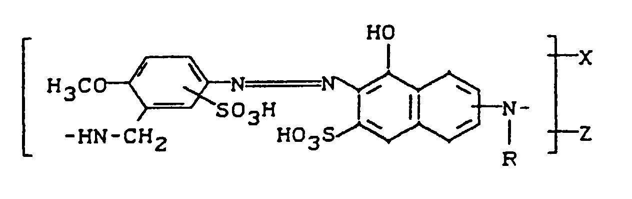 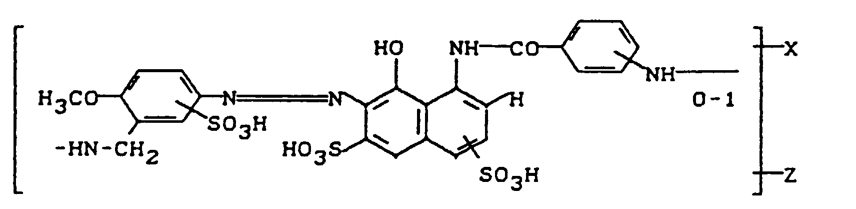 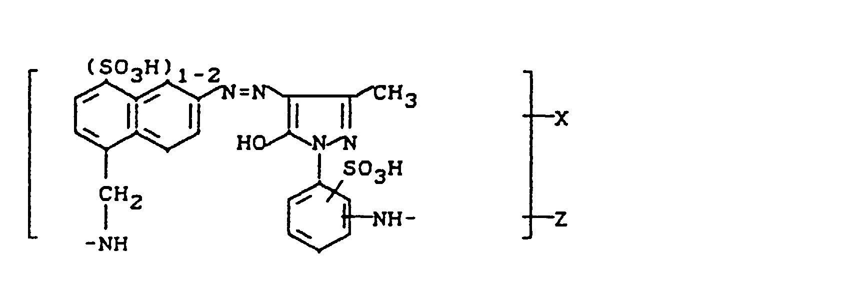 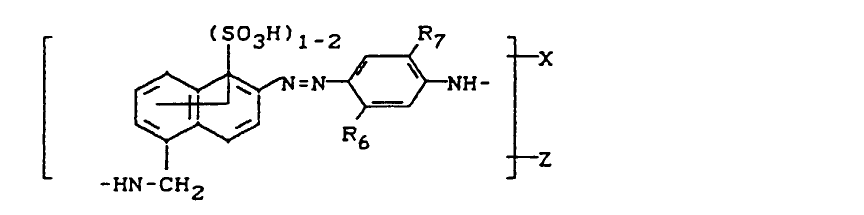 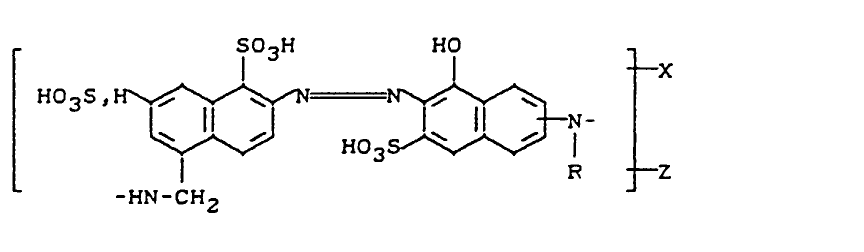 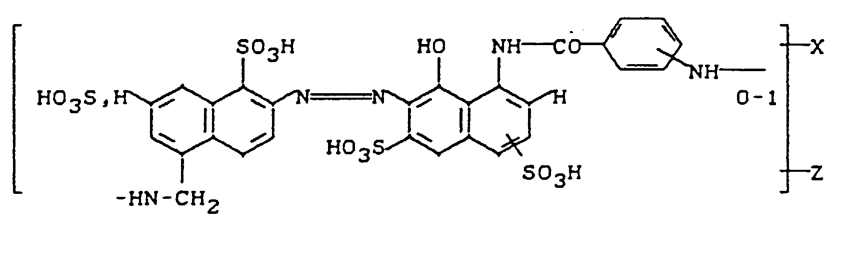 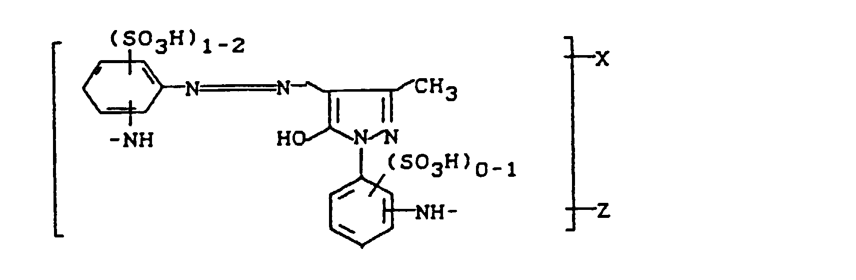 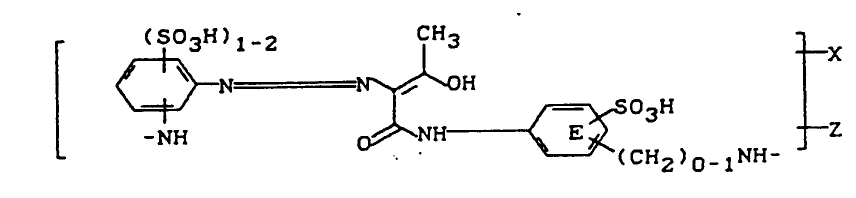 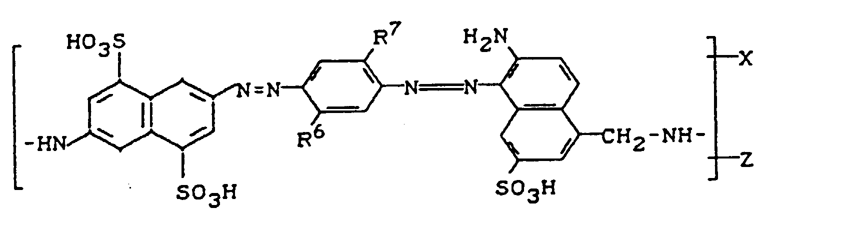 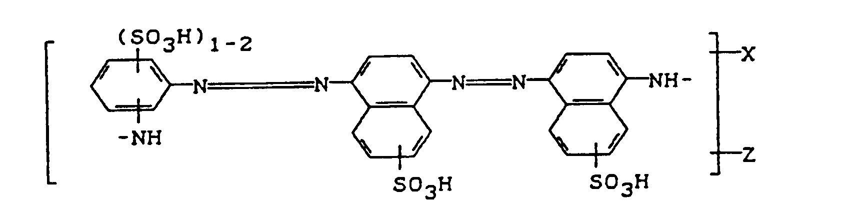 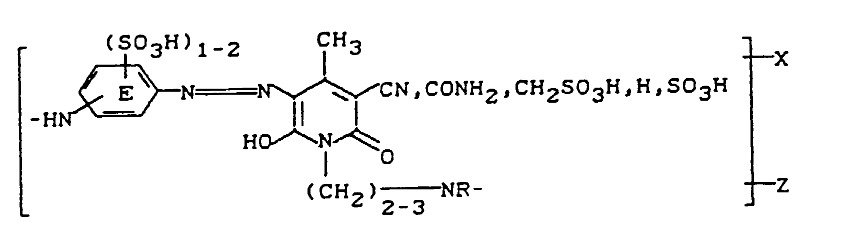 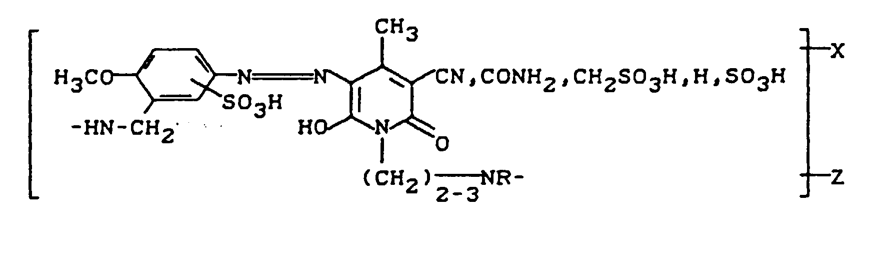 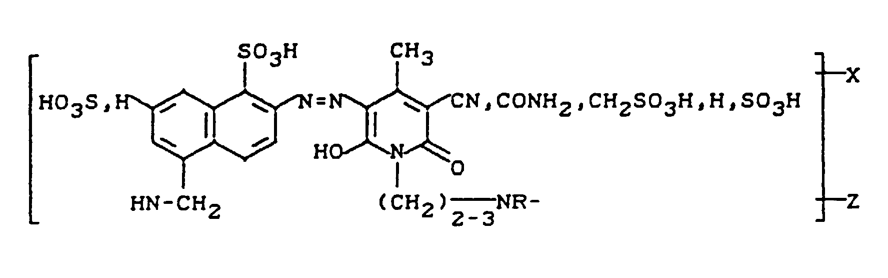 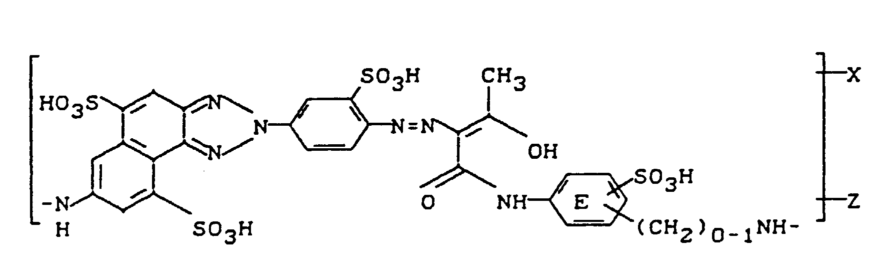 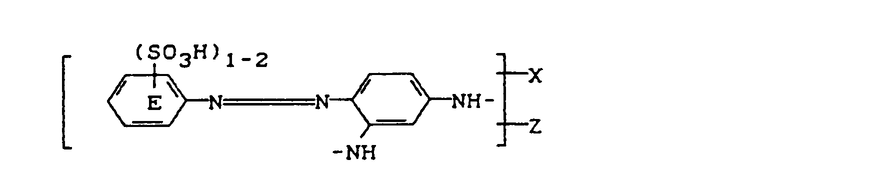 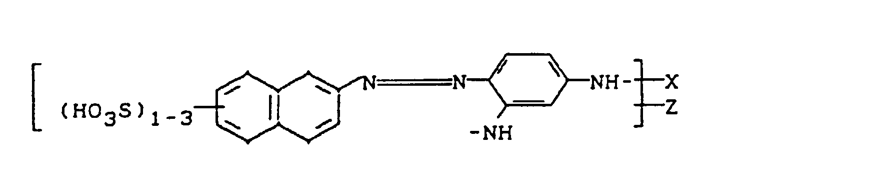 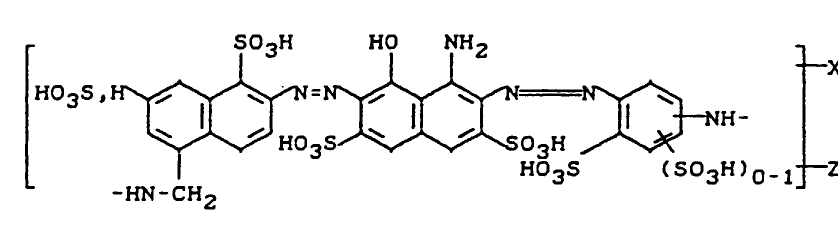 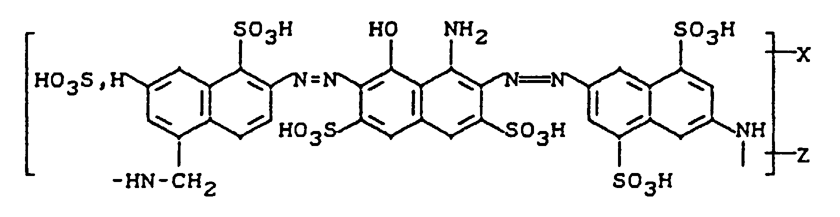 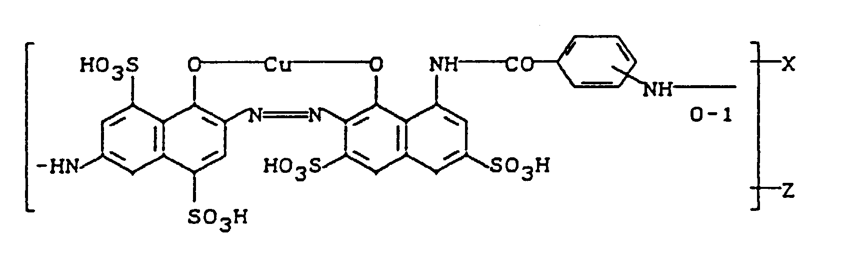 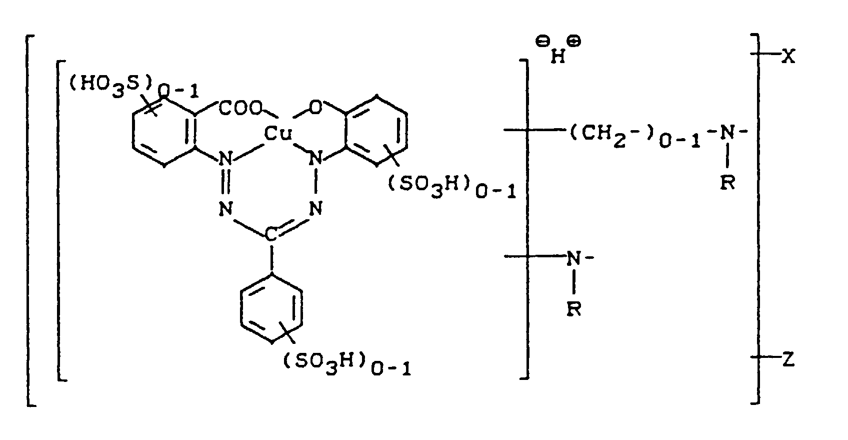 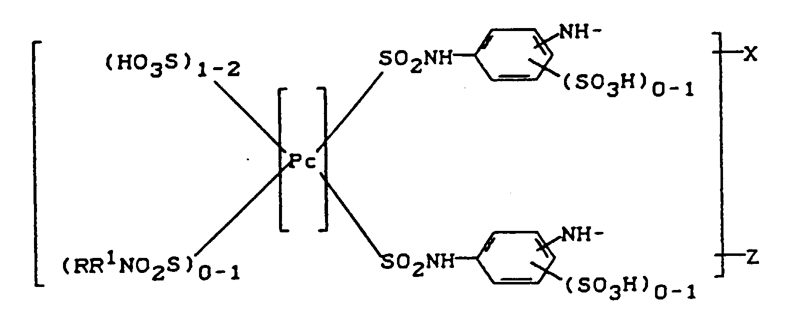 worin Pc für einen Cu- oder Ni-Phthalocyaninrest steht und die Gesamtzahl der Substituenten am Pc-Gerüst maximal 4 beträgt, 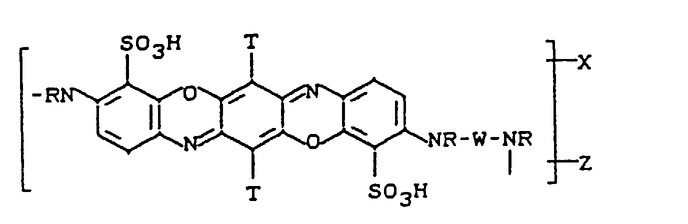 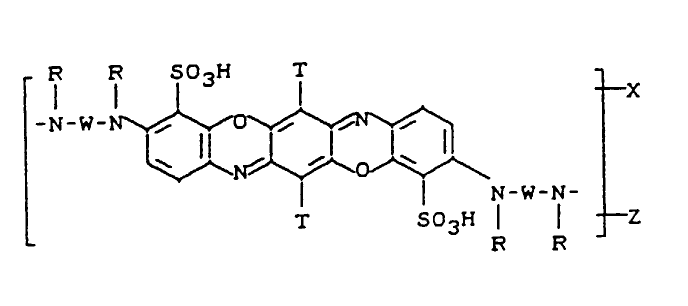 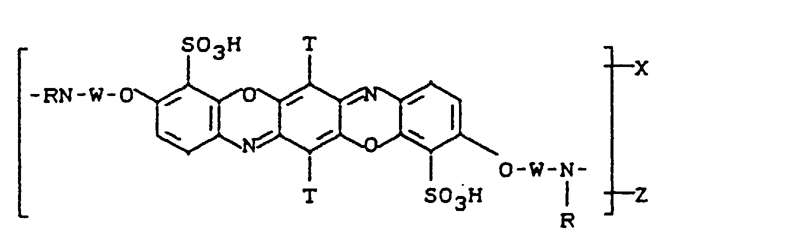 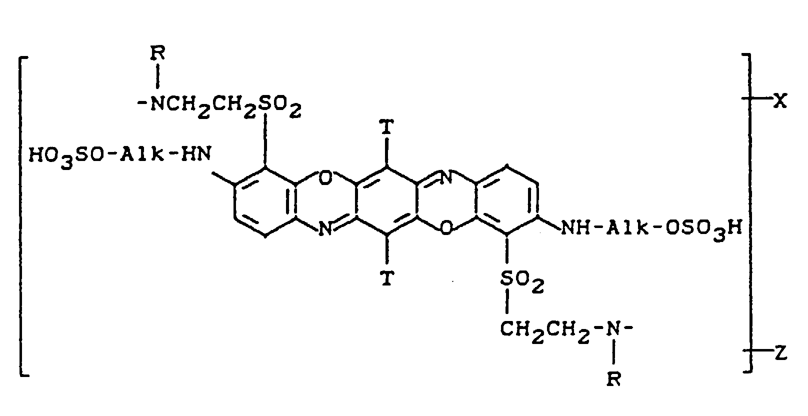 wobei
T = Cl, Br, OCH₃,
R, R³ = H, CH₃ oder C₂H₅
R⁶ = H, C₁-C₄-Alkyl, C₁-C₄-Alkoxy, Acylamino, C₁-C₄-Alkylsulfonylamino, Aminocarbonylamino, gegebenenfalls substituiertes Phenylcarbonylamino, Cl, Br,
R⁷ = H, C₁-C₄-Alkyl, C₁-C₄-Alkoxy, OH, SO₃H,
W = aliphatisches Brückenglied
K = kommt die Bedeutung wie in Anspruch 3,
X = die Bedeutung in Anspruch 2 mit M = CH=CH₂ oder CH₂CH₂Cl, und
Z die Bedeutung wie in Anspruch 4 zu,
Alk = gegebenenfalls durch Heteroatome oder Heteroatome wie NR, O oder S enthaltende Gruppierungen unterbrochenes, geradkettiges oder verzweigtes C₁-C₆-Alkylen und wobei Benzolringe E gegebenenfalls weitersubstituiert sind.

6. Farbstoffe des Anspruchs 1 der Formel 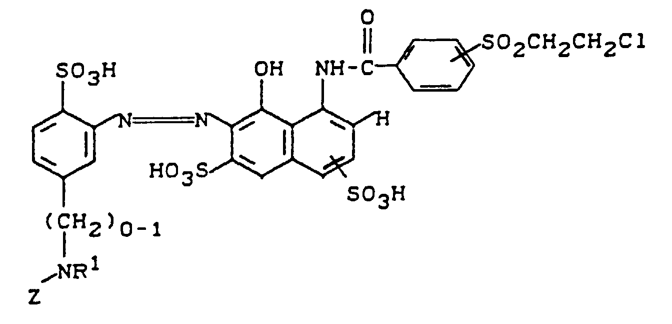 worin
R¹ die in Anspruch 1 und Z die in Anspruch 6 angegebene Bedeutung haben.

7. Verfahren zum Färben und Bedrucken von Hydroxylgruppen- und Amidgruppen-haltigen Materialien, dadurch gekennzeichnet, daß man Farbstoffe der Ansprüche 1-6 verwendet.

## Claims

1. Reactive dyestuffs of the formula 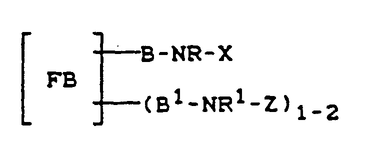 where X is 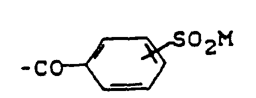
FB is the radical of a dyestuff in particular from the mono- or polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series,
B, B¹ are identical or different and are each a direct bond or a bridging member to a ring C atom of an aromatic-carbocyclic or to a ring C or ring N atom of an aromatic-heterocyclic ring in FB,
M is CH=CH₂ or CH₂CH₂-V, in which
V is OH or a radical which can be eliminated by alkali,
Z = 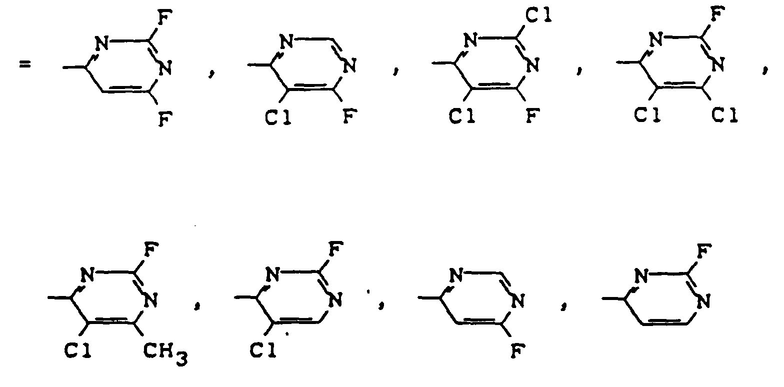 or 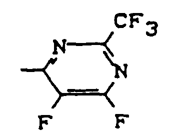 and
R, R¹ are, independently of one another, H, substituted or unsubstituted C₁-C₆-alkyl.

2. Dyestuffs of Claim 1, in which B and B¹ are a single bond and X is

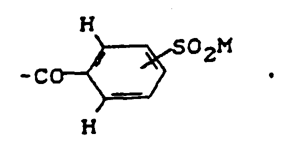

3. Dyestuffs of Claim 1 of the formula 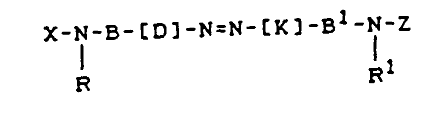 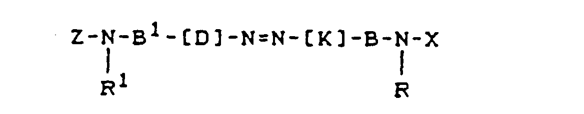 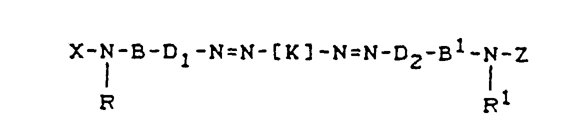 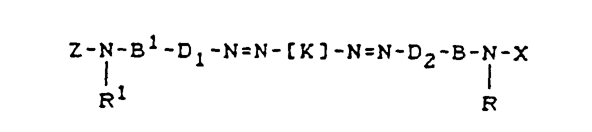 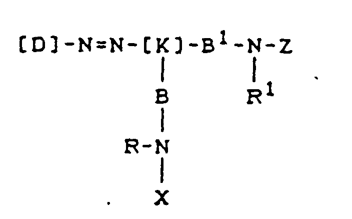 in which -X represents 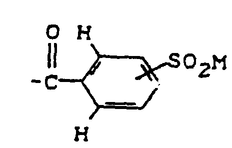 and
D, D₁, D₂ are, independently of one another, the radical of a diazo component from the benzene or naphthalene series,
K is the radical of a coupling component from the benzene, naphthalene, acetoacetarylide or heterocyclic series and in formulae (1d) and (1e) is the radical of a dicoupling coupling component, and in which
M, B and B¹ have the meaning given in Claim 1.

4. Dyestuffs according to at least one of the preceding claims, characterised in that
M is CH=CH₂, CH₂CH₂Cl CH₂OSO₃H .

5. Dyestuffs of Claim 1 of the formulae 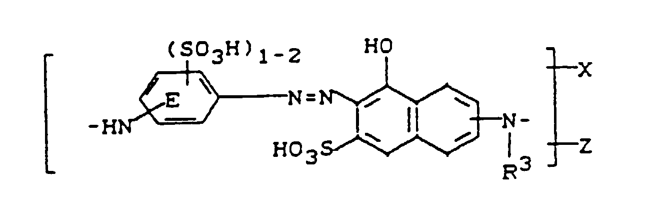 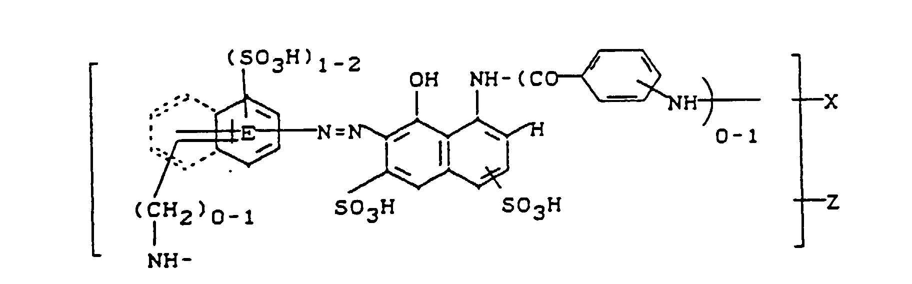 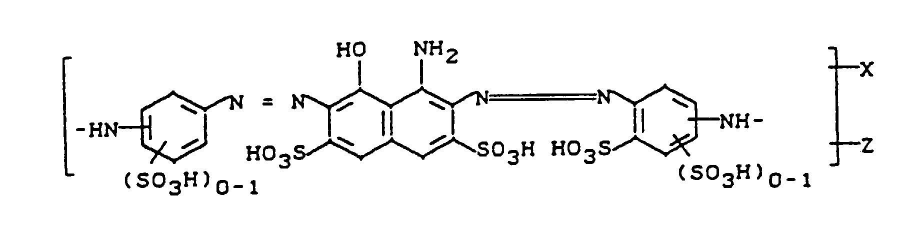 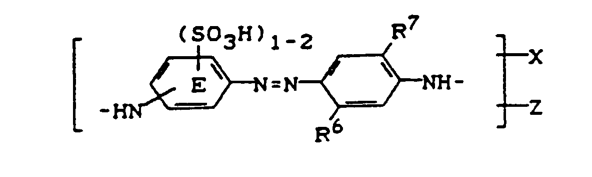 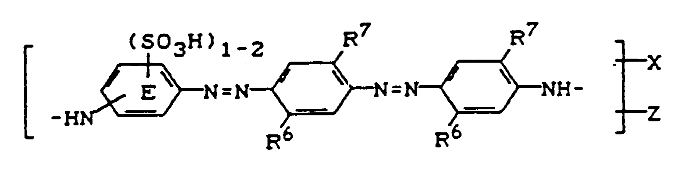 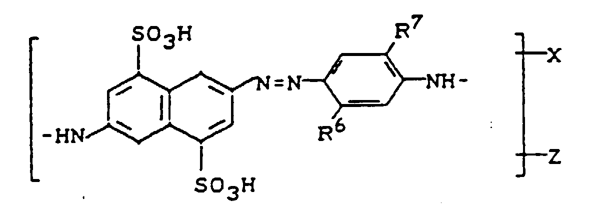 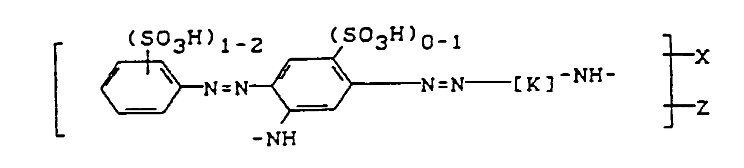 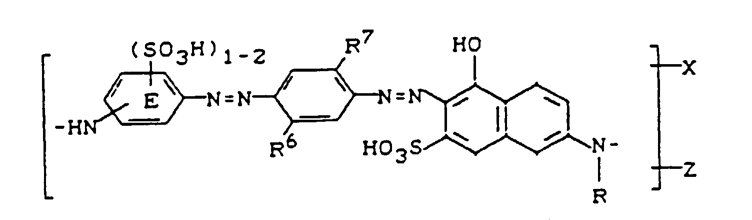 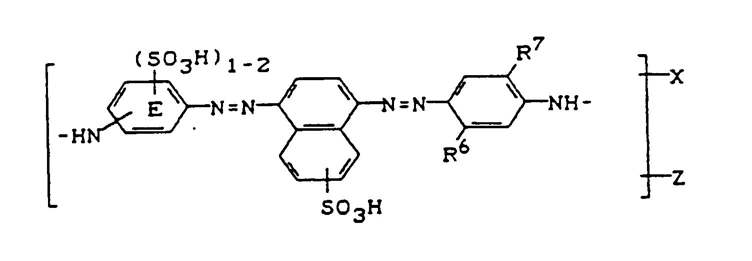 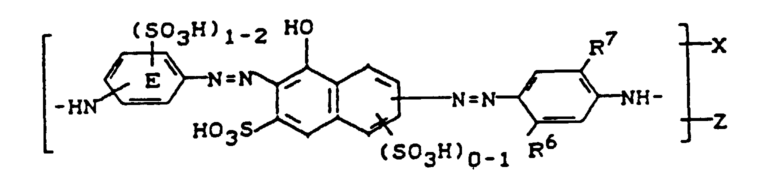 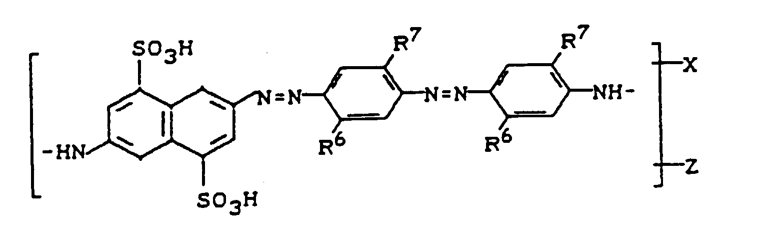 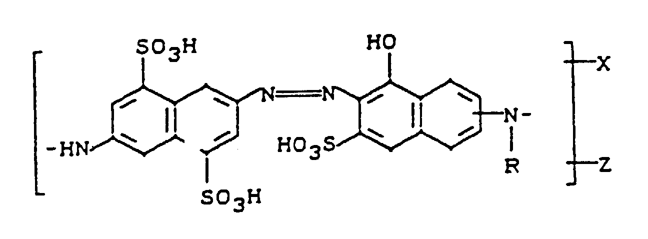 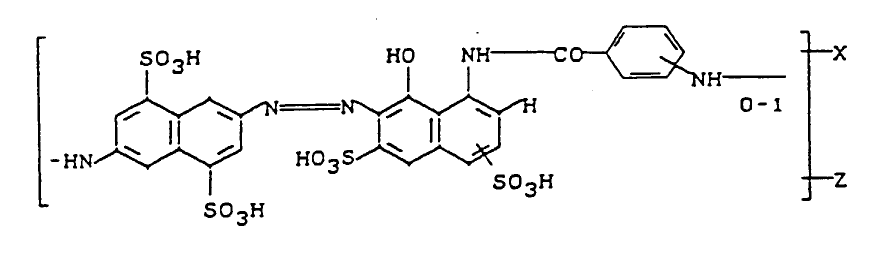 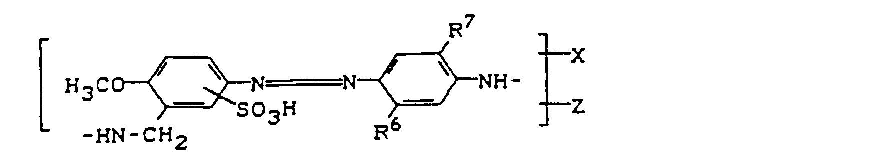 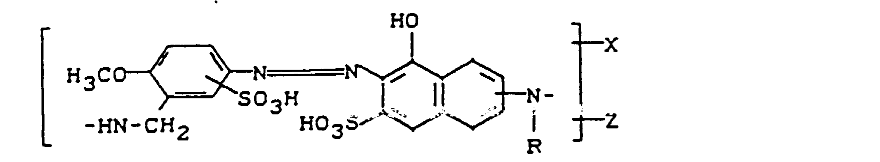 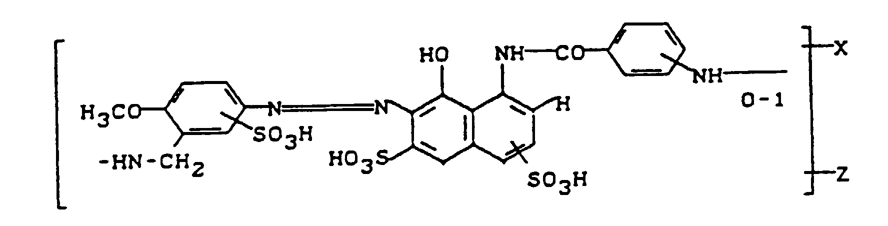 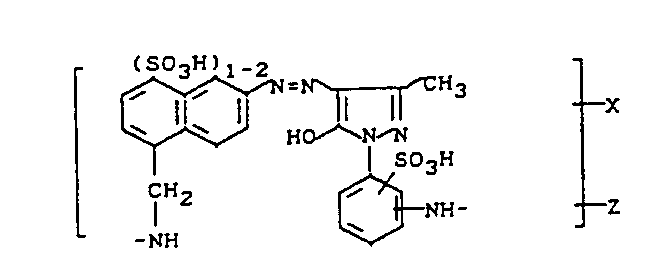 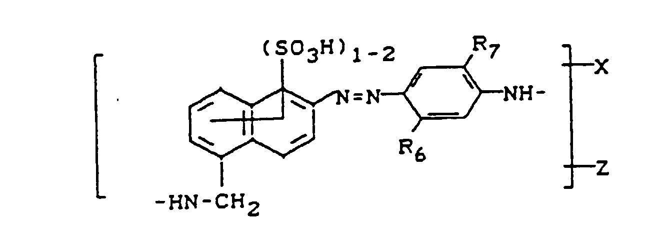 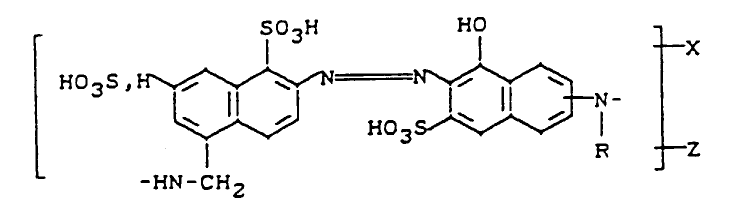 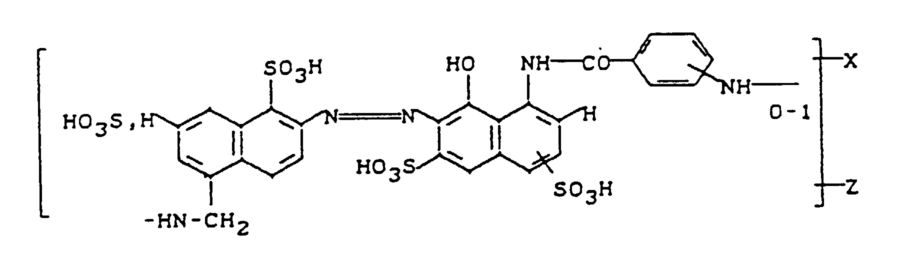 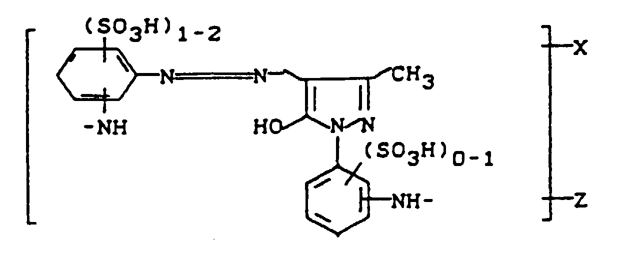 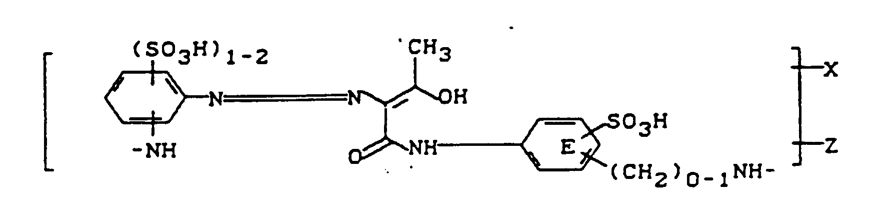 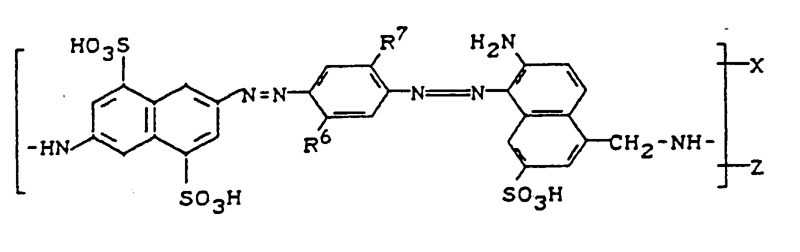 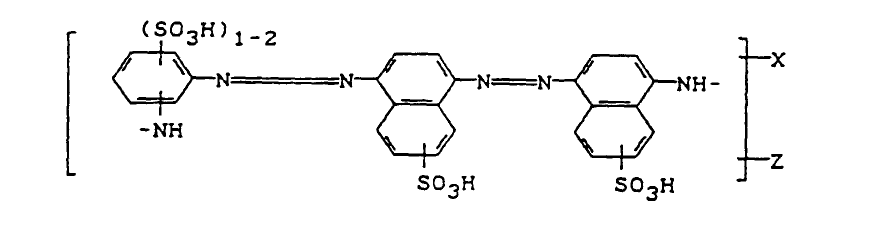 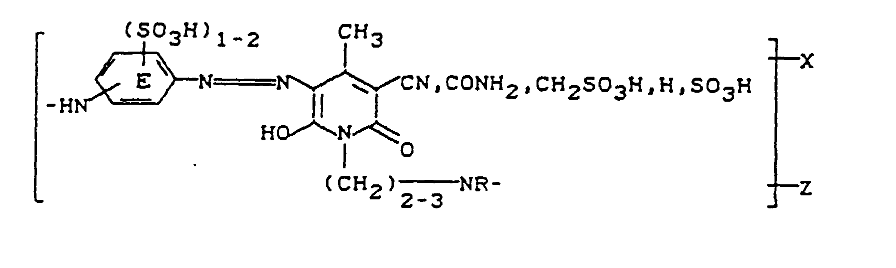 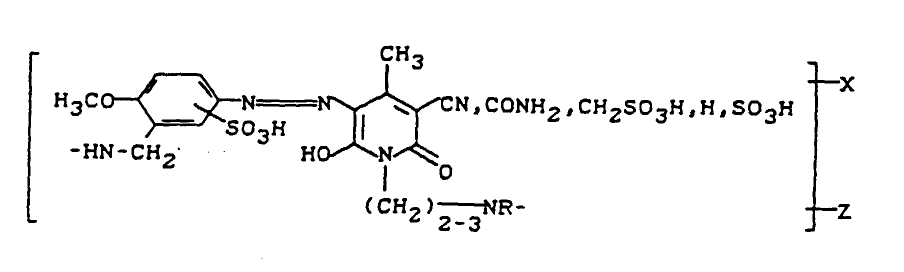 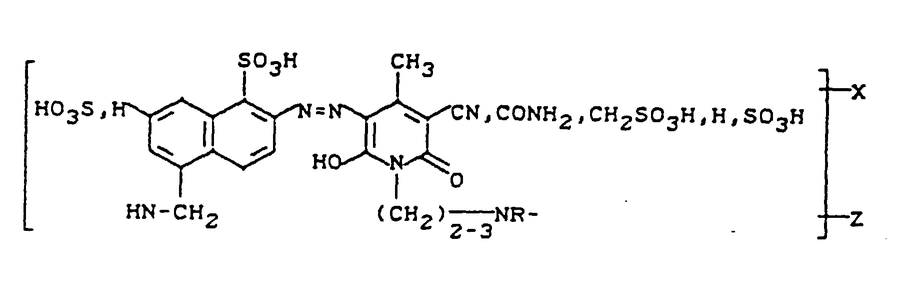 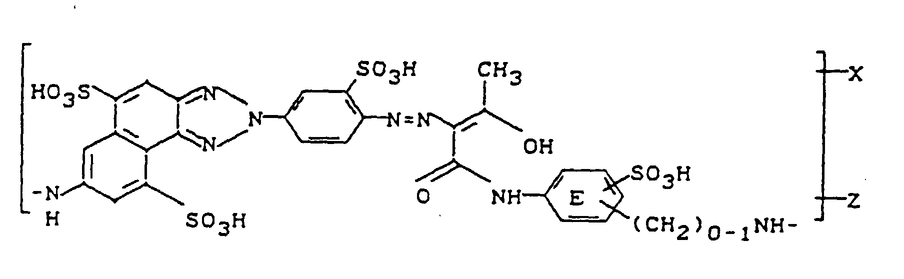 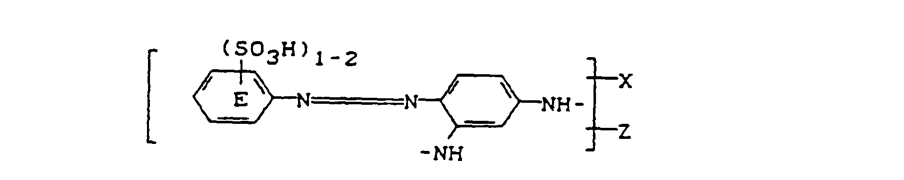 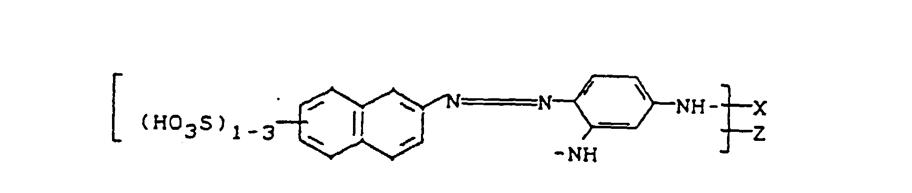 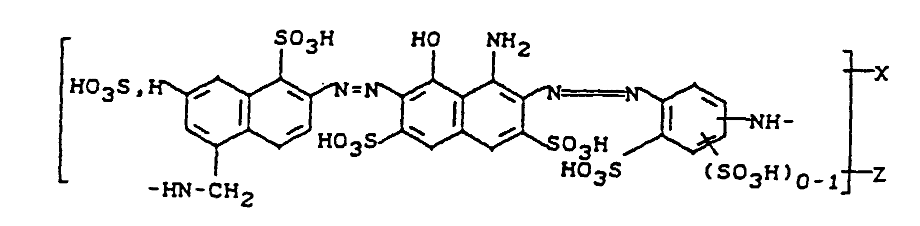 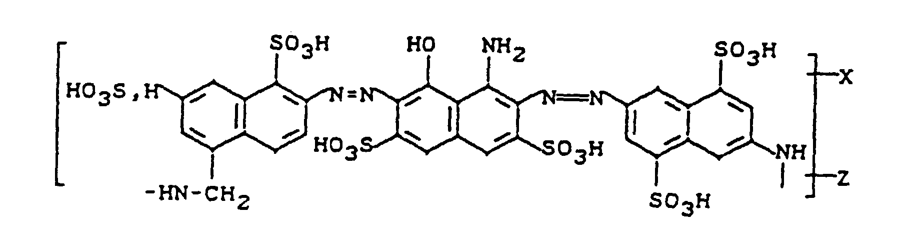 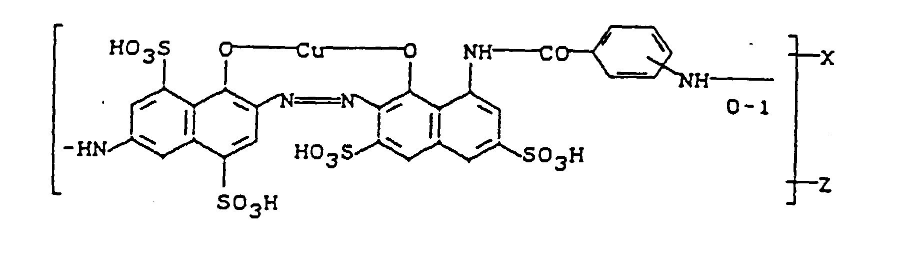 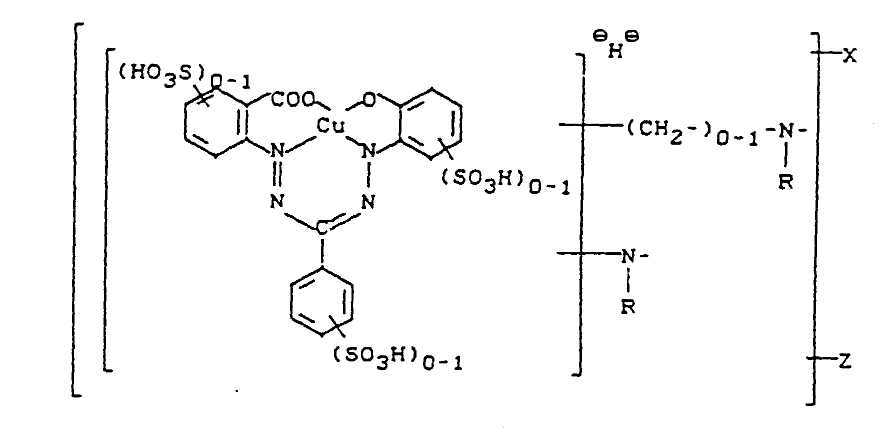 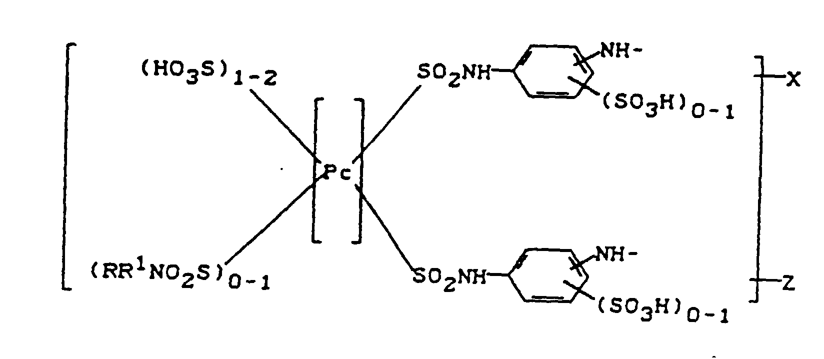 in which Pc represents a Cu phthalocyanine or Ni phthalocyanine radical and the total number of substituents on the Pc skeleton is at most 4, 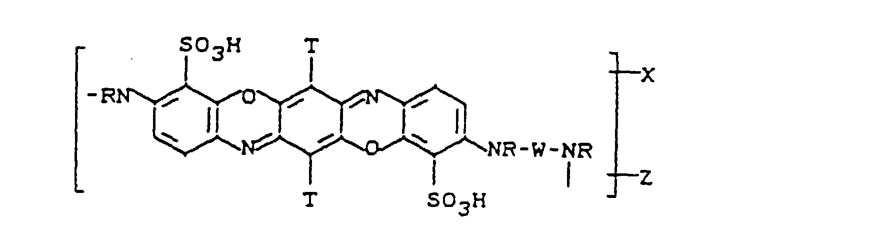 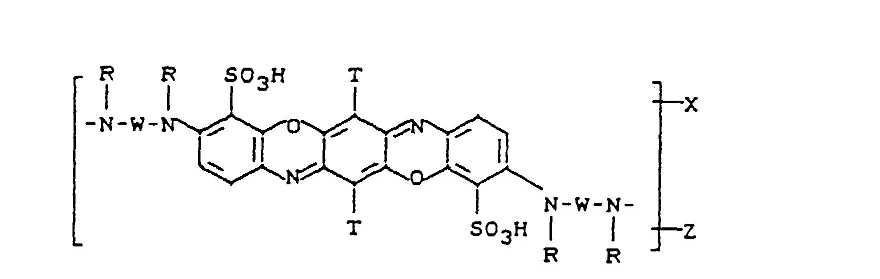 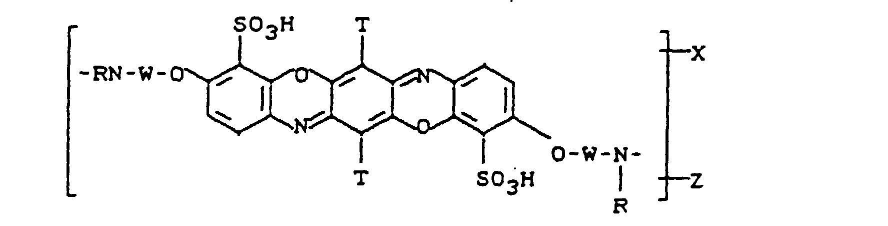 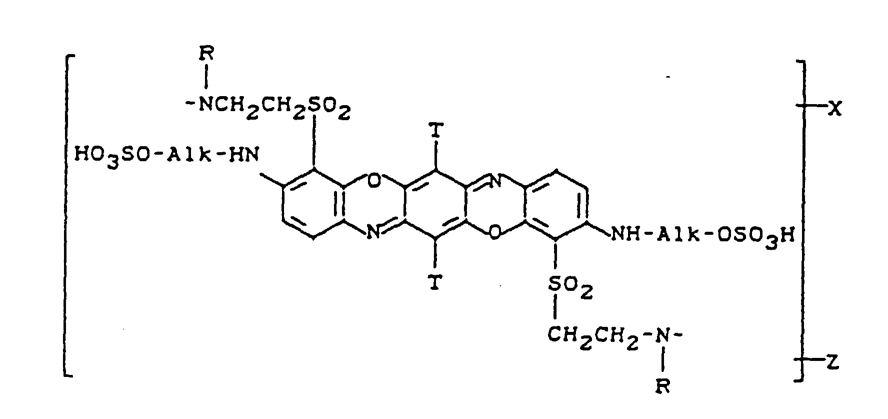 in which
T is Cl, Br, OCH₃,
R, R³ are H, CH₃ or C₂H₅
R⁶ is H, C₁-C₄-alkyl, C₁-C₄-alkoxy, acylamino, C₁-C₄-alkylsulphonylamino, aminocarbonylamino, substituted or unsubstituted phenylcarbonylamino, Cl, Br,
R⁷ is H, C₁-C₄-alkyl, C₁-C₄-alkoxy, OH, SO₃H,
W is an aliphatic bridging member
K has the same meaning as in Claim 3,
X has the same meaning as in Claim 2, M being CH=CH₂ or CH₂CH₂Cl, and
Z has the same meaning as in Claim 1,
Alk is straight-chain or branched C₁-C₆-alkylene, which may be interrupted by hetero atoms or groupings containing hetero atoms such as NR, O or S, and the benzene rings E may be further substituted.

6. Dyestuffs of Claim 1 of the formula 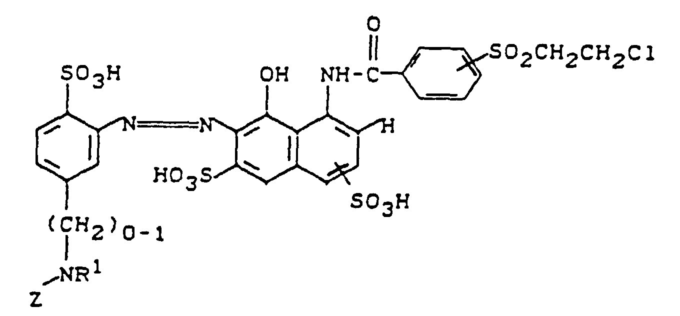 in which
R¹ has the meaning given in Claim 1 and Z has the meaning given in Claim 1.

7. Process for the dyeing and printing of hydroxyl- and amido-containing materials, characterised in that dyestuffs of Claims 1-6 are used.

## Revendications

1. Colorants réactifs de formule : 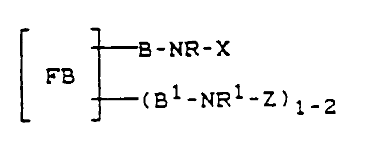 avec X = 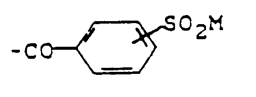
FB = le reste d'un colorant, en particulier de la série des colorants mono- ou polyazoïques, azoïques à complexe métallique, anthraquinone, phtalocyanine, formazane, azométhine, dioxazine, phénazine, stilbène, triphénylméthane, xanthène, thioxanthone, nitroaryle, naphtoquinone, pyrènequinone ou pérylènetétracarbimide,
B, B¹ = identiques ou différents, liaison directe ou élément de pontage au niveau d'un atome de carbone cyclique d'un cycle carbocyclique aromatique ou au niveau d'un atome de carbone ou d'azote cyclique d'un cycle hétérocyclique aromatique dans FB,
M = CH=CH₂ ou CH₂CH₂-V, où
V = OH ou un reste éliminable par voie alcaline,
Z= 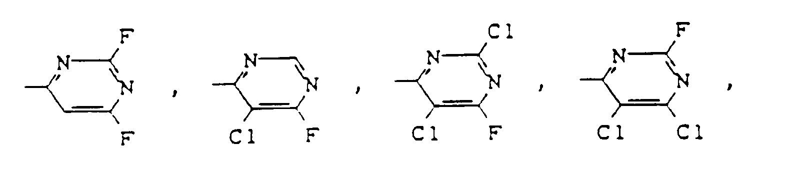 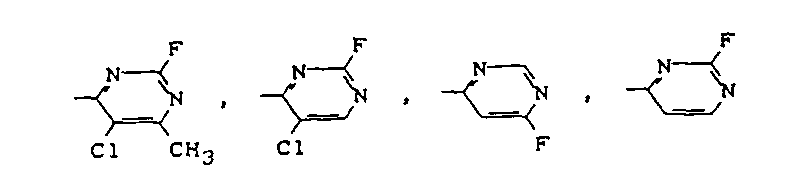 ou 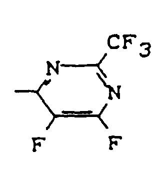 et
R, R¹ = indépendamment l'un de l'autre H, alkyle en C₁-C₆ éventuellement substitué.

2. Colorants selon la revendication 1, où B et B¹ sont une liaison simple et

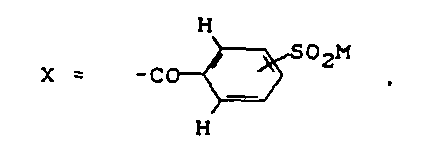

3. Colorants selon la revendication 1 de formule 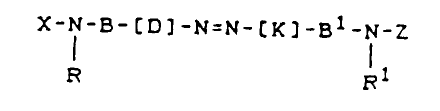 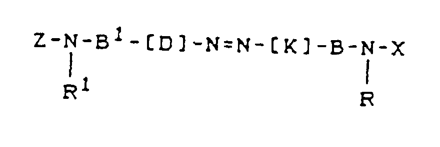 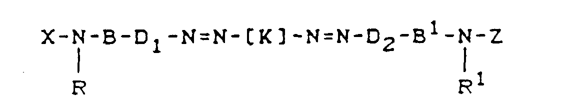 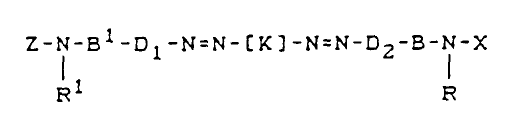 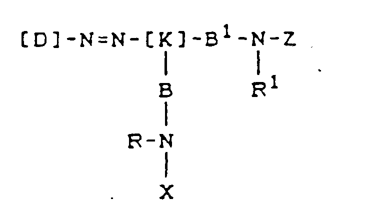 où -X est 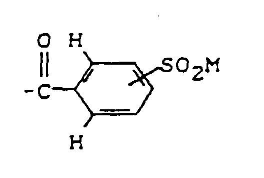 et
D, D₁, D₂ = indépendamment les uns des autres le reste d'un constituant diazoïque de la série du benzène ou du naphtalène,
K = le reste d'un constituant de couplage de la série du benzène, du naphtalène, d'un arylide de l'acide acétoacétique ou de la série hétérocyclique et, dans les formules (1d) et (1e), = le reste d'un constituant de couplage couplant deux fois et où
M, B et B¹ ont la signification indiquée dans la revendication 1.

4. Colorants selon au moins l'une des revendications précédentes, caractérisés en ce que
M = CH=CH₂, CH₂CH₂Cl ou CH₂CH₂OSO₃H.

5. Colorants selon la revendication 1 de formule 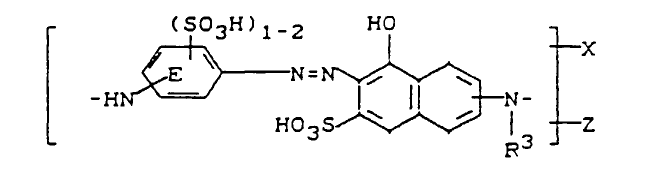 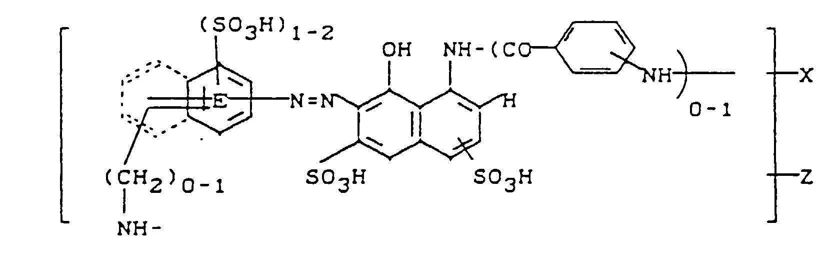 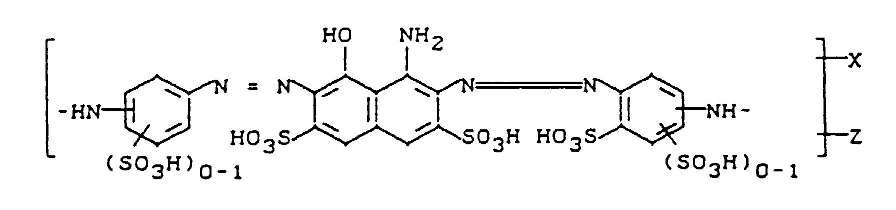 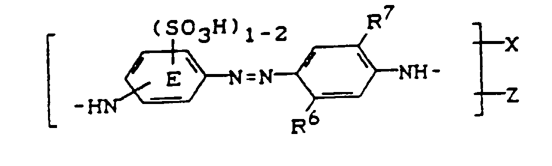 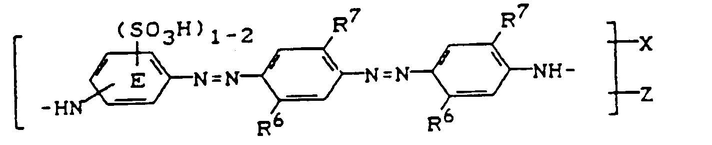 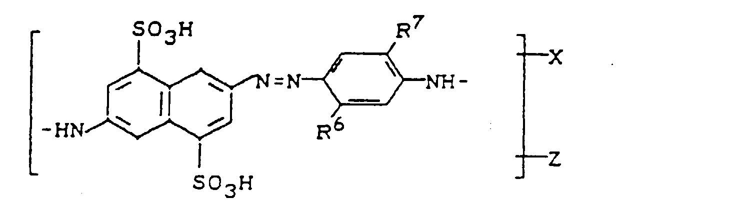 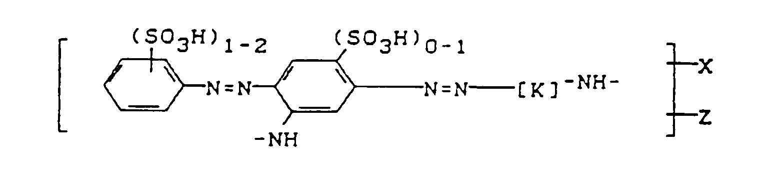 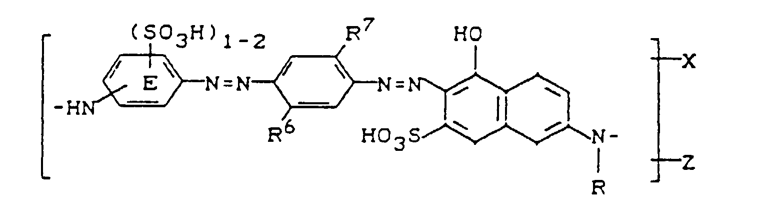 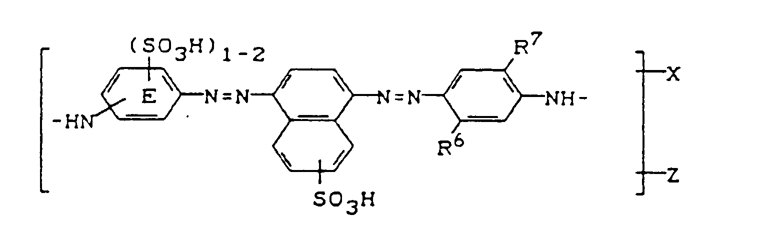 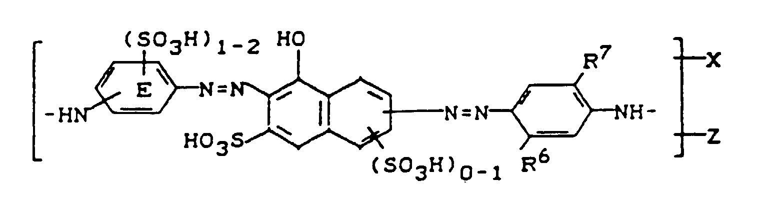 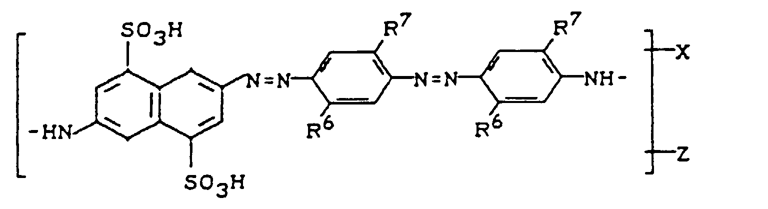 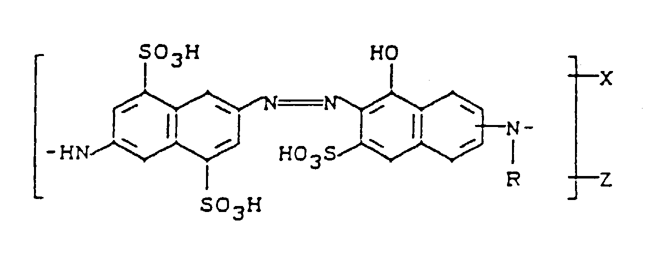 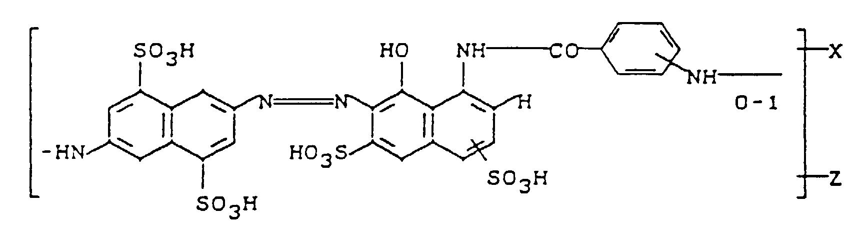 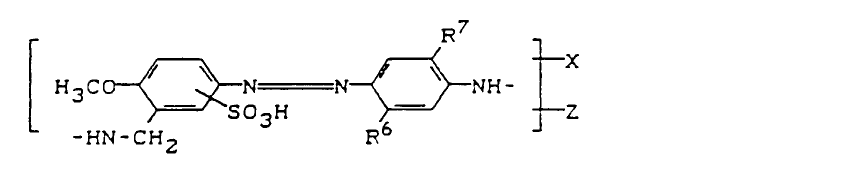 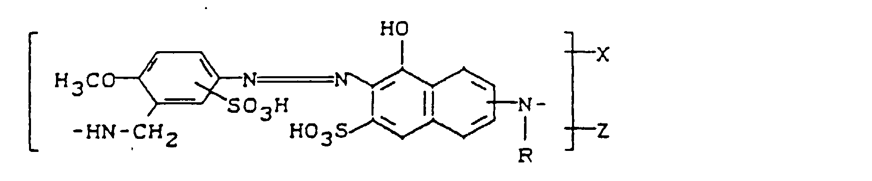 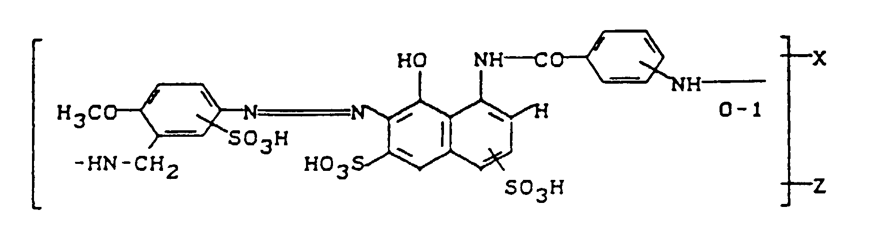 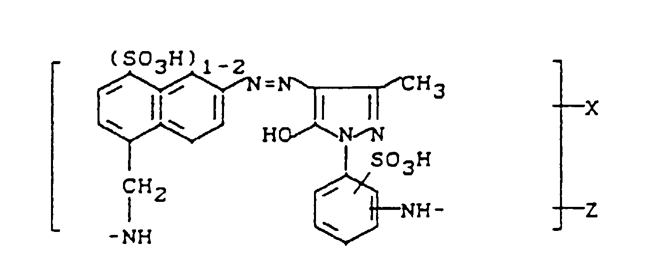 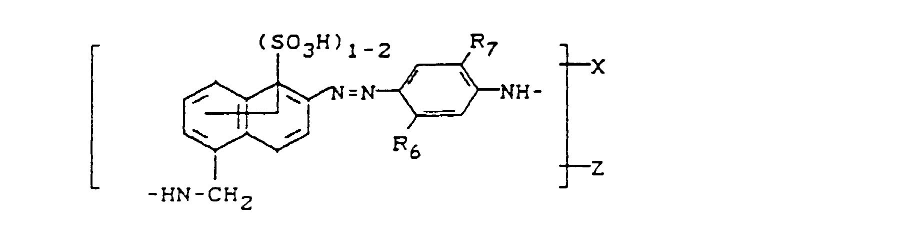 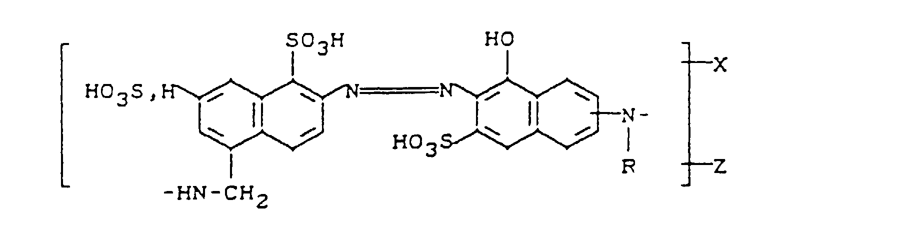 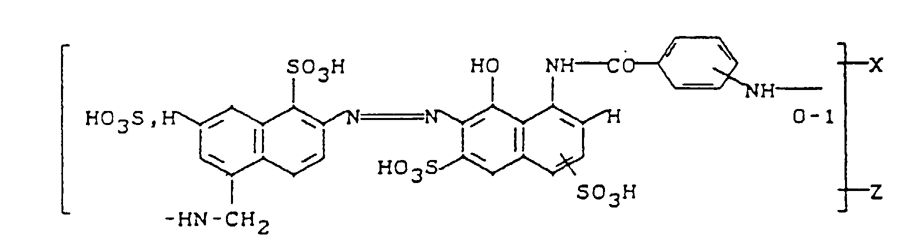 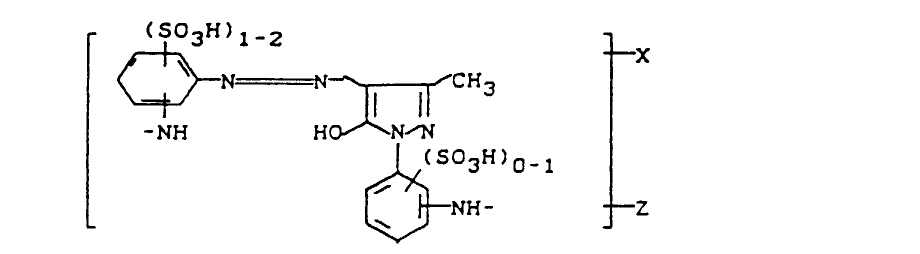 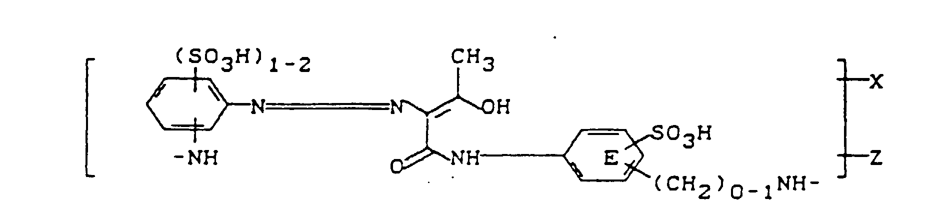 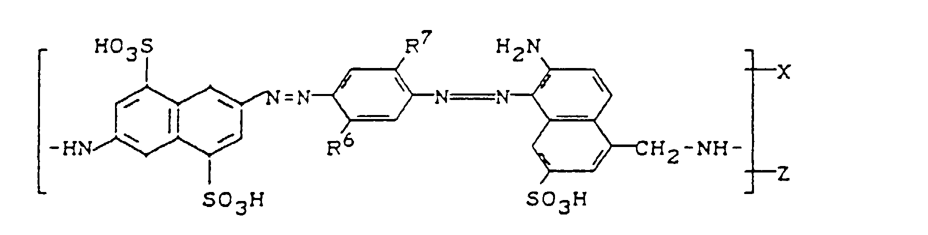 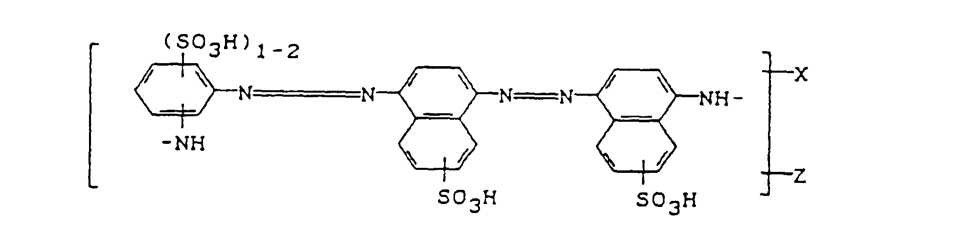 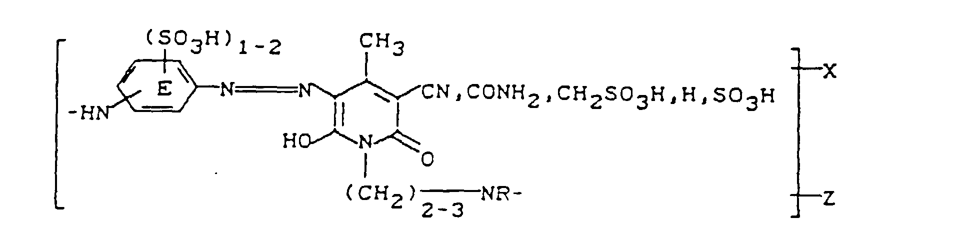 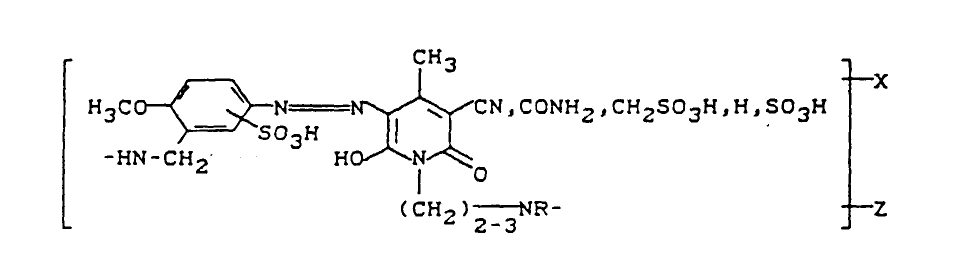 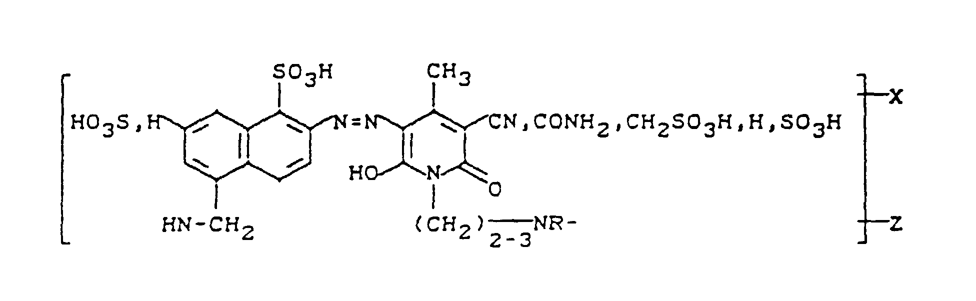 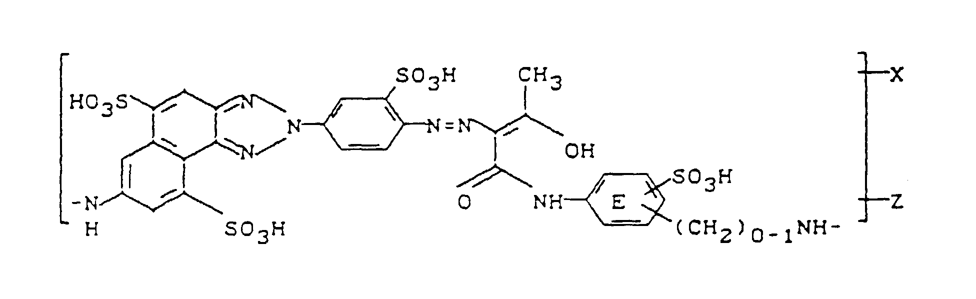 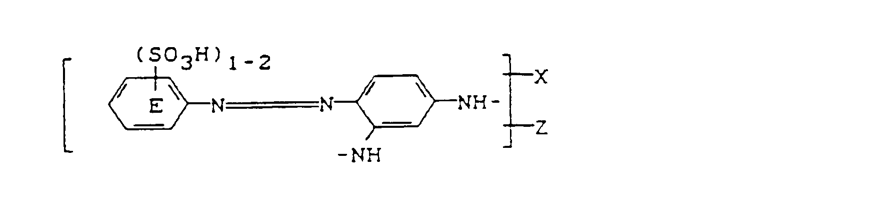 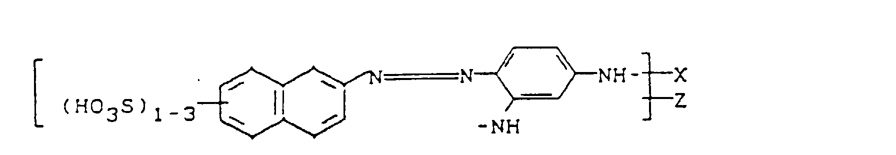 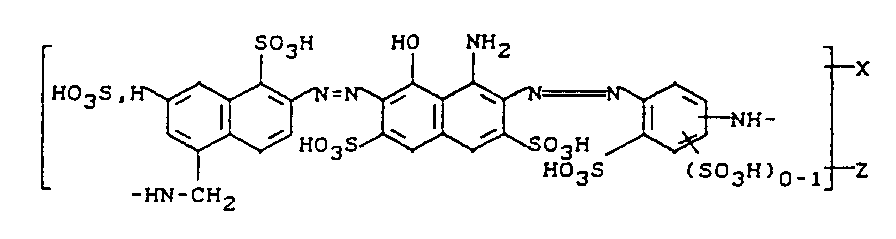 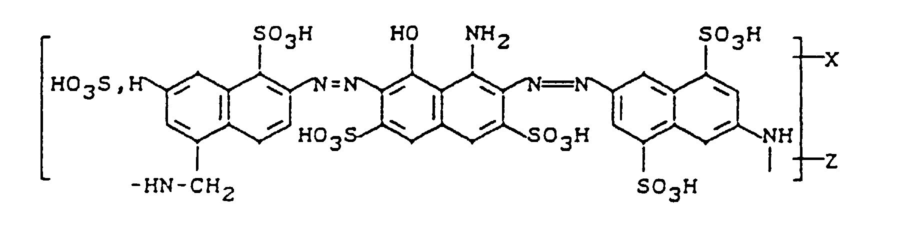 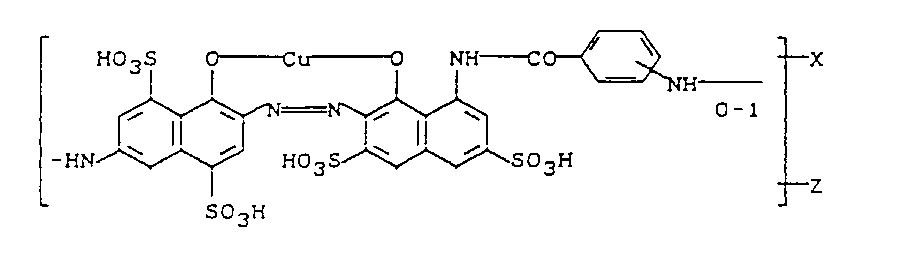 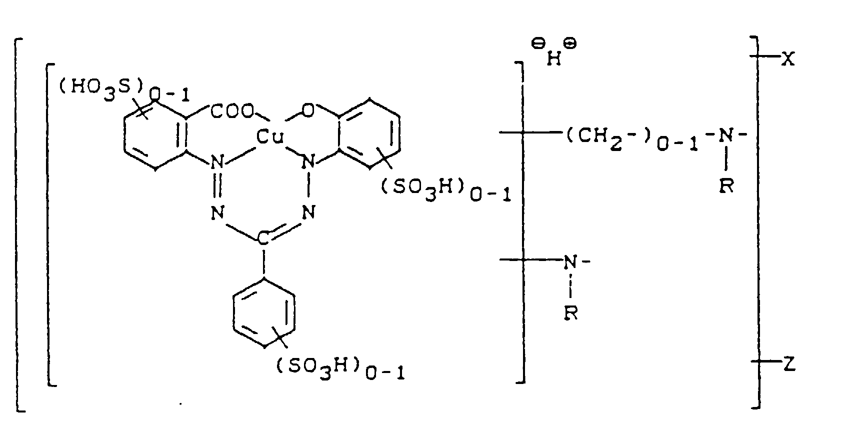 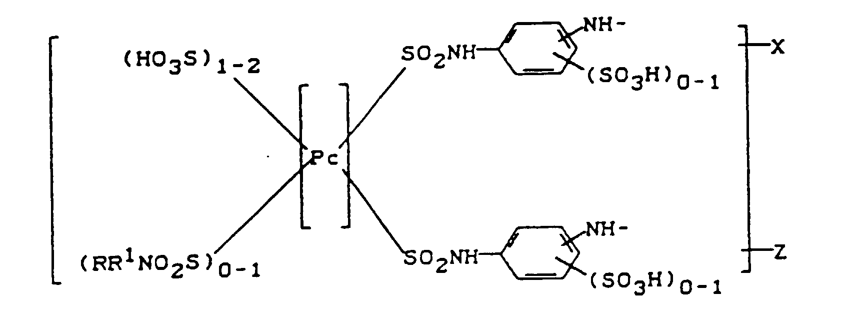 où Pc représente un reste phtalocyanine de Cu ou Ni et le nombre total des substituants sur le squelette de Pc et d'au plus 4, 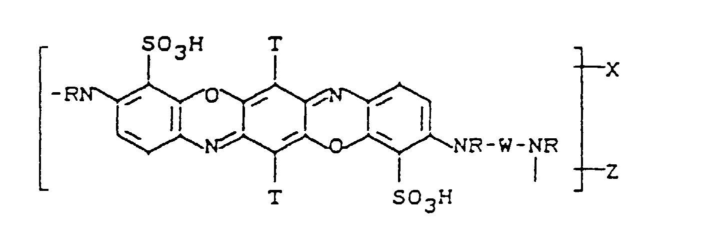 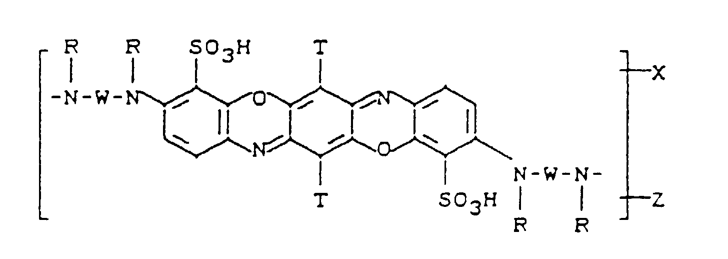 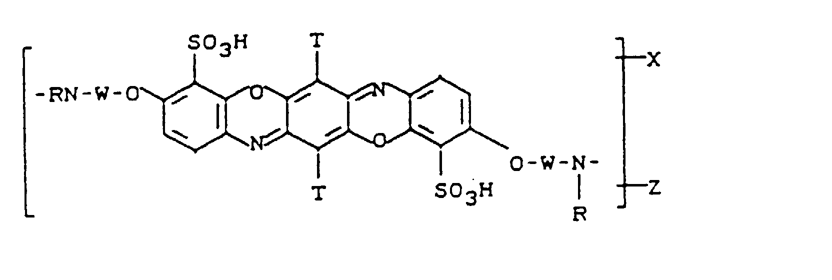 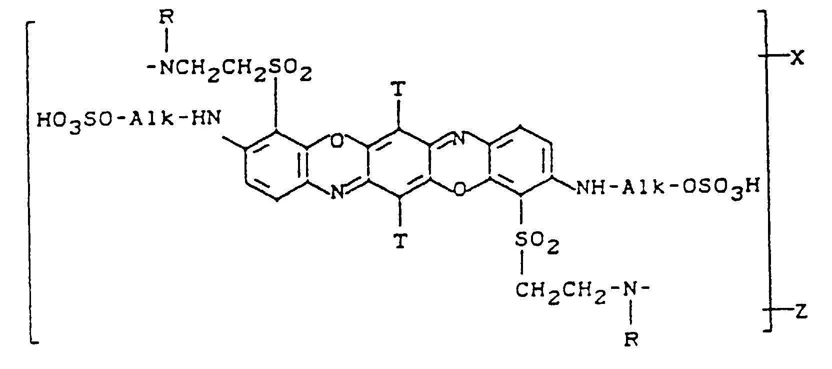 où
T = Cl, Br, OCH₃,
R, R³ = H, CH₃ ou C₂H₅
R⁶= H, alkyle en C₁-C₄, alcoxy en C₁-C₄, acylamino, alkylsulfonylamino en C₁-C₄, aminocarbonylamino, phénylcarbonylamino éventuellement substitué, Cl, Br,
R⁷ = H, alkyle en C₁-C₄, alcoxy en C₁-C₄, OH, SO₃H,
W = élément de pontage aliphatique
K = même signification que dans la revendication 3,
X = la signification de la revendication 2 avec M = CH=CH₂ ou CH₂CH₂Cl, et
Z = la même signification que dans la revendication 4,
Alk = alkylène en C₁-C₆ linéaire ou ramifié, éventuellement interrompu par des hétéroatomes ou des groupements contenant des hétéroatomes tels que NR, O ou S et où les cycles benzéniques E sont éventuellement substitués encore.

6. Colorants selon la revendication 1 de formule 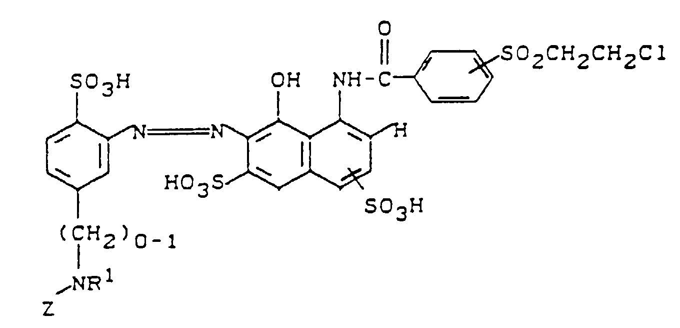 où
R¹ a la signification indiquée dans la revendication 1 et Z a la signification indiquée dans la revendication 6.

7. Procédé de teinture et d'impression de matières contenant des groupes hydroxyles et des groupes amides, caractérisé en ce que l'on utilise des colorants selon les revendications 1 à 6.
